# FASCICULE DE BREVET EUROPEEN

(11) **EP 3 164 264 B1**
(45) Date de publication et mention de la délivrance du brevet: **19.09.2018**
(21) Numéro de dépôt: 15759496.1
(22) Date de dépôt: 02.07.2015
(51) Int. Cl.: B32B 17/10, F21V 8/00, F21V 33/00, G02B 6/02

(54) **ENSEMBLE VITRE LUMINEUX**
LEUCHTENDES GLASENSEMBLE
LUMINOUS GLASS ENSEMBLE

(30) Priorité: 03.07.2014 FR 1456379
(43) Date de publication de la demande: 10.05.2017
(73) Titulaire: Saint-Gobain Glass France, 92400 Courbevoie (FR)
(72) Inventeur: GIERENS, Anne, 40545 Dusseldorf (DE); WOLFF, Richard, F-60190 Pronleroy (FR)
(74) Mandataire: Saint-Gobain Recherche
(86) Numéro de dépôt international: PCT/FR2015/051836
(87) Numéro de publication internationale: WO 2016/001597

(56) Documents cités:
- EP-A1- 2 423 173
- WO-A1-2012/028820
- DE-A1- 10 206 613
- FR-A1- 2 694 069
- FR-A1- 2 976 343
- FR-A1- 2 982 196
- JP-A- H10 124 710
- JP-A- 2007 328 810
- US-A1- 2004 040 228

## Description

La présente invention se rapporte au domaine de la lumière et plus particulièrement concerne un ensemble vitré lumineux par extraction de lumière guidée dans un verre.

Il est connu de former un vitrage lumineux en éclairant un verre par la tranche avec une source de lumière comme un ensemble de diodes électroluminescentes. La lumière ainsi injectée est guidée par réflexion totale interne à l'intérieur de ce verre grâce au contraste d'indice de réfraction avec les matériaux environnants. Cette lumière est ensuite extraite à l'aide de moyens formant signalisation qui sont classiquement une couche diffusante.

Naturellement, les diodes peuvent être pilotées pour fournir via le motif diffusant une zone lumineuse en continu ou clignotante ou encore changeant de couleur.

La Demanderesse propose d'élargir la gamme des vitrages lumineux disponibles basés sur un verre guide de lumière à éclairage par la tranche en rendant possible la vision simultanée d'une première zone lumineuse d'une première couleur visible du premier côté du vitrage et d'une deuxième zone lumineuse d'une deuxième couleur distincte visible de ce premier côté du vitrage avec une liberté de design sur la taille et répartition de ces première et deuxième zone lumineuses.

A cet effet l'invention a pour objet un ensemble vitré lumineux comprenant:
- un vitrage multiple (feuilleté) avec des faces principales extérieures dites première face extérieure et deuxième face extérieure comportant :
   - un premier vitrage (transparent, clair, extraclair), de préférence en verre minéral et même trempé (nu ou déjà revêtu), voire organique (de préférence rigide) d'indice de réfraction n1 de préférence inférieur à 1,6 à 550nm (mieux dans l'ensemble du spectre visible), et même inférieur à 1,55 ou même encore inférieur ou égal à 1,53 à 550nm (mieux dans l'ensemble du spectre visible), de préférence de 1,5 à 1,53, avec des faces principales appelées face interne et première face et une première tranche,
   - en contact optique avec le premier vitrage, notamment séparé par une ou des couches (couche au sens large) un deuxième vitrage, (de préférence en verre minéral voire organique (rigide), transparent, clair, extraclair, même trempé), d'indice de réfraction n'1 de préférence inférieur à 1,6 à 550nm (mieux dans l'ensemble du spectre visible), et même inférieur à 1,55 à 550nm (mieux dans l'ensemble du spectre visible) ou même encore inférieur ou égal à 1,53 à 550nm (mieux dans l'ensemble du spectre visible), de préférence de 1,5 à 1,53, avec des faces principales appelées face de collage et deuxième face, la face de collage étant en regard de la face interne, et une tranche, dite deuxième tranche (alignée ou décalée de la première tranche vers l'extérieur de l'ensemble vitré, laissant une bande périphérique de la face de collage dépassante de la première tranche ou de la tranche opposée à la première tranche),
- une première source de lumière (visible), de préférence un ensemble de diodes électroluminescentes (sur un premier support PCB autrement dit carte de circuit imprimé, diodes alignées, en barrette(s)) ou une fibre optique extractrice avec source primaire de lumière (diode(s)), couplée optiquement au premier vitrage, par la première tranche voire par l'une des faces à la périphérie de la première tranche (notamment avec un logement des diodes), le premier vitrage guidant la lumière émise par la première source de lumière, première source de lumière pilotée en statique ou (de préférence) en dynamique pour émettre à l'instant t0 un premier rayonnement principal à une première longueur d'onde dite λ1 et de préférence commutable pour émettre à l'instant t'≠t0 un deuxième rayonnement principal à une deuxième longueur d'onde dite λ2 de préférence distincte de λ1 (de préférence distincte de λ1 d'au moins 20nm, 40nm et même d'au moins 80nm), et éventuellement pour émettre (dans le blanc, le rouge, le vert, le bleu ...) à t3#0 et t3#t' un rayonnement principal (décoratif ou fonctionnel) même encore distinct du premier et/ou du deuxième rayonnement principal,
- des premiers moyens d'extraction de lumière (issue du guidage) associés au premier vitrage comportant un ou une pluralité de premiers motifs d'extraction (diffusants de préférence), définissant une première surface d'extraction (occupant tout ou partie de la face interne et/ou de la première face de préférence hors une première zone de marge coté couplage optique avec la première source, notamment occupant une zone, comme une bande, de la première tranche à la tranche opposée hormis de préférence ladite première zone de marge), la lumière extraite étant visible côté première face extérieure de préférence qui est la première face, les premiers moyens d'extraction (notamment couche diffusante blanche, de préférence définie par une clarté L* d'au moins 50) étant tels que la lumière extraite audit t0 est d'une première couleur dite C1 (C1 de rayonnement principal λ'1 sensiblement égal à λ1 par exemple) et notamment audit t' est d'une deuxième couleur dite C2 de préférence distincte de la première couleur C1 (C2 de rayonnement principal λ'2),
   notamment premiers moyens d'extraction de lumière qui sont de préférence des moyens diffusants du côté de la face interne (de préférence sur la face interne, voire dans ou sur un premier intercalaire de feuilletage), et/ou du côté de (même de préférence sur) la première face et/ou dans la masse du premier vitrage,
- une deuxième source de lumière, de préférence un ensemble de diodes électroluminescentes (sur un deuxième support PCB, diodes alignées, en barrette(s)), de préférence identique à la première source de lumière), voire une fibre optique extractrice avec source primaire de lumière (diode(s)), couplée optiquement au deuxième vitrage, par la deuxième tranche voire par l'une des faces à la périphérie de la deuxième tranche, notamment avec un logement des diodes), le deuxième vitrage guidant la lumière émise par la deuxième source de lumière, (deuxième tranche du côté de la première tranche, alignée ou décalée vers l'intérieur de l'ensemble vitré, ou côté opposé à la première tranche),
   la deuxième source de lumière étant pilotée, en statique ou en dynamique pour émettre audit t0 un troisième rayonnement principal à une longueur d'onde dite λ3 distincte de λ1 (de préférence distincte de λ1 d'au moins 20nm, d'au moins 40nm et même d'au moins 80nm, λ3) et de préférence pour émettre audit instant t' un quatrième rayonnement principal à une longueur d'onde dite λ4 par exemple distincte de λ3 (distincte de λ3 d'au moins 20nm, d'au moins 40nm et même d'au moins 80nm), voire distincte de λ2, et notamment pour émettre (dans le blanc, le rouge, le vert, le bleu...) à t3#t0 et t3#t' un rayonnement principal (décoratif ou fonctionnel) même encore distinct du troisième et/ou quatrième (même du premier et/ou du deuxième) rayonnement principal,
- des deuxièmes moyens d'extraction de lumière (issue du guidage) associés au deuxième vitrage, comportant un ou une pluralité de deuxièmes motifs d'extraction (diffusants de préférence), définissant une deuxième surface d'extraction, deuxième(s) motif(s) décalé(s) du ou des premiers motifs - éventuellement, de préférence décalage d'au plus 50cm et même d'au plus 20cm ou d'au plus 10cm- (occupant tout ou partie de la face de collage et/ou de la deuxième face de préférence hors deuxième zone de marge coté couplage optique avec la deuxième source, notamment occupant une zone, comme une bande, de la deuxième tranche à la tranche opposée hormis de préférence ladite deuxième zone de marge), la lumière ainsi extraite étant visible côté première face extérieure, deuxièmes moyens d'extraction de lumière (notamment couche diffusante blanche, de préférence définie par une clarté L* d'au moins 50) tels que la lumière extraite à t0 est d'une couleur dite C3 distincte de C1 (de rayonnement principal λ'3 sensiblement égal à λ3, distinct de λ'1 d'au moins 20nm, d'au moins 40nm et même d'au moins 80nm, et éventuellement audit t' d'une couleur dite C4 distincte de C3 (C4 de rayonnement principal λ'4 sensiblement égal à λ4, distinct de λ'3 d'au moins 20nm, 40nm et même 80nm), voire distincte de C2,

L'ensemble vitré comprend en outre entre la face de collage et la face interne, un isolateur optique (de préférence continu, plan ou bombé, en une pièce), dit premier isolateur optique, transparent, d'indice de réfraction n2 tel que, aux longueurs d'onde de la première source de lumière (et mieux de la deuxième source si isolateur unique, mieux encore de l'ensemble du spectre visible) n1-n2 est d'au moins 0,08 et même d'au moins 0,2 et mieux encore d'au moins 0,3 (et mieux n'1-n2 est d'au moins 0,08 et même d'au moins 0,2 et mieux encore d'au moins 0,3, si isolateur unique) qui est :
- au moins en regard de la face interne entre les premiers motifs d'extraction (si plusieurs, ou encore dans le vide d'un motif fermé évidé), de préférence couvrant la première surface d'extraction, et/ou (de préférence et) en regard de la face interne entre la première tranche et (le bord adjacent de) la première surface d'extraction, et de préférence en regard de la face interne entre la première surface d'extraction et la tranche opposée à la première tranche, premier isolateur optique de préférence couvrant sensiblement la face interne (hormis éventuellement une première zone dite de marge coté couplage optique avec la première source et même une ou d'autres zones périphériques de la face interne)
- de préférence si le premier isolateur est unique (un seul isolateur optique entre premier et deuxième vitrage), au moins en regard de la face de collage :entre les deuxièmes motifs d'extraction (si plusieurs, ou encore dans le vide d'un motif fermé évidé), de préférence couvrant la deuxième surface d'extraction et/ou (de préférence et) entre la deuxième tranche et (le bord adjacent de) la deuxième surface d'extraction, et de préférence entre la deuxième surface d'extraction et la tranche opposée à la deuxième tranche, premier isolateur optique de préférence couvrant alors sensiblement la face de collage (hormis éventuellement une deuxième zone dite de marge coté couplage optique avec la deuxième source et même une ou d'autres zones périphériques de la face de collage).

Lorsque les premiers moyens d'extraction sont du côté face interne, le premier isolateur optique est plus éloigné de la face interne que les premiers moyens d'extraction et de préférence lorsque les deuxièmes moyens d'extraction sont du côté face de collage, le premier isolateur optique (si isolateur optique unique) est plus éloigné de la face de collage que les deuxièmes moyens d'extraction côté face de collage.

Le premier isolateur optique, -ayant des première et deuxième surfaces principales-, est feuilleté -via la première surface principale- au premier vitrage (avec côté face interne et même les premiers moyens d'extraction dessous) au moyen d'un premier intercalaire de feuilletage, en première matière polymérique transparente, de préférence thermoplastique voire thermodurcie, qui est d'indice de réfraction n3 tel que n3-n1 en valeur absolue est inférieur à 0,05 et même inférieur à 0,03 aux longueurs d'onde de la première source de lumière et mieux dans l'ensemble du spectre du visible.

Entre la face de collage et le premier isolateur optique, il y a un deuxième intercalaire de feuilletage, en deuxième matière polymérique transparente (de préférence thermoplastique voire thermodurcie, de préférence deuxième matière identique ou similaire à la première matière), qui est d'indice de réfraction n'3 tel que n'3-n'1, en valeur absolue, est inférieur à 0,05 et même à 0,03 aux longueurs d'onde de la deuxième source de lumière (et mieux dans l'ensemble du spectre du visible) et qui est en contact adhésif avec le deuxième vitrage (avec la face de collage).

Le premier isolateur optique favorise l'indépendance des éclairages de deux couleurs distinctes tout particulièrement couvrant sensiblement la surface du premier vitrage en regard de celle du deuxième vitrage.

L'ensemble vitré peut comprendre en outre entre la face interne et la face de collage, un isolateur optique (de préférence continu et plan, en une pièce), dit deuxième isolateur optique, plus proche des deuxièmes moyens d'extraction que le premier isolateur optique, transparent, d'indice de réfraction n'2 tel que, aux longueurs d'onde de la deuxième source de lumière (mieux de l'ensemble du spectre visible) n'1-n'2 est d'au moins 0,08 et même d'au moins 0,2 et mieux encore d'au moins 0,3 qui est :
- au moins en regard de la face de collage entre les deuxièmes motifs d'extraction (si plusieurs, ou encore dans le vide d'un motif fermé évidé), de préférence couvrant la deuxième surface d'extraction et/ou (de préférence et) entre la deuxième tranche et (le bord adjacent de) la deuxième surface d'extraction, et de préférence entre la deuxième surface d'extraction et la tranche opposée à la deuxième tranche, deuxième isolateur optique de préférence couvrant alors sensiblement la face de collage (hormis éventuellement une deuxième zone dite de marge coté couplage optique avec la deuxième source et même une ou d'autres zones périphériques de la face de collage).

Lorsque les deuxièmes moyens d'extraction sont du côté face de collage, le deuxième isolateur optique est plus éloigné de la face de collage que les deuxièmes moyens d'extraction.

Le deuxième isolateur optique est feuilleté, au deuxième vitrage (donc côté face de collage et avec même les deuxièmes moyens d'extraction) au moyen du deuxième intercalaire de feuilletage.

On peut souhaiter ce deuxième isolateur optique si le premier isolateur optique est plus éloigné du deuxième vitrage que du premier vitrage et/ou n'isole pas (suffisamment) les rayons issus de la deuxième source de lumière par sa position et/ou son étendue.

De préférence, entre le premier isolateur optique qui est un film bas indice (détaillé plus tard) et la face interne on n'ajoute pas d'autres éléments que ceux précités. De préférence, entre le deuxième isolateur optique éventuel qui est un film bas indice (détaillé plus tard) et la face de collage on n'ajoute pas d'autres éléments que ceux précités.

L'invention trouve son application pour un panneau lumineux décoratif, une cloison lumineuse, une fenêtre lumineuse ou encore comme porte de meuble réfrigéré commercial (enceinte verticale, et même coffre).

La première face extérieure est la face de visualisation de l'éclairage à deux couleurs et correspond de préférence :
- à la première face (face libre du vitrage feuilleté formée par le premier et deuxième vitrage)
- et même de préférence à la face coté usager pour une porte de meuble réfrigéré - en double vitrage ou triple vitrage -.

Un deuxième motif d'extraction peut être au coeur d'un premier motif d'extraction évidé (annulaire, tout motif géométrique...) l'encadrant alors.

Les premiers motifs peuvent être jointifs avec les deuxièmes motifs et même former une surface lumineuse continue bi colore par entrelacement régulier ou non de deuxièmes motifs entre des premiers motifs voisins.

Un deuxième motif d'extraction peut être entre deux premiers motifs d'extraction. Ainsi les premières et deuxième surfaces peuvent s'entremêler (réseaux de motifs espacés, motifs en alternance régulière ou non etc).

On entend par « deuxième motif décalé du ou des premiers motifs» le fait que tout ou partie du deuxième motif d'extraction n'est pas en vis-à-vis (en superposition de la première surface d'extraction et donc dépasse (latéralement) de la première surface d'extraction. Autrement dit la projection orthogonale de la deuxième surface d'extraction dans le plan de la première surface d'extraction n'est pas confondue avec la première surface d'extraction. La projection orthogonale et la première surface d'extraction peuvent être jointives ou espacées.

De préférence, aucune portion de deuxième motif d'extraction n'est en regard (superposé) avec un premier motif d'extraction sauf à souhaiter créer des effets de couleurs, auquel cas la superposition est alors de préférence sur au moins 0,5mm.

La distance minimale entre la première surface d'extraction et la projection orthogonale de la deuxième surface d'extraction dans le plan de la première surface d'extraction peut être d'au plus 50mm et même d'au plus 20mm. De tels motifs bi couleurs sans mélange important des deux couleurs est rendu possible par l'invention.

Les sources de lumière sont placées de préférence sur le bord le plus proche du motif d'extraction. Dans certaines configurations, la deuxième source peut être sur la tranche du bord du vitrage multiple adjacent au bord du vitrage multiple avec la première tranche. Ainsi, la deuxième source peut être sur bord latéral du vitrage (rectangulaire) et la première source sur un bord longitudinal. Toutefois on préfère souvent utiliser deux bords opposés du vitrage multiple ou le même bord.

Si le motif est de type cadre on peut avoir quatre sources de lumières (une par bord).

Le(s) deuxième(s) motif(s) peuvent être décalés en X (qui est la direction de propagation dans le premier vitrage et le deuxième vitrage, perpendiculaire à la première tranche) et/ou en Y perpendiculaire à X.

Naturellement, le premier rayonnement présente une première gamme spectrale donnée. Naturellement le deuxième rayonnement présente une deuxième gamme spectrale donnée.

On entend par premier (resp. deuxième) rayonnement principal selon l'invention le rayonnement le plus intense dans la gamme spectrale émise à l'instant t0 (resp. t') par la première source de lumière. Et on entend par troisième (reps. quatrième) rayonnement principal selon l'invention le rayonnement le plus intense dans la gamme spectrale émise à l'instant t0 (resp t') par la deuxième source de lumière.

De préférence la gamme spectrale du premier rayonnement est étroite d'au plus 50nm et est sans recouvrement avec la gamme spectrale du deuxième rayonnement également étroite ou avec un recouvrement de moins de 50nm pour des intensités normalisés inférieures à 0,15, par exemple recouvrement entre le rouge et l'ambre ou entre le vert et le bleu.

A titre d'exemple avec deux couleurs rouge et verte:
- à t0 : la première source émet dans le vert avec λ1 dans une gamme allant de 515nm à 535 nm et de préférence de largeur spectrale à mi-hauteur de moins de 50nm (et la lumière extraite C1 est verte définie par un premier rayonnement extrait principal à λ1' sensiblement égal à λ1, par exemple distinct d'au plus 10nm ou d'au plus 5nm et de préférence avec une largeur spectrale à mi-hauteur de moins de 30nm),
   la deuxième source émet dans le rouge avec λ3 dans une gamme allant de 615nm à 635nm et de préférence de largeur spectrale à mi-hauteur de moins de 30nm (et la lumière extraite C3 est rouge définie par un troisième rayonnement extrait principal à λ3' sensiblement égal à λ3, par exemple distinct d'au plus 10nm ou d'au plus 5nm et de préférence avec une largeur spectrale à mi-hauteur de moins de 30nm) ou encore du blanc
- et éventuellement à t :
   la première source émet dans le rouge avec λ2 dans une gamme allant de 615nm à 635nm et de préférence de largeur spectrale à mi-hauteur de moins de 30nm (et la lumière extraite C2 est rouge définie par un deuxième rayonnement extrait principal à λ1' sensiblement égal à λ1, par exemple distinct d'au plus 10nm ou 5nm et de préférence avec une largeur spectrale à mi-hauteur de moins de 30nm)
   et de préférence la deuxième source émet dans le vert avec λ4 dans une gamme allant de 515nm à 535nm et de préférence de largeur spectrale à mi-hauteur de moins de 50nm (et la lumière extraite C4 est verte définie par un quatrième rayonnement extrait principal à λ4' sensiblement égal à λ4, par exemple distinct d'au plus 10nm ou d'au plus 5nm et de préférence avec une largeur spectrale à mi-hauteur de moins de 30nm) ou alternativement la première source continue d'émettre dans le rouge avec λ4 dans une gamme allant de 615nm à 635nm et de préférence de largeur spectrale à mi-hauteur de moins de 30nm (et la lumière extraite C4 est rouge définie par un quatrième rayonnement extrait principal à λ4' sensiblement égal à λ1, par exemple distinct d'au plus 10nm ou 5nm et de préférence avec une largeur spectrale à mi-hauteur de moins de 30nm).

Une autre configuration est que par exemple à t3 chaque source émette dans le vert ou dans le blanc. Il est aussi possible qu'une des sources soit éteinte (donc configurations suivantes : rouge et état off; vert et état off; blanc et état off). Il peut exister des zones décoratives de couleurs distinctes.

Bien sûr, C1 peut être du blanc et C2 une couleur au sens classique et vice versa.

Naturellement, l'ensemble vitré peut fonctionner aussi en mode statique c'est-à-dire proposer uniquement la combinaison C1 et C3 (ou C1 et état off de C2, ou C3 et état off de C4 éventuel). Dans ce cas, la première source de lumière peut même ne contenir que des premières diodes à λ1 et la deuxième source de lumière ne contenir que des troisièmes diodes à λ3.

A t0 la première source de lumière peut comporter une diode dite diode verte qui émet dans le vert avec λ1 dans une gamme allant de 515nm à 535nm, et la deuxième source comporte une diode dite diode rouge qui émet dans le rouge avec λ3 dans une gamme allant de 615nm à 635nm.

La réponse de l'oeil est meilleure pour le vert que pour le rouge et en outre le verre (minéral ou organique) absorbe plus le rouge que le vert. Aussi, à l'instant t0 (ou t') on peut percevoir un rouge trop pale. Alors de préférence le flux F1 émis par la diode verte peut être inférieur à 0,8 fois le flux F3 émis par la diode rouge de la deuxième source même inférieur à égal à 0,7 ou 0,6 fois F3.

Pour avoir un flux F1 inférieur à celui de F3 on peut ajuster l'intensité lumineuse de la diode rouge pour qu'elle soit supérieure à celle de la diode verte et/ou avoir sur le premier support PCB un nombre de diodes rouges par unité de longueur de support PCB supérieure au nombre de diodes vertes par unité de longueur de support PCB sur le deuxième PCB.

Par exemple pour des premiers et deuxièmes supports PCB de même longueur, on peut avoir sur chacun n fois la séquence suivante, n entier supérieur ou égal à 1 : deux diodes rouges /une diode verte... Et/ou à t' la première source de lumière peut comporter une diode électroluminescente dite diode rouge qui émet dans le rouge avec λ2 dans une gamme allant de 615nm à 635nm, et la deuxième source comporte une diode électroluminescente dite diode verte qui émet dans le vert avec λ4 dans une gamme allant de 515 à 535 nm, à t' le flux émis F4 par la diode verte est inférieur à 0,8 fois le flux F2 émis par la diode rouge.

On peut souhaiter en outre passer du rouge au vert pour la première surface d'extraction sans que le rouge apparaisse trop pale ou même inverser les couleurs à t' pour les deux motifs d'extraction.

Pour la première source de lumière avec ces diodes rouges et vertes, le flux F1 émis par la première diode verte peut être inférieur à 0,8 fois F2 émis par la diode rouge, même inférieur à égal à 0,7 ou à 0,6 fois le flux F2. On peut avoir n fois la séquence suivante, n entier supérieur ou égal à 1: deux diodes rouges / une diode verte...

Il en est de même pour la deuxième source de lumière. On peut avoir n' fois la séquence suivante, n' entier supérieur ou égal à 1: deux diodes rouges / une diode verte...

Dans le cas d'un support PCB commun on peut avoir :
- pour le premier ensemble de diodes n fois la séquence suivante, n entier supérieur ou égal à 1 : deux diodes rouges /une diode verte...
- pour le deuxième ensemble de diodes n' fois la séquence suivante, n' entier supérieur ou égal à 1 de préférence égal à n: deux diodes rouges /une diode verte...

La luminance à la normale côté première face extérieure via le(s) premier(s) motif(s) d'extraction ou via le(s) deuxième(s) motif(s) d'extraction avec C1 est de préférence d'au moins 80cd/m².

La luminance à la normale côté première face extérieure de la première surface d'extraction et/ou de la deuxième surface d'extraction peut être uniforme à +/-10 cd/m². Toutefois, à to, la luminance à la normale côté première face extérieure avec C1 verte peut être inférieure à la luminance à la normale côté première face extérieure avec C2 rouge pour tenir compte de la réponse de l'oeil.

La plupart des rayons sont guidés par réflexion totale interne à l'interface air première face et à l'interface premier intercalaire et premier isolateur optique. Le premier isolateur optique, le premier intercalaire de feuilletage sont transparents et d'indices de réfraction adaptés pour la propagation des rayons guidés. Ainsi, la plupart des rayons qui sont réfractés à l'interface face interne premier intercalaire puis premier intercalaire et premier isolateur optique sont réfléchis par le premier isolateur optique sauf les rayons à fort angle dans une zone proche du couplage optique. De préférence, on cache les points chauds sur la largeur W au moins d'1 cm et de préférence d'au plus 5 cm et mieux 3cm par un profilé.

Les première et deuxième sources de lumière sont agencés de préférence du même côté du vitrage multiple (de l'ensemble vitré) si les tranches opposées aux première et deuxième tranches sont visibles. L'ensemble vitré lumineux peut comporter en périphérie de la première tranche et de la deuxième tranche, un profilé, notamment en partie métallique, dépassant sur la première face qui est de préférence la première face extérieure (face de visualisation) de préférence sur une distance W entre 1cm et 3cm, renfermant ou porteur de la première source de lumière et de la deuxième source de lumière. Le profilé peut ainsi servir à masquer la vision des points chauds.

Les première et deuxième sources de lumière sont agencés de préférence sur deux côtés opposés du vitrage multiple (de l'ensemble vitré) si les première et deuxième tranches sont masquées - par exemple un profilé (de montage du vitrage, etc) qui peut renfermer et même loger porter première et deuxième sources de lumière -. Plus rarement elles sont agencées sur deux cotés adjacents. L'ensemble vitré lumineux peut ainsi comporter en périphérie de la première tranche et de la deuxième tranche un profilé de préférence en cadre, notamment en partie métallique, avec :
- un premier montant en périphérie de la première tranche et dépassant sur la première face qui est de préférence la première face extérieure (face de visualisation), de préférence sur une distance W entre 1cm et 3cm, renfermant ou porteur de la première source de lumière
- et un deuxième montant (à l'opposé) en périphérie de la deuxième tranche et dépassant sur la première face qui est de préférence la première face extérieure (face de visualisation) renfermant ou porteur de la deuxième source de lumière.

Ce profilé (premier montant et/ou deuxième montant) n'est pas forcément en contact optique avec la première face qui est de préférence la première face extérieure (plutôt que la deuxième face extérieure). Il peut être :
- collé, par colle ou double face opaque, qui va absorber les rayons à fort angle
- ou est collé par colle ou double face transparent, les rayons à fort angle sont réfléchis sur le profilé réflecteur et sortent plus loin ou sont absorbés par le profilé (à surface rendue) opaque.

En outre, par économie et pour l'efficacité d'extraction, les premiers motifs d'extraction (diffusants, blanc ou dépoli) sur la première face (extérieure) ou sur la face interne peuvent être espacés de la première tranche d'au moins la distance W (largeur du profilé), donc commencer au début du clair de vitre.

Par ailleurs, dans une bande périphérique de largeur D0 -inférieure à W- à partir de la première tranche, des rayons de la première source pourraient être réfractés dans le premier intercalaire de feuilletage, côté face interne, dans le premier isolateur optique (d'indice de réfraction encore trop élevé), dans le deuxième intercalaire de feuilletage, puis au niveau de la face de collage :
- être extraits directement par les deuxièmes moyens d'extraction situés sur la deuxième face,
- ou être extraits directement par les deuxièmes moyens d'extraction sur la face de collage- (notamment motifs les plus proches de la deuxième tranche)
- ou être guidés dans le deuxième vitrage (en réflexion totale interne à l'interface deuxième face et air (si vitrage feuilleté unique) ou lame d'air (si vitrage feuilleté partie d'un vitrage isolant)- puis être extraits par les deuxièmes moyens d'extraction sur la face de collage- (notamment motifs les plus proches de la deuxième tranche).

Ces rayons atteignant les deuxièmes moyens d'extraction provoquent une pollution de la couleur C3. Une pollution peut intervenir de la couleur C1 de manière symétrique par des rayons de la deuxième source.

Aussi dans une première configuration « anti mélange », on prévoit une première bande (pleine) dite antimélange qui est en contact optique avec la face interne, en périphérie de la face interne, s'étendant à partir de la première tranche (du couplage optique avec la première source), le long de la première tranche, bande de largeur D0 au moins égale à 0,8Dmin et mieux égale à Dmin avec Dmin= d1 / tan ((π/2)-arsin(n2/n1)) et de préférence inférieure à 2cm et même à 1cm (et de préférence inférieure à W), où d1 est la distance entre la première source de lumière et la face interne.

La première bande antimélange est de préférence opaque (noire de préférence), par exemple sur la même face que la première surface d'extraction et espacée de la première surface d'extraction plus éloignée de la première tranche.

Alternativement, la première bande peut être diffusante (blanche etc) avec un facteur de transmission dans le visible d'au plus 2% côté face interne, de préférence de nature identique aux premiers moyens d'extraction, par exemple réalisée en une étape de fabrication. Si la première bande anti mélange est diffusante on préfère ainsi qu'elle soit suffisamment épaisse pour ne pas extraire la lumière côté opposé à la face interne.

De la même façon, le ou les premiers motifs d'extractions (non masqués par un profilé ou couche de masquage) peuvent être suffisamment épais pour ne pas extraire la lumière côté opposé à la face interne.

De préférence, la première source (chaque diode) est d'étendue (largeur de la face émettrice) W0 inférieure à l'épaisseur du premier vitrage typiquement W0 d'au plus 5mm et la première source (chaque diode) sensiblement centrée par rapport à la première tranche. d1 est de 1 à 5mm mieux de 1 à 3mm.

Pour d'on choisit de préférence le bord de la première source le plus éloigné de la face interne.

On peut aussi de préférence rajouter une première autre bande anti-mélange, de largeur D01 au moins égale à 0,8Dmin, de préférence congruente à la première bande antimélange, côté (et même sur) la première face (de préférence qui est la première face extérieure), de préférence opaque (noire de préférence).

Par exemple, il s'agit d'un revêtement opaque (noir de préférence) comme un émail ou une peinture sur la première face ou encore d'un ruban adhésif monoface opaque ou d'une colle ou ruban adhésif double face opaque servant éventuellement aussi pour fixer un profilé sur la première face ou encore d'une surface (rendue) opaque d'un profilé (plastique, métal) en contact optique avec la première face (première face extérieure de préférence), profilé avec un revêtement opaque (noir de préférence) par exemple peinture.

Cette première autre bande antimélange sert dans toutes les configurations suivantes:
- deuxième face libre (guidage de la plupart des rayons dont ceux nuisibles pour le mélange qui vont ensuite vers les deuxièmes motifs diffusants).
- deuxième face avec un profilé réflecteur en contact optique (rayons réfléchis dont ceux nuisibles pour le mélange qui vont vers les deuxièmes motifs diffusants)
- deuxième face avec un profilé avec lame d'air (les rayons nuisibles sont guidés puis vont vers les deuxièmes motifs diffusants).

Et de préférence une deuxième bande (pleine) dit antimélange est en contact optique avec la face de collage, en périphérie de la face de collage, s'étendant à partir de la deuxième tranche (du couplage optique avec la deuxième source), le long de la deuxième tranche, bande de largeur D'0 au moins égale à 0,8D'min et mieux égale à D'min avec D'min= d'1 / tan ((π/2)-arsin(n2/n'1)) et de préférence inférieure à 2cm, et même à 1cm (et de préférence inférieure à W) où d'1 est la distance entre la deuxième source de lumière et la face de collage.

La deuxième bande antimélange est de préférence opaque (noire de préférence) et par exemple sur la même face et espacée de la deuxième surface d'extraction plus éloignée de la deuxième tranche.

Alternativement, la deuxième bande antimélange peut être diffusante (blanche par exemple) avec un facteur de transmission dans le visible d'au plus 2% côté face de collage, de préférence de nature identique aux deuxièmes moyens d'extraction, par exemple réalisée en une étape de fabrication.

De préférence, la deuxième source (chaque diode s'il s'agit d'un ensemble de diodes) est d'étendue (largeur de la face émettrice) W'0 inférieure à l'épaisseur du deuxième vitrage typiquement W'0 d'au plus 5mm et la deuxième source (chaque diode s'il s'agit d'un ensemble de diodes) sensiblement centrée par rapport à la deuxième tranche. d'1 est de 1 à 5 mm mieux de 1 à 3mm.

Pour d'on choisit de préférence le bord de la deuxième source de lumière le plus éloigné de la face de collage.

De préférence on limite la largeur de la première, (deuxième etc) bande antimélange pour ne pas éliminer trop de rayons (y compris rayons guidables à l'interface du film bas indice).

En particulier dans le cas d'un vitrage multiple qui est un vitrage feuilleté (deuxième face étant même la deuxième face extérieure) ne formant pas un vitrage isolant, on peut aussi rajouter de préférence une deuxième autre bande anti-mélange, de largeur D02 au moins égale à 0,8D'min de préférence congruente à la deuxième bande antimélange, côté (même sur) deuxième face, de préférence opaque.

Par exemple, il s'agit d'un revêtement opaque (noir de préférence) comme un émail ou une peinture sur la deuxième face ou encore d'un ruban adhésif monoface opaque ou encore d'une colle ou ruban adhésif double face opaque servant pour fixer un profilé ou encore d'une surface (rendue) opaque d'un profilé en contact optique avec la deuxième face (deuxième face extérieure de préférence) profilé avec un revêtement opaque (noir de préférence) par exemple peinture.

Si le vitrage multiple forme un vitrage isolant (double ou triple vitrage), alors il comporte un troisième vitrage ayant une troisième face principale et une quatrième face principale, les deuxième face et troisième faces étant espacées par une première lame de gaz, et en périphérie des deuxième et troisième faces un premier joint polymérique en cadre, qui est un mastic, de préférence noir, tel qu'en polysulfure ou polyuréthane, fait partie et même forme l'autre deuxième bande anti mélange de préférence opaque.

La largeur du premier joint peut être d'au moins 3mm et de préférence d'au plus 6mm.

Usuellement, un intercalaire est accolé au premier joint et est aux deuxième et troisième faces par du caoutchouc butyl de préférence opaque, par exemple noir qui a également pour rôle de rendre étanche l'intérieur du vitrage isolant à la vapeur d'eau. La largeur du caoutchouc butyl peut être d'au moins 2mm et de préférence d'au plus 6mm.

L'ensemble premier joint tel qu'en polysulfure ou polyuréthane et caoutchouc butyle peut former l'autre deuxième bande antimélange de préférence opaque.

Le tableau I suivant indique des exemples de Dmin en fonction de n2 et n1 et de d1. Il peut servir d'abaque.

**Tableau I**

| n1 | n2 | d1 (mm) | Dmin (mm) |
|---|---|---|---|
| 1,5 | 1,15 | 1 | 1,2 |
| 1,52 | 1,15 | 1 | 1,2 |
| 1,5 | 1,2 | 1 | 1,3 |
| 1,52 | 1,2 | 1 | 1,3 |
| 1,5 | 1,25 | 1 | 1,5 |
| 1,52 | 1,25 | 1 | 1,4 |
| 1,5 | 1,3 | 1 | 1,7 |
| 1,52 | 1,3 | 1 | 1,7 |
| 1,5 | 1,35 | 1 | 2,1 |
| 1,52 | 1,35 | 1 | 1,9 |
| 1,5 | 1,4 | 1 | 2,6 |
| 1,52 | 1,4 | 1 | 2,4 |
| 1,5 | 1,15 | 3 | 3,6 |
| 1,52 | 1,15 | 3 | 3,5 |
| 1,5 | 1,2 | 3 | 4,0 |
| 1,52 | 1,2 | 3 | 3,9 |
| 1,5 | 1,25 | 3 | 4,5 |
| 1,52 | 1,25 | 3 | 4,3 |
| 1,5 | 1,3 | 3 | 5,2 |
| 1,52 | 1,3 | 3 | 5,0 |
| 1,5 | 1,35 | 3 | 6,2 |
| 1,52 | 1,35 | 3 | 5,8 |
| 1,5 | 1,4 | 3 | 7,8 |
| 1,52 | 1,4 | 3 | 7,1 |
| 1,5 | 1,4 | 5 | 13,0 |
| 1,52 | 1,4 | 5 | 11,8 |

La première bande antimélange opaque est de préférence noire et peut donc être :
- de préférence un revêtement opaque en contact optique avec la face interne et mieux (directement) sur la face interne, tel que:
   - une encre (par exemple sur la face interne ou imprimée sur le premier intercalaire de feuilletage côté face interne voire sur la face opposée),
   - un émail (sur la face interne du premier vitrage de préférence minéral),
   - une peinture par exemple sur la face interne,
   - une colle opaque, une bande adhésive opaque,
   - un revêtement opaque sur un support, adhésivé à la face interne, support notamment transparent plastique (souple, comme un PET, transparent ou teinté etc), verre mince, ou une pièce (profilé) métallique, plastique ou bois, même support PCB de diodes à émission latérale de la première source, (partie de profilé de montage ou de fixation, notamment métallique ou plastique ou bois)
- voire une pièce opaque adhésivée à la face interne (partie de profilé de montage, de fixation, métallique ou plastique ou même bois) et dans une gorge entre les premier et deuxième vitrages.

La deuxième bande antimélange opaque, de préférence noire, est de préférence en matière identique à la première bande antimélange opaque et comme précitée. On préfère pour chacune un revêtement opaque sur la face en jeu et mieux un dépôt opaque comme un émail surtout en l'absence de profilé dessus. L'autre première bande anti mélange est par exemple un adhésif opaque monoface (sous un profilé) ou double face pour coller un profilé (métallique, réflecteur notamment).

Dans la zone de la première bande anti mélange, le premier intercalaire et/ou le premier isolateur optique peuvent être absents, donc sont en retrait par rapport à la première tranche d'au moins D0.

Le premier vitrage peut dépasser du deuxième vitrage (coté première tranche, deuxième tranche de préférence à l'opposé de l'ensemble vitré) si bien que la première bande anti mélange est dans cette zone dépassante, et éventuellement avec une surface libre ou sous un profilé. La première bande anti mélange et l'autre première bande anti mélange sont par exemple un adhésif opaque monoface (sous un profilé) ou double face pour coller un profilé.

Dans la zone de la deuxième bande anti mélange, le deuxième intercalaire et/ou le deuxième isolateur optique peuvent être absents, donc sont en retrait par rapport à la deuxième tranche d'au moins D'0.

Le deuxième vitrage peut dépasser du premier vitrage (coté deuxième tranche de préférence à l'opposé de l'ensemble vitré de la première tranche) si bien que la deuxième bande anti mélange est dans cette zone dépassante, et éventuellement avec une surface libre ou sous un profilé. La deuxième bande anti mélange et l'autre deuxième bande anti mélange sont par exemple un adhésif opaque monoface (sous un profilé) ou double face pour coller un profilé.

Dmin, D'min sont égaux si on choisit les mêmes vitrages et le ou les mêmes isolateurs optiques. D0 et D'0 sont égaux par simplicité.

Les première et deuxième bandes antimélange peuvent être en regard si la première et deuxième tranches, du même côté du vitrage multiple (de l'ensemble vitré), sont alignées. Les première et deuxième bandes peuvent être en regard, même congruentes sinon être sur des côtés opposés de l'ensemble vitré (si première et deuxième tranche sur des côtés opposés).

Dans un mode de réalisation préféré, les première et deuxième sources de lumière sont sur des côtés opposés du vitrage multiple (de l'ensemble vitré), le premier vitrage dépasse de la deuxième tranche formant une première région dépassante, la première bande de masquage, opaque de préférence, est dans la première région dépassante sur la face interne, notamment un adhésif opaque et même une autre première bande de masquage, opaque de préférence, est dans la première région dépassante sur la première face, notamment un adhésif opaque.

Sur la face avec les premiers motifs d'extraction en émail (blanc) on peut choisir une première bande de masquage opaque en émail (noir).

Et le deuxième vitrage dépasse de la première tranche formant une deuxième région dépassante et la deuxième bande de masquage, opaque de préférence, est dans la deuxième région dépassante notamment un adhésif opaque et même une autre deuxième bande de masquage, opaque de préférence, est dans la deuxième région dépassante sur la deuxième face de préférence deuxième face extérieure notamment un adhésif opaque

Sur la face avec les deuxièmes motifs d'extraction en émail (blanc) on peut choisir alternativement une deuxième bande de masquage opaque en émail (noir).

Un ruban adhésif opaque (noir de préférence), monoface ou double face, utilisé pour bande anti mélange est de préférence d'épaisseur de moins de 1mm et même de moins de 0,5mm ou 0,3mm.

Lorsque les premier et deuxième vitrages sont bord à bord, il peut y avoir, dans la zone de la première bande anti mélange (voire de la deuxième bande en regard), une gorge entre le premier et deuxième vitrage sans les premier et (deuxième) intercalaires ni le premier (et deuxième) isolateur optique et éventuellement avec une pièce avec revêtement opaque pour former la première bande anti mélange. On peut insérer une pièce opaque plus aisément si son épaisseur (inférieure à la distance entre premier et deuxième vitrages) est d'au plus 0,8mm et même d'au plus 0,5mm.

Lorsque les premier et deuxième vitrages sont bord à bord, dans la zone de la deuxième bande anti mélange (par exemple le coté de l'ensemble vitré opposé de celui de la première bande), il peut y avoir une gorge entre le premier et deuxième vitrage sans le premier (et deuxième) intercalaire ni le premier (et deuxième) isolateur optique et éventuellement avec une pièce avec revêtement opaque pour former la première bande anti mélange. On peut insérer une pièce opaque plus aisément si son épaisseur (dimension entre les vitrages) est d'au plus 0,8mm et même d'au plus 0,5mm.

Selon l'invention, le premier vitrage avec la première bande anti-mélange opaque présente, côté le plus éloigné du premier vitrage en regard de ladite première bande:
- une absorption (aux longueurs d'onde principales λ1, même λ2 même dans tout le visible) d'au moins 80% et même d'au moins 90% ou d'au moins 95%, et un facteur de transmission (aux longueurs d'onde principales λ1, même λ2 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Il en est de même de préférence pour l'autre première bande anti mélange opaque.

Selon l'invention, le premier vitrage avec la première bande anti-mélange diffusante présente, côté le plus éloigné du premier vitrage en regard de ladite première bande:
- un facteur de transmission (aux longueurs d'onde principales λ1, même λ2 et même dans tout le visible) d'au plus 2% et même d'au plus 1% ou d'au plus 0,5% (notamment une TL d'au plus 2% et même 1% ou 0,5%) .

Il en est de même de préférence pour l'autre première bande anti mélange diffusante.

Selon l'invention, le deuxième vitrage avec la deuxième bande anti-mélange présente côté le plus éloigné du deuxième vitrage en regard de ladite deuxième bande:
- une absorption (aux longueurs d'onde principales λ3 et même λ4, ou dans tout le visible) d'au moins 80% et même d'au moins 90%, et un facteur de transmission (aux longueurs d'onde principales λ3 et même λ4, même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Il en est de même de préférence pour l'autre deuxième bande anti mélange opaque.

Selon l'invention, le deuxième vitrage avec la deuxième bande anti-mélange diffusante présente, côté le plus éloigné du deuxième vitrage en regard de ladite deuxième bande:
- un facteur de transmission (aux longueurs d'onde principales λ3, même λ4 et même dans tout le visible) d'au plus 2% et même d'au plus 1% ou d'au plus 0,5% (notamment une TL d'au plus 2% et même 1% ou 0,5%) .

Il en est de même de préférence pour l'autre deuxième bande anti mélange diffusante.

On préfère en outre pour les bande opaques anti-mélange précitées une réflexion lumineuse limitée d'au plus 5% aux longueurs d'onde principales.

Les première et deuxième bandes antimélange selon l'invention peuvent être de préférence noires ou grises (couleurs foncées)

Dans une configuration « anti mélange » alternative ou cumulative aux bandes anti mélange précitées, la première source de lumière -comportant un ensemble de diodes (alignées, sur un premier support PCB), comprend une première diode électroluminescente avec ledit premier rayonnement principal à λ1 et notamment une deuxième diode électroluminescente, avec ledit deuxième rayonnement principal à λ2, chacune des première et éventuelle deuxième diodes est espacée de la première tranche -par une espace, de l'air- (de préférence de moins de 5mm et même d'au plus 2mm) et au moins 80% (mieux au moins 90% et même au moins 95%) du flux lumineux émis par chacune des première et éventuelle deuxième diodes est dans un cône d'émission entre -α1 et α1 avec α1 = Arsin(n1 * sin (α2)) où α2=(π/2)-Arsin (n2/n1) et correspond à l'angle de réfraction dans le premier vitrage, notamment par de premiers moyens de collimation (sur les puces émettrices).

Et la deuxième source de lumière -comportant un ensemble de diodes (alignées, sur un deuxième support PCB)- comprend une troisième diode électroluminescente avec ledit troisième rayonnement principal λ3 et éventuellement une quatrième diode électroluminescente avec ledit quatrième rayonnement principal à λ4, la troisième diode voire la quatrième diode éventuelle est espacée de la deuxième tranche - par une espace, par de l'air- (de préférence de moins de 5mm et même d'au plus 2mm) et au moins 80% (mieux au moins 90% et même au moins 95%) du flux lumineux émis par chacune des troisième et quatrième diodes est dans un cône d'émission entre -α'1 et a'1 avec α'1 = Arsin(n'1 * sin (α'2)) où α'2=(π/2)-Arsin (n'2/n'1) et correspond à l'angle de réfraction dans le deuxième vitrage, notamment par des deuxièmes moyens de collimation.

On souhaite qu'il y ait réflexion totale interne à l'interface avec le premier isolateur optique pour tous les angles y compris les grands angles.

Arsin (n2/n1) correspond sensiblement à l'angle de réflexion totale à l'interface avec le premier isolateur optique (α'2 est l'angle complémentaire pour avoir cette réflexion totale). Plus précisément il faudrait faire intervenir Arsin (n2/n3) mais n3 étant très proche de n1 l'impact est négligeable.

Le tableau II suivant indique des exemples de α1, ar en fonction de n2 pour n1 égal à 1,5 où ar est l'angle de réfraction.

**Tableau II**

| α1 (°) | αr (°) |
|---|---|
| 30 | 20 |
| 35 | 22 |
| 40 | 25 |
| 45 | 28 |
| 50 | 31 |
| 60 | 35 |

Le tableau II' suivant indique des exemples de α1 (angle d'émission pour réflexion totale), α2 (angle de réfraction pour réflexion totale à l'interface du premier isolateur optique) en fonction de n2 pour n1 égal à 1,5 ou 1,52. Il peut servir d'abaque.

**Tableau II'**

| | | n2=1,4 | n2=1,35 | n2=1,3 | n2=1,25 | n2=1,2 | n2=1,15 | n2=1,1 |
|---|---|---|---|---|---|---|---|---|
| α2 | n1=1,5 | 21 | 26 | 30 | 34 | 37 | 40 | 43 |
| α2 | n1=1,52 | 23 | 27 | 31 | 35 | 38 | 41 | 44 |
| α1 | n1=1,5 | 33 | 41 | 48 | 56 | 64 | 74 | |
| α1 | n1=1,52 | 36 | 44 | 51 | 59 | 67 | 79 | |

En dessous de n2=1,15, on peut choisir des diodes classiques sans moyens de collimation voir même en dessous de n2=1,2.

De préférence la majorité et mieux toutes les diodes des première et deuxième sources de lumière présentent un tel diagramme d'émission étroit, notamment par des moyens de collimation.

La collimation est individuelle voire commune à plusieurs diodes de chaque source ...

Naturellement on met autant que de diodes émettant à λ1 et de diodes émettant à λ2 que nécessaire et on ajuste leur répartition (nombre, espacement) pour s'étendre le long de la tranche dans la première surface d'extraction. On peut choisir d'alterner λ1 et λ2 ou non.

On peut rajouter d'autres diodes pour apporter de nouvelles couleurs de lumières ou fonctionnalité et on préfère également choisir leur diagramme d'émission étroit.

En particulier pour réaliser encore plus de zones lumineuses avec d'autres couleurs, on peut rajouter N (égal à 1 ou plus) fois sur la deuxième face : intercalaire de feuilletage/isolateur optique/intercalaire de feuilletage/ vitrage additionnel, avec des moyens d'extraction additionnels associés au vitrage additionnel définissant une surface d'extraction additionnelle décalée des première et deuxième surfaces d'extraction (de toutes les autres surfaces d'extraction), et une source de lumière additionnelle adaptée couplée à la tranche du vitrage additionnel.

Lorsque l'on choisit une fibre optique extractrice pour chaque source primaire on peut choisir aussi des diagrammes d'émission étroits.

De manière avantageuse, la première source de lumière est un ensemble de diodes électroluminescentes -de préférence alignées- sur une carte de circuit imprimé dite premier support PCB (de préférence barrette, méplat) et les diodes sont couplées à la première tranche, et la deuxième source de lumière est un ensemble de diodes électroluminescentes - de préférence alignées - sur une carte de circuit imprimé dite deuxième support PCB (de préférence barrette, méplat) et les diodes sont couplées à la deuxième tranche. Les premier et deuxième supports PCB sont espacés, jointifs ou en un support PCB commun (première et deuxième tranche du même côté du vitrage multiple).

La deuxième tranche est alignée ou même décalée de la première tranche ou alignée ou de préférence décalée de la tranche opposée à la première tranche (diodes sur côtés opposés de l'ensemble vitré ou plus largement sur cotés distincts par exemple cotés adjacents ou opposés).

Par ailleurs, l'ensemble vitré peut comporter :
- un premier moyen dit cloisonnement de préférence opaque empêchant tout ou partie la réfraction de la lumière émise par la première source de lumière à la tranche du vitrage multiple entre la face interne et la deuxième face (extérieure) côté première tranche, en particulier si le premier vitrage ne dépasse pas du deuxième vitrage côté première tranche, et de préférence un deuxième moyen dit cloisonnement de préférence opaque empêchant tout ou partie de la réfraction de la lumière émise par la deuxième source de lumière à la tranche du vitrage multiple entre la face de collage et la première face (extérieure) côté deuxième tranche, en particulier si le deuxième vitrage ne dépasse pas du premier vitrage côté deuxième tranche
- ou mieux lorsque la première et la deuxième source de lumière sont du même côté du vitrage multiple un moyen commun dit cloisonnement commun de préférence opaque empêchant tout ou partie la réfraction de la lumière émise par la première source de lumière à la tranche du vitrage multiple entre la face interne et la deuxième face côté première tranche et empêchant tout ou partie la réfraction de la lumière émise par la deuxième source de lumière à la tranche du vitrage multiple entre la face de collage et la première face (extérieure) côté première tranche, en particulier si le deuxième vitrage ne dépasse pas du première vitrage côté deuxième tranche (ou de moins de 1mm), en particulier si les première et deuxième tranches sont alignées.

Le premier (resp deuxième) cloisonnement de préférence absorbe (tout ou partie, au moins la majorité) des rayons les plus latéraux -par exemple émettant dans le verte- de la première source (resp deuxième) non guidés dans la première tranche (resp deuxième) qui pourraient être guidés dans la tranche centrale et être extraits par les deuxièmes (resp. premiers) moyens d'extraction -par exemple voués à extraire du rouge-.

Le cloisonnement commun de préférence absorbe (tout ou partie, au moins la majorité) :
- des rayons les plus latéraux -par exemple émettant dans le vert- de la première source non guidés dans la première tranche qui pourraient être guidés dans la tranche centrale et être extraits par les deuxièmes moyens d'extraction -par exemple voués à extraire du rouge-,
- des rayons les plus latéraux -par exemple émettant dans le rouge- de la deuxième source (diodes) non guidés dans la deuxième tranche (resp) qui pourraient être guidés dans la tranche centrale et être extraits par les premiers moyens d'extraction -par exemple voués à extraire du vert-.

Le premier, deuxième ou cloisonnement commun comporte de préférence une pièce (barrette, de section rectangulaire...), rapportée opaque ou avec revêtement(s) opaque(s). Ce peut être une pièce creuse ou pleine.

Cela serait plus compliqué par exemple de revêtir la tranche entre face de collage et face interne d'une couche opaque (ruban adhésif ou peinture).

Si le premier vitrage dépasse du deuxième vitrage côté première tranche et mieux si la deuxième tranche est à l'opposé de la première tranche, le premier cloisonnement peut être une aile (rendue) opaque d'un profilé en U (plastique ou métallique) ou L, profilé porteur et/ou renfermant la première source de lumière (diodes).

Si le deuxième vitrage dépasse du premier vitrage côté première tranche, le deuxième cloisonnement peut être une aile (rendue) opaque d'un profilé en U ou L, profilé porteur et/ou renfermant la deuxième source de lumière (diodes).

Un ruban adhésif opaque (noir de préférence), monoface ou double face, utilisé comme revêtement opaque du premier, deuxième ou cloisonnement commun est de préférence d'épaisseur de moins de 1mm et même de moins de 0,5mm ou 0,3mm.

Selon l'invention, le premier cloisonnement opaque - une pièce opaque ou une pièce avec un revêtement opaque côté première source (diodes), parallèle au plan du premier vitrage sur une pièce (quelconque) - présente :
- une absorption (aux longueurs d'onde principales λ1, même λ2 même dans tout le visible) d'au moins 80% et même d'au moins 90% ou d'au moins 95%, et un facteur de transmission (aux longueurs d'onde principales de λ1, même λ2 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Selon l'invention, le deuxième cloisonnement opaque - de préférence une pièce opaque ou une pièce avec un revêtement opaque côté deuxième source (diodes), parallèle au plan du premier vitrage sur une pièce (quelconque) - présente :
- une absorption (aux longueurs d'onde principales λ3, même λ4 même dans tout le visible) d'au moins 80% et même d'au moins 90% ou d'au moins 95%, et un facteur de transmission (aux longueurs d'onde principales de λ3, même λ4 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Selon l'invention, le premier cloisonnement (respectivement le deuxième) est de préférence une pièce avec un revêtement opaque voire diffusant côté première source (respectivement côté deuxième source), (sensiblement) parallèle au plan du premier vitrage (respectivement du deuxième vitrage).

Selon l'invention, le cloisonnement commun est de préférence une pièce avec un revêtement opaque voire diffusant côté première source (diodes), parallèle au plan du premier vitrage, et un revêtement opaque voire diffusant côté deuxième source (diodes), (sensiblement) parallèle au plan du deuxième vitrage.

Le cloisonnement commun opaque présente
- une absorption (aux longueurs d'onde principales λ1, même λ2 même dans tout le visible) d'au moins 80% et même d'au moins 90% ou d'au moins 95%, et un facteur de transmission (aux longueurs d'onde principales de λ1, même λ2 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.
et:
- une absorption (aux longueurs d'onde principales λ3, même λ4 même dans tout le visible) d'au moins 80% et même d'au moins 90% ou d'au moins 95%, et un facteur de transmission (aux longueurs d'onde principales de λ3, même λ4 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Comme exemple, on peut citer une pièce avec un dépôt (émail peinture..), avec un ruban adhésif monoface ou multiface opaque, sur deux faces latérales de la pièce si cloisonnement commun. On pourrait à la limite choisir un cloisonnement diffusant à T_{L} faible (facteur de transmission de moins de 2%) mais une partie des rayons peuvent rester gênants (guidés dans le verre et pas tous absorbés par une bande anti mélange)

On préfère que le premier cloisonnement (resp. deuxième) comme une pièce avec revêtement opaque ne dépasse pas sur la première tranche (resp. deuxième) ou dépasse de moins de 1mm. On préfère que le cloisonnement commun comme une pièce avec revêtements opaques ne dépasse pas sur la première tranche et sur la deuxième tranche ou dépasse de moins de 1mm.

L'épaisseur totale E1+E2+E3 avec E1 épaisseur du premier intercalaire de feuilletage, E2 du premier isolateur optique (unique), E3 du deuxième intercalaire de feuilletage est typiquement de moins de 1,5mm et même 1mm si le premier isolateur optique est un film (d'au plus 200µm) directement entre les deux intercalaires.

L'épaisseur E1+E2+E4+E'2+E3 avec E1 épaisseur du premier intercalaire de feuilletage, E2 du premier isolateur optique qui est un dépôt, E4 épaisseur d'un verre central (minéral de préférence), E'2 du deuxième isolateur optique, est typiquement de moins de 6mm.

Le premier cloisonnement (resps. deuxième) ou le cloisonnement commun est de préférence d'épaisseur inférieure ou égale à l'épaisseur entre face interne et face de collage ou épaisseur de tranche dite centrale. Le premier cloisonnement (et le deuxième) ou le cloisonnement commun est de préférence d'épaisseur (direction parallèle à l'épaisseur du vitrage multiple) d'au plus E1+E2+E3+ 1mm ou E1+E2+E4+E'2+E3+1mm.

Le premier cloisonnement (et le deuxième) ou le cloisonnement commun comporte une pièce (support de revêtement(s) opaque(s) de préférence) de préférence contre ou espacée de la tranche dite centrale du vitrage multiple (tranche entre face interne et face de collage) d'au plus 1mm et même d'au plus 0,5mm.

De préférence entre le premier (et le deuxième) cloisonnement ou le cloisonnement commun et la tranche centrale il n'y a pas de colle ou tout autre moyen de fixation.

Le premier cloisonnement (et le deuxième) ou le cloisonnement commun comme une pièce (barrette) avec revêtement(s) opaque(s) est fixée (collée) ou dans une encoche du support PCB commun ou d'une autre pièce (profilé par exemple).

Le premier cloisonnement (respectivement le deuxième) comporte une pièce avec un revêtement opaque, de préférence en saillie par rapport à la première source de lumière (respectivement deuxième) en direction de la première (respectivement deuxième) tranche. Le premier cloisonnement peut comprendre une pièce qui vient en butée de la tranche du vitrage multiple au moment du montage.

Le cloisonnement commun peut comporter une pièce avec revêtements opaques, de préférence en saillie par rapport à la première source de lumière (diodes) et à la deuxième source (diodes) en direction de la première et de la deuxième tranche.

De préférence, le premier ensemble de diodes électroluminescentes et le deuxième ensemble de diodes électroluminescentes sont par exemple agencés du même côté du vitrage multiple (de l'ensemble vitré) et l'ensemble vitré comporte un cloisonnement dit commun entre le premier ensemble et le deuxième ensemble de diodes électroluminescentes de préférence opaque empêchant tout ou partie de la réfraction de la lumière émise par le premier ensemble de diodes à la tranche entre face interne et deuxième face et empêchant tout ou partie de la réfraction de la lumière émise par le deuxième ensemble de diodes à la tranche entre face de collage et première face , éventuellement cloisonnement commun distinct des premier et deuxième supports PCB si diodes à émission latérale, et saillant par rapport aux premier et deuxième ensembles de diodes électroluminescentes (et même des premier et deuxième supports PCB) en direction des première et deuxième tranches.

Et mieux, le premier ensemble de diodes électroluminescentes et le deuxième ensemble de diodes électroluminescentes sont par exemple agencés du même côté du vitrage multiple (de l'ensemble vitré) et à émission par le haut (top émission en anglais), les première et deuxième tranches étant du même côté, et un support PCB dit support PCB commun, forme les premier et deuxième supports PCB et a une face principale en regard des premier et deuxième tranches et porte un cloisonnement commun de préférence opaque entre le premier ensemble et le deuxième ensemble de diodes électroluminescentes empêchant tout ou partie de la réfraction de la lumière émise par le premier ensemble à la tranche entre face interne et deuxième face et empêchant tout ou partie de la réfraction de la lumière émise par le deuxième ensemble à la tranche entre face de collage et première face, de préférence () saillant par rapport aux première et deuxième ensemble de diodes électroluminescentes en direction des première et deuxième tranches.

Les premier et deuxième supports PCB peuvent être donc sur un support commun PCB si les première et deuxième tranches sont du même côté et de préférence sensiblement alignées (et mieux avec une distance d'au plus 5mm et même d'au plus 2mm entre diodes et première ou deuxième tranches).

Pour des diodes à émission par le haut (diodes classiques), le support commun PCB peut donc être suffisamment large pour porter premier et deuxième ensembles de diodes. Le support commun PCB (et les diodes) peut même être collé sur les première et deuxième tranches de l'ensemble vitré par une colle optique ou un adhésif double face transparent surtout lorsque les diodes sont avec une encapsulation primaire.

Pour des diodes à émission latérale, le support commun PCB peut porter le premier ensemble sur sa première face principale et le deuxième ensemble sur sa face opposée, et même former le cloisonnement commun. Alternativement les premier et deuxième supports PCB sont accolés ou espacés par exemple par une entretoise, l'ensemble peut être le cloisonnement commun.

On prévoit un ou des cloisonnements surtout si les diagrammes de rayonnement de chaque ensemble de diodes est large (demi angle d'émission à mi hauteur de 50° voire 60° par exemple) et même lorsque les faces émettrices sont à une distance des tranches d'au plus 5mm et même d'au plus 2mm.

On peut donc prévoir un cloisonnement commun entre les premier et deuxième ensemble de diodes agencés du même côté du vitrage multiple (de l'ensemble vitré) (notamment sans décalage notable, de plus de 1mm, de la première tranche et de la deuxième tranche) qui est :
- une pièce (intrinsèquement) opaque ou avec revêtement(s) opaque(s) rapportée (fixée par tout moyen) sur un profilé (éventuellement de montage de l'ensemble vitré ou profilé de fixation de la première source de lumière à la première tranche, profilé de fixation au sein du volume intérieur défini par le profilé de montage) ou rapportée sur le support commun PCB ou l'un des premiers ou deuxième supports PCB distincts,
- ou encore une partie opaque ou avec revêtement(s) opaque(s) d'un profilé (de montage de l'ensemble vitré ou profilé de fixation de la première source de lumière à la première tranche, profilé de fixation au sein du volume intérieur défini par le profilé de montage) par exemple profilé de section en E ou double C voire en F ou même en T tourné à 90°
- ou si les diodes sont à émission latérale, le(s) support PCB opaques ou avec revêtement(s) opaque(s), notamment support(s) PCB dans une gorge entre les premier et deuxième vitrages (notamment par un retrait des éléments entre premier et deuxième vitrage tels que le premier intercalaire, le premier isolateur, le deuxième intercalaire).

Le premier (deuxième) support PCB, le support commun PCB peut être un composite de résine (époxy) renforcé de fibres de verre (souvent dit FR-4), métallique (aluminium, cuivre, etc) par exemple d'épaisseur millimétrique, notamment d'au plus 2mm, ou même en dessous du mm et être opaques.

Le premier (deuxième) support PCB peut être fixé (collé) à un élément (profilé) métallique par sa face arrière de préférence par une colle thermique. La première (deuxième) source de lumières (diodes) peut alors être espacée de la première (deuxième) tranche.

Le support PCB commun peut être fixé (collé) à un élément (profilé) métallique par sa face arrière de préférence par une colle thermique. Les sources de lumières (diodes) peuvent alors être espacées des première et deuxième tranches.

La première source de lumière est de préférence un premier ensemble de diodes électroluminescentes -de préférence alignées- sur une carte de circuit imprimé dit premier support PCB (de préférence barrette). premier support PCB et/ou premier ensemble étant collé à la première tranche par une colle optique ou un adhésif double face transparent (de préférence d'épaisseur d'au plus 1mm et même d'au plus ou mieux submillimétrique), surtout lorsque les diodes sont avec une encapsulation primaire ou premier ensemble contre ou espacé de la première tranche d'au plus 5mm et même d'au plus 2mm -par de l'air (ou du vide).

Et la deuxième source de lumière est de préférence un deuxième ensemble de diodes électroluminescentes - de préférence alignées - sur une carte de circuit imprimé dit deuxième support PCB, deuxième support PCB et/ou deuxième ensemble étant collée à la deuxième tranche par une colle optique ou un adhésif double face transparent (de préférence d'épaisseur d'au plus 1mm et même submillimétrique,- surtout lorsque les diodes sont avec une encapsulation primaire-, ou en étant contre ou espacés de la deuxième tranche d'au plus 5mm et même d'au plus 2mm - par un espace, par de l'air (ou du vide).

Les première et deuxième sources de lumière, de préférence premier ensemble de diodes électroluminescentes et deuxième ensemble de diodes électroluminescentes, sont agencés du même côté du vitrage multiple (de l'ensemble vitré), -les première et deuxième tranches étant donc du même côté-, l'ensemble vitré peut comporter un profilé dépassant sur la première face extérieure qui est la première face ou côté première face (et éventuellement dépassant sur la deuxième face extérieure) et en regard des première et deuxième tranches, définissant un volume contenant les première et deuxième sources de lumière (les premier et deuxième supports PCB, et les premier et deuxième ensembles de diodes électroluminescentes)

Ce profilé peut être un simplement encadrement ou servir pour le montage de l'ensemble vitré (intégration) dans le cas d'une cloison, d'une fenêtre, d'une porte de meuble (réfrigéré).

Dans le cas d'un panneau décoratif (mural etc), le vitrage multiple peut être (simplement) le vitrage feuilleté et le profilé, notamment de section en U, comporter :
- une base en regard des première et deuxième tranches (de la tranche du vitrage multiple),
- une première aile fixée à la première face extérieure par collage ou par chaussement
- une deuxième aile fixée à la deuxième face extérieure par collage ou par chaussement.

Le profilé peut aussi être en L (deuxième aile supprimée coté mur).

Ce profilé peut porter les sources de lumière (et leur supports).

Dans le cas d'une cloison, le vitrage multiple peut être (simplement) le vitrage feuilleté et le profilé, notamment de section ou U, comporter :
- une base en regard des premières et deuxième tranches (de la tranche du vitrage multiple), collé, contre ou espacé de la partie de fond,
- une première aile fixée à la première face extérieure - liée par un joint d'étanchéité à la première face extérieure et espacée de la partie latérale
- une deuxième aile liée par un joint d'étanchéité à la deuxième face extérieure, et amovible (pare close).

La base peut être espacée de préférence d'au plus 3cm et même d'au plus 1cm de la première tranche (et de la deuxième tranche).

La première aile peut être métallique et avec un revêtement opaque (ruban adhésif monoface, dépôt, de préférence noir), revêtement interne c'est-à-dire coté première source de lumière. Et la deuxième aile peut être métallique et avec un revêtement opaque (ruban adhésif monoface, dépôt, de préférence noir), revêtement interne c'est-à-dire coté deuxième source de lumière.

Pour le panneau décoratif mural il n'est pas nécessaire de voir le double éclairage des deux côtés. Aussi, une surface réfléchissante peut être en contact optique avec la deuxième face extérieure. Il peut s'agir d'une argenture sur la deuxième face extérieure. On forme ainsi un miroir éclairant.

Une cloison éclairante de l'invention est destinée à tout type d'utilisation en extérieur et/ou intérieur, dans un bâtiment ou dans un véhicule (notamment de transport...) dans un espace public, telle qu'une séparation entre pièces, compartiment, une séparation à l'intérieur d'une même pièce, pour constituer une porte, une vitrine, un comptoir, un dispositif de décoration d'intérieur, un garde-corps, un produit d'ameublement, un luminaire sur pied en particulier à forme parallélépipédique, etc...

Par ailleurs, l'ensemble vitré, notamment la cloison est de préférence transparente hors de moyens d'extraction de la lumière. Eventuellement le vitrage multiple est dotée sur la première ou deuxième face principale extérieure d'un revêtement semi réfléchissant, type miroir espion par exemple tel le produit commercialisé sons le nom Mirastar de la Demanderesse, miroir par exemple partiel entre les motifs d'extraction s'ils sont situés sur la même face extérieure ou miroir entre et sur les motifs d'extraction..

Il est à noter que le profilé additionnel n'est pas forcément fixé au sol mais pourrait être fixé sur une autre surface d'accueil.

Par ailleurs la cloison n'est pas forcément fixe, elle peut être mobile par rapport à sa surface d'association (sol, plafond etc).

Dans une configuration de double vitrage (isolant) ou triple vitrage (isolant), on préfère prémonter les sources de lumière avant l'installation d'un profilé additionnel, généralement en cadre.

Aussi le vitrage multiple peut former un vitrage isolant et comporte un troisième vitrage ayant une troisième face principale et une quatrième face principale (la plus extérieure si double vitrage isolant) et une troisième tranche, les deuxième face et troisième faces étant espacées par une première lame de gaz, et en périphérie des deuxième et troisième faces un premier joint polymérique en cadre, et même encore comporte une quatrième feuille en verre avec des cinquième et sixième faces, espacée du deuxième vitrage coté quatrième face par une deuxième lame de gaz et en périphérie des quatrième et cinquième faces un deuxième joint polymérique en cadre et un intercalaire.

Les première et deuxième sources de lumière, sont agencés du même côté du vitrage multiple (de l'ensemble vitré). L'ensemble vitré comporte un profilé dit de positionnement, de préférence interne à un profilé additionnel par-dessus notamment de montage de l'ensemble vitré (profilé de porte de meuble réfrigéré, de fenêtre,...), de préférence métallique, comporte :
- une partie dite de fond de préférence métallique en regard de la tranche du vitrage multiple incluant des première et deuxième tranches et une tranche dite centrale -de préférence portant premier et deuxième support PCB et avec diodes à émission par le haut ou portant support PCB commun-
- une première partie latérale collée ou contre la première face extérieure en créant une surépaisseur d'au plus 1,5mm et même d'au plus 1mm, par exemple une feuille métallique ou un élément opaque (ruban adhésif monoface par exemple de préférence noir) collée à la partie de fond et à la première face extérieure (de préférence qui est à la première face), notamment la partie de fond et la première partie latérale formant une section en L
- soit une partie (rendue) opaque (pièce avec revêtements opaques sensiblement parallèles au plan du vitrage multiple) formant cloisonnement (commun) de la lumière des première et deuxième sources de lumière et contre la tranche centrale (entre face interne et face de collage) ou espacé de moins de 1mm - de préférence premier ensemble de diodes électroluminescentes et deuxième ensemble de diodes électroluminescentes- fixée sur la pièce de fond ou monolithique avec la partie de fond; soit un cloisonnement opaque (pièce avec revêtements opaques parallèles au plan du vitrage multiple) de la lumière des première et deuxième sources de lumière distinct du profilé de positionnement et contre la tranche centrale (par exemple sur support PCB notamment commun) ou espacé de moins de 1mm, notamment la partie de fond, la première partie latérale et la partie formant cloisonnement formant une section en F.

L'ensemble vitré comporte en outre une pièce, dite de fixation, adjacente et longeant la deuxième tranche, fixée au premier joint polymérique par tout moyen de fixation (mécanique, colle, adhésif double face) et solidaire voire même monolithique avec la partie de fond, notamment partie de fond qui est un décrochement latéral de la pièce de fixation. La pièce de fixation notamment métallique peut avoir un revêtement opaque coté deuxième source de lumière, par exemple un ruban adhésif noir monoface.

La partie de fond peut être espacée de préférence d'au plus 3cm et même d'au plus 1cm de la première tranche. La partie de fond peut être épaisse d'au plus 5mm et même 3mm.

Et le profilé additionnel éventuel comporte :
- une base (métallique, plastique ou une partie de base métallique prolongée par une partie de base plastique) en regard des premières et deuxième tranches (de la tranche du vitrage multiple), collée, contre ou espacée de la partie de fond,
- une première aile (métallique) fixée à la première face extérieure, et au-dessus de la première partie latérale et avec une portion dépassante de la première partie latérale vers le centre du vitrage multiple-, fixée de préférence par une colle dite de montage (opaque, noire le plus souvent), la colle de montage éventuelle étant absente de la région entre la première tranche et première source de lumière, et entre la deuxième tranche et deuxième source de lumière, notamment base et première aile formant une section en L, et même entre la première face extérieure et la portion dépasssante
- et éventuellement avec une deuxième aile (plastique, extension de la deuxième partie de base plastique) collée à la deuxième face extérieure, notamment base, première aile et deuxième aile formant une section en U.

La base peut être espacée de préférence d'au plus 3cm et même d'au plus 1cm de la première tranche (et de la deuxième tranche).

Le profilé additionnel collé au vitrage isolant est en particulier un profilé de porte de meuble réfrigéré.

On connaît un vitrage isolant destiné à l'ouvrant d'un meuble réfrigéré, meuble dans lequel sont exposés des produits froids ou surgelés, tels que des produits alimentaires ou boissons, ou tous autres produits nécessitant une conservation dans le froid, par exemple des produits pharmaceutiques ou même des fleurs. Le vitrage isolant est constitué d'au moins deux vitrages séparés par une lame de gaz et pourvus pour au moins l'un d'eux d'un revêtement bas émissif.

Lorsque des produits conservés dans le meuble réfrigéré doivent rester visibles comme c'est le cas dans de nombreux locaux commerciaux actuels, on équipe le meuble réfrigéré de parties vitrées qui la transforment en une " vitrine " réfrigérée dont la dénomination commune est " meuble frigorifique de vente ". Il existe plusieurs variantes de ces " vitrines ". Certaines ont la forme d'armoire et alors, c'est la porte elle-même qui est transparente, d'autres constituent des coffres et c'est le couvercle horizontal (porte à l'horizontale) qui est vitré pour permettre l'observation du contenu.

La première source (diodes sur premier support PCB) peut être fixée au premier vitrage via le profilé de positionnement. Et mieux la deuxième source (diodes sur deuxième support PCB) peut être fixée au deuxième vitrage via le profilé de positionnement.

Alternativement (ou cumulativement), la première source (diodes sur premier support PCB) peut être fixée à la première tranche par des moyens adhésifs (déjà précités), en étant espacé du profilé de positionnement. Ce profilé de positionnement peut alors servir de protection contre la colle de montage du profilé de positionnement et/ou de protection mécanique lors de l'ajout du profilé additionnel. Et même, la deuxième source (diodes sur deuxième support PCB) peut être fixée à la deuxième tranche par des moyens adhésifs (déjà précités), en étant espacé du profilé de positionnement. Ce profilé de positionnement peut alors servir de protection contre la colle de montage du profilé de positionnement et/ou de protection mécanique lors de l'ajout du profilé additionnel.

Pour ne pas créer de pont thermique, la pièce de fixation choisie métallique (tout comme la pièce de fond et la première partie latérale de préférence) n'est pas en contact à la fois avec le deuxième vitrage et le troisième vitrage.

Pour ne pas créer de pont thermique, de préférence :
- la première aile (collée de préférence par la colle de montage souvent opaque à la première face extérieure au-dessus de la première partie latérale) est en un premier matériau de préférence métallique, la base est en ledit premier matériau dans une première zone en regard des premier et deuxième vitrages et dans une deuxième zone en regard du troisième vitrage en un deuxième matériau, premier matériau solidaire par des moyens de collage au deuxième matériau,
- et une deuxième aile éventuelle dépasse sur la deuxième face extérieure en le deuxième matériau, et collée de préférence par la colle de montage à la deuxième face extérieure,
- l'un des premier et deuxième matériaux étant métallique, l'autre étant isolant thermique (plastique).

En l'absence de deuxième aile (ou avec une deuxième aile trop courte), la deuxième face extérieure peut comporter des moyens de masquage du premier joint (et de l'espaceur, généralement métallique, accolé), moyens de masquage de préférence en matière minérale, comme un émail, de densité optique d'au moins 2 et même d'au moins 2,5.

Pour la matière du premier joint (assurant la tenue mécanique du vitrage et l'étanchéité à l'eau), de préférence noir, on choisit de préférence :
- du polyuréthane (bi-composant),
- du polysulfure (bi-composant),
- du silicone
- une matière thermofusible (monocomposant).

Le profilé additionnel peut être un cadre de préférence en plusieurs pièces (coudées, aboutées notamment aux coins du vitrage isolant, en biseau...)

L'invention porte naturellement aussi sur une porte de meuble réfrigéré professionnel (froid positif, froide négatif) comportant un ensemble vitré lumineux tel que décrit précédemment et sur le meuble réfrigéré avec une telle porte.

Si la porte est un couvercle de coffre réfrigéré en particulier, les vitrages peuvent être bombés aussi on préfère que le profilé additionnel soit en matière flexible pour s'adapter aux courbures.

De préférence la première tranche est le premier bord longitudinal du vitrage multiple (la deuxième tranche ce même bord ou le deuxième bord longitudinal) et vertical après installation de la porte.

La porte est de préférence ouvrante (vers extérieur du meuble) et comporte pour ce faire un pivot sur le haut du profilé additionnel supérieur.

Dans certaines applications, Il n'est pas toujours nécessaire de voir le double éclairage des deux côtés ou du moins l'ensemble du double éclairage. Aussi, une surface réfléchissante peut être en contact optique avec la deuxième face extérieure congruente avec premier et/ou deuxième motifs d'extraction. Il peut s'agir d'une argenture sur la deuxième face extérieure ou un film réflecteur collé.

Le meuble réfrigéré peut comprendre deux portes vitrées ou plus.

Naturellement le vitrage isolant peut comprendre comme couche à fonction thermique comme une couche basse émissive ou « low E » (empilement à l'argent, de préférence une seule couche d'argent), de préférence sur la troisième face dans une version double vitrage ou triple vitrage et même sur la cinquième face pour le triple vitrage.

Dans l'application porte de meuble réfrigéré commercial, la première face extérieure est de préférence la face principale verrière la plus proche de l'usager (à l'opposé de l'intérieur du meuble).

Un profilé de positionnement, voire de fixation au vitrage multiple, de la première (et/ou deuxième) source de lumière à la première (et/ou deuxième) tranche peut être
- rectangulaire (barrette)
- ou de section en T, ou U
- ou mieux en E avec la branche centrale du E distante (espacée) de l'ensemble vitré de moins de 1mm ou même s'étendant dans une gorge entre les premier et deuxième vitrages, pour cloisonner la lumière

Dans une configuration où les première et deuxième sources de lumière sont sur des côtés opposés, le deuxième vitrage (en étant de préférence de taille identique ou similaire du premier vitrage) dépasse de la première tranche formant une première zone dépassante et de préférence le premier vitrage dépasse de la deuxième tranche formant une deuxième zone dépassante et la première source de lumière sur un premier support qui est lié à la première zone dépassante et/ou dans la première zone dépassante et ne dépassant pas de la deuxième tranche et de préférence la deuxième source de lumière est sur un deuxième support, qui est lié à la deuxième zone dépassante et/ou est dans la deuxième zone dépassante et ne dépassant pas de la première tranche.

Le support de diodes au moins (voire les puces) est pourvu, avantageusement avant son intégration dans le vitrage (lors de leur fabrication...), d'au moins une couche de protection mono ou multicouche) contre l'humidité et/ou d'une encapsulation telle qu'un vernis de type silicone, époxy ou acrylique.

Plus précisément, la couche de protection protège au moins circuit imprimé, soudures, connecteurs si pas étanches.

Les diodes (au moins la face émettrice) sont de préférence pas protégées ainsi si déjà recouvertes (pré encapsulées) de silicone.

On protège les barrettes de LEDs avant de les intégrer dans le logement). La protection peut être du type vernis de protection (silicone, epoxy, acrylique...), encapsulation ou « potting » de la barrette de LEDs (silicone, epoxy, acrylique...).

On peut citer les vernis de tropicalisation vendu par Syneo, avec une base acrylique ou PU ou Silicone et couche de 3M « Novec Electronic coating EGC 1700 ».

On peut citer le vernis de protection Abchimie. La dépose est par immersion, dépose sélective ou vaporisation (couches de 25-50 microns).

De préférence, la distance entre la face émettrice ou zone émettrice (espacée ou non de la tranche) et la tranche d'injection peut être inférieure à 2 mm,

Les diodes peuvent être (pré) encapsulées, c'est-à-dire comprenant une puce semi-conductrice et une enveloppe, par exemple en résine type époxy ou en PMMA, encapsulant la puce et dont les fonctions sont isolants : élément diffusant ou de focalisation, conversion de longueur d'onde. L'enveloppe est commune ou individuelle.

Les diodes peuvent être de préférence simples puces semi-conductrices par exemple de taille de l'ordre de la centaine de µm ou du mm.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le profilé support de diodes peut être un PCB classique ou être métallique.

Le profilé support de diodes peut avoir une section rectangulaire.

Le nombre total de diodes, la puissance des diodes sont choisies par la taille et la localisation des zones à éclairer, par l'intensité lumineuse souhaitée et l'homogénéité de lumière requise.

La longueur du profilé support de diodes varie en fonction du nombre de diodes et de l'étendue de la surface à éclairer.

Les moyens d'extraction de la lumière guidée sont des moyens de diffusion en surface en volume du vitrage en jeu.

Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

Les particules diffusantes peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

La distance de la face émettrice et de la première feuille peut être inférieure à 2mm. Notamment, on peut utiliser des diodes d'encombrement réduit par exemple des puces sans lentille et/ou sans pré-encapsulation notamment de largeur de l'ordre de 1mm, de longueur de l'ordre de 2,8mm, de hauteur de l'ordre de 1,5mm.

La lumière de chaque source peut être :
- continue et/ou par intermittence,
- monochromatique et/ou plurichromatique.

La première surface d'extraction (zone lumineuse) peut s'étendre en s'éloignant de la première tranche, selon par exemple au moins une bande ou un dessin. La deuxième surface d'extraction (zone lumineuse) peut s'étendre en s'éloignant de la deuxième tranche, selon par exemple au moins une bande ou un dessin.

L'ensemble première et deuxième surface d'extraction peut former un logo lumineux bicolore, une signalétique.

Dans une réalisation, l'ensemble vitré comporte :
- une zone transparente au travers du vitrage multiple -donc dénuée des premiers et deuxièmes moyens d'extraction - (la première surface d'extraction et la deuxième surface d'extraction couvrant partiellement les premier et deuxième vitrages) et de préférence les tranches en regard de la zone transparente sont dénuées de sources de lumière
- et/ou la première surface d'extraction présente (préserve) une transparence globale (vision à travers de l'ensemble vitré) par exemple formée de motifs espacés entre 2mm et 4mm et de largeur d'au plus 5cm, ou 3cm et même 5mm (motifs discrets pour une lumière uniforme par exemple).

La zone transparente et l'ensemble des zones transparentes peut occuper au moins 20% de la surface du premier vitrage ou même au moins 50%.

De préférence la TL dans la zone transparente est d'au moins 85% et même d'au moins 88%. Le flou est de préférence d'au plus 2,5%.

On peut (même en l'absence de zone transparente donc zone sans motifs d'extraction) souhaiter que la taille et l'espacement de certains ou de tous les premiers motifs d'extraction sont ajustés pour une transparence globale de tout ou partie de la première surface d'extraction. La taille et l'espacement sont ajustés en fonction de l'étendue de la première surface d'extraction avec ces premiers motifs.

On peut en outre souhaiter que la taille et l'espacement de certains ou de tous les deuxièmes motifs d'extraction sont ajustés pour une transparence globale de tout ou partie de la deuxième surface d'extraction.

La tranche opposée à la première tranche peut être polie (et droite) ou diffusante. La tranche opposée à la deuxième tranche peut être polie ou diffusante. De préférence, pour une application où les tranches opposées sont visibles (sans profilé de montage, de fixation, les masquant), les première et deuxième tranches sont du même côté de l'ensemble vitré et même sont alignées et même les tranches opposés ne sont pas couplées optiquement.

L'ensemble vitré en particulier peut comprendre :
- une troisième source de lumière identique à la première source de lumière et en regard, synchronisée avec la première source, pilotée (de préférence) en dynamique, sur la tranche opposée à la première tranche notamment si la première surface d'extraction présente une dimension caractéristique suivant l'axe de propagation de la lumière d'au moins 450mm (s'éloignant de la première source)
- et de préférence comprend une quatrième source de lumière identique à la deuxième source de lumière et en regard, synchronisée avec la deuxième source pilotée de préférence en dynamique, sur la tranche opposée à la deuxième tranche notamment si la deuxième surface d'extraction présente une dimension caractéristique suivant l'axe de propagation de la lumière d'au moins 450mm (s'éloignant de la deuxième source).

Dans ce dernier cas, comme la première source, la troisième source est de préférence cachée par un profilé et le cas échéant comme la deuxième source, la quatrième source est cachée par un profilé.

En particulier, l'ensemble vitré comprend un cadre de montage par exemple un profilé métallique ou plastique (rigide), en polychlorure de vinyle (PVC), ou bois et/ou de section en U et les sources de lumières sont dans le volume intérieur entre le cadre de montage et les tranches sur les deux montants verticaux fixées au cadre ou fixées au vitrage par la tranche (par un profilé de fixation par exemple).

Les surfaces d'extraction peuvent être de forme et taille diverses. La première surface d'extraction peut comporter un seul motif de préférence diffusant par exemple plein, fermé et même évidé ou comme un anneau. Dans le creux (évidement) on préfère que le premier isolateur optique soit en regard de la face interne.

Les motifs d'extraction, diffusants sont par exemple géométriques : bande rectiligne ou courbée, des ronds concentriques, des L. etc. Les motifs sont identiques ou distincts, parallèle entre eux ou non, avec une distance entre eux identiques ou non.

Pour l'extraction de la lumière on emploie de préférence des moyens de diffusion, formés soit par un traitement superficiel du verre du type sablage, attaque acide, dépôt d'émail ou de pâte diffusante, soit par un traitement dans la masse du verre de type gravure laser.

Pour l'extraction de la lumière on emploie des moyens de diffusion, par exemple formés soit par un traitement superficiel de la feuille de verre du type sablage, attaque acide, dépôt d'émail ou de pâte diffusante ou de peinture, soit par un traitement dans la masse du verre de type gravure laser.

Selon une caractéristique, les premiers (et/ou deuxième) moyens d'extractions sont une couche diffusante blanche, notamment un émail ou une peinture, en présentant une clarté L* d'au moins 50. La couleur est définie de manière connue par les paramètres L*, a* et b* et est mesurée par un spectrocolorimètre.

La densité optique d'une couche diffusante (émail, peinture, encre..), notamment blanche, pour les premiers et/ou deuxièmes moyens d'extraction peut être inférieure à 2,5 à 2 même inférieure à 1,5 ou encore inférieure à 1.

La couche diffusante, notamment émail, peut être une couche continue en surface, de largeur inférieure à 200 mm, voire à 100 mm et encore plus préférentiellement inférieure ou égale à 50 mm, ou être discontinue et formée d'un ensemble de motifs fins.

Dans un mode de réalisation préféré, la couche diffusante (tout ou partie des moyens d'extraction) est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes

Selon une caractéristique, l'émail d'extraction présente la composition suivante :
- entre 20 et 60 % en poids de SiO₂,
- 10 à 45 % en poids de pigments réfractaires, notamment de Ti0₂, notamment de taille micronique,
- de préférence pas plus de 20 % en poids d'alumine et/ou d'oxyde de zinc.

Les pigments TiO₂ rendent l'émail suffisamment opaque (pour visualiser l'émail à l'état off) et abaissent la TL. Des exemples de composition d'émail d'extraction peuvent être l'émail sous la dénomination Ferro 194011 commercialisé par l'entreprise FERRO, la référence AF5000 commercialisé par la société JM, la référence VV30-244-1 commercialisé par Pemco sont très blancs avec une brillance supérieure à 20 et présentent une transmission lumineuse basse, inférieure à 40 %.

De préférence il s'agit d'une pluralité de motifs et de préférence diffusants (de préférence par une couche diffusante discontinue).

Les premiers moyens d'extraction peuvent être comme déjà vu un ensemble de motifs diffusants qualifié de réseau diffusant tout particulièrement pour une zone lumineuse de grande taille souhaitée la plus uniforme possible.

De préférence, le premier (resp. deuxième) vitrage revêtu des premiers (resp. deuxième) moyens d'extraction diffusants, notamment émail, présente une transmission lumineuse inférieure à 45% voire à 40% ou même à 35% du côté première face (resp. deuxième face).

Les premiers moyens d'extraction, notamment émail, s'étendent, par exemple sur la totalité d'une face du verre, de manière discontinue ou selon des formes géométriques éparses aux lignes courbes et/ou droites. Les moyens d'extraction sont par exemple à géométrie fractale.

Selon une autre caractéristique, les premiers moyens d'extraction s'étendent de manière discontinue et délimite des zones sombres notamment des motifs de formes géométriques éparses aux lignes courbes et/ou droites, notamment de longueur (plus grande dimension) au moins centimétrique.

Les premiers motifs, identiques ou distincts par exemple sont en creux, graphique, caractère lettre (avec signe diacritique), chiffre, alphanumérique, ponctuation, symbol, arrangée en cadre et/ou en bande).

La première surface d'extraction peut être de contour droit ou courbe, peut être géométrique (rectangulaire) peut être de largeur inférieure au premier vitrage et de hauteur ou longueur (suivant la première tranche) inférieure à la hauteur ou longueur du premier vitrage.

Il est en de même pour la deuxième surface d'extraction.

De préférence, le premier vitrage (comme le deuxième vitrage) est de type rectangulaire et de largeur perpendiculaire au sol une fois monté.

La première surface d'extraction peut comporter :
- un premier réseau de motifs diffusants ponctuels, notamment géométriques (carré, ronds etc) et notamment de même forme, de largeur l₁ d'au plus 1cm (largeur, selon l'axe de propagation de la lumière), mieux d'au plus 5mm et même d'au plus 2,5mm éventuellement variable (plus grand en s'éloignant de la première source si pas de source de lumière à l'opposé) et espacés d'un pas p₁ d'au plus 1cm, mieux d'au plus 5mm éventuellement variable (plus petit en s'éloignant de la première source si pas de source de lumière à l'opposé), notamment largeur et pas adaptés pour une transparence globale (au sens vision au travers du premier vitrage, dans cette première surface d'extraction),
- et/ou un premier motif diffusant décoratif de largeur l₂ (largeur, selon l'axe de propagation de la lumière) centimétrique et d'au plus 5 cm mieux d'au plus de préférence entouré (même entrelacé) avec le premier réseau,
- et/ou un premier ensemble diffusant de caractères tel qu'un LOGO et/ou tels que de lettres et/ou chiffres, chacun de largeur l₃ centimétriques (largeur selon l'axe X de propagation de la lumière) et d'au plus 5 cm mieux d'au plus espacés d'un pas p₃ d'au plus 1cm, mieux d'au plus de 5mm de préférence entouré par le premier réseau de motifs diffusants ponctuels.

Et la deuxième surface d'extraction décalée peut comporter :
- un deuxième réseau de motifs diffusants ponctuels, notamment géométriques (carré, ronds etc) et notamment de même forme, de largeur l'₁ d'au plus 1cm mieux d'au plus 5mm et même d'au plus 2,5mm (largeur, selon l'axe de propagation de la lumière) éventuellement variable (plus petit en s'éloignant de la deuxième source si pas de source à l'opposé) et espacés d'un pas p'₁ d'au plus 1cm mieux d'au plus 5mm éventuellement variable (plus grand en s'éloignant de la deuxième source si pas de source à l'opposé), notamment largeur et pas adaptés pour une transparence globale (au sens vision au travers du deuxième vitrage, dans cette deuxième surface d'extraction),
- et/ou un deuxième motif diffusant décoratif de largeur l'₂ (largeur, selon l'axe de propagation de la lumière) centimétrique et d'au plus 5 cm de préférence entouré (même entrelacé) avec le deuxième réseau,
- et/ou un deuxième ensemble diffusant de caractères tel qu' un LOGO et/ou tels que de lettres et/ou chiffres, chacun de largeur l'₃ centimétriques (largeur selon l'axe X de propagation de la lumière) et d'au plus 5 cm espacés d'un pas p'₃ d'au plus 1cm, même d'au plus 5mm de préférence entouré par le deuxième réseau de motifs diffusants ponctuels).

Comme source de lumière distincte d'un ensemble de diodes on peut choisir une fibre optique extractrice, avec une face émettrice latérale (couplée à une source de lumière primaire qui est typiquement une diode). On utilise par exemple la fibre optique de 3M dite 3M™ Précision Lighting Elements.

Comme premier intercalaire de feuilletage et mieux tous les intercalaires de feuilletage, on peut choisir notamment une feuille de matière thermoplastique en éthylène vinylacétate (EVA) ou encore en polyuréthane (PU), en polyvinylbutyral (PVB). On préfère une telle feuille à résine pluri ou mono-composants réticulable thermiquement (époxy, PU) ou aux ultraviolets (époxy, résine acrylique).

Le premier intercalaire de feuilletage est par exemple submillimétrique, en une ou plusieurs feuilles à l'assemblage. Le premier intercalaire de feuilletage (et mieux tous les intercalaires de feuilletage) peut être clair, extraclair, et être neutre en couleur.

Le premier intercalaire de feuilletage est choisi de préférence parmi EVA et PVB. On préfère que chaque intercalaire de feuilletage ait un flou (mesuré classiquement au hazemeter) d'au plus 1,5% et même d'au plus 1% comme par exemple un EVA ou un PVB. Cela réduit le caractère diffusant entre les motifs d'extraction, dans la ou les zones transparentes. Pour l'EVA ou le PVB n3 (n'3) typiquement est autour de 1,49.

Le premier isolateur optique (et de préférence le deuxième) est de préférence un élément plan (ou suivant la courbure du premier vitrage). Il peut être de préférence continu mais peut être en plusieurs morceaux, de même matière, voire de matière distincte.

Le premier isolateur optique (respectivement le deuxième isolateur optique) peut être un élément (film) rapporté ou une couche déposée (un dépôt).

Dans un premier mode de réalisation, le premier isolateur optique selon l'invention comprend (mieux est constitué de) un premier film à base de fluoropolymère, mieux en fluoropolymère notamment d'épaisseur e2 d'au moins 600nm, mieux micronique et même d'au moins 10µm ou 50µm. De préférence le deuxième isolateur optique selon l'invention comprend (mieux est constitué de) un autre film à base de fluoropolymère, mieux en fluoropolymère notamment d'épaisseur e'2 d'au moins 600nm, mieux micronique et même d'au moins 10µm ou 50µm et identique au premier film fluoropolymère.

Le film fluoropolymère bas indice permet une mise en oeuvre simple, une souplesse de design (par simple découpage du film) et pour toute taille (grande surface comprise).

Le premier intercalaire de feuilletage, de préférence en EVA, procure une tenue mécanique du premier film pour un contact optique satisfaisant.

On préfère distinguer dans le produit final, le film de fluoropolymère bas indice (assemblé via le premier intercalaire) d'une couche ou dépôt de fluoropolymère, déposée par voie liquide. Une couche de fluoropolymère nécessite d'utiliser des solvants spéciaux et l'adhésion peut être très problématique.

Pour le feuilletage on peut utiliser un cycle thermique classique et même mieux celui utilisé pour le vitrage feuilleté renfermant de films plastiques (poly(téréphtalate d'éthylène) dit PET etc).

De préférence, n2 peut être inférieur ou égal à 1,45 voire inférieur ou égal à 1,4.

Le premier isolateur optique de préférence est constitué du premier film bas indice.

Par simplicité, le premier film bas indice s'étend sur l'ensemble du premier intercalaire de feuilletage lui-même s'étendant sensiblement sur l'ensemble du premier vitrage en étant éventuellement en retrait de la première tranche par exemple absent dans la zone anti mélange précitée.

De préférence, le premier intercalaire de feuilletage (et même le premier film bas indice) est en retrait de la première tranche, laissant une zone (ou bande) périphérique libre, restant en contact avec l'air. Le support de la première source de lumière (notamment un PCB ou un support de PCB) peut être agencé en regard de cette zone périphérique.

Le premier film en fluoropolymère (et le cas échéant le deuxième) peut être à base voire en l'une des matières suivantes :
- le perfluoroalkoxy dit PFA, notamment de n2 d'environ 1,3
- le poly(vinylidène fluoride) dit PVDF, notamment de n2 d'environ 1,4
- l'éthylène Chlorotrifluoroéthylène dit l'ECTFE
- l'éthylène tétrafluoroéthylène dit l'ETFE , plus précisément poly(éthylène-co- tétrafluoroéthyléne, notamment de n2 d'environ 1,4
- le copolymère Ethylène Propylène perfluoré dit FEP ou (Fluorinated Ethylene Propylene en anglais) notamment de n2 d'environ 1,3
- le polytétrafluoroéthylène dit PTFE notamment de n2 d'environ 1,3, mais qui est le plus difficile à laminer.

L'ETFE est préféré car il est le plus facile à laminer sur le premier intercalaire de feuilletage thermoplastique. On préfère qu'il ait un flou d'au plus 2%. Le FEP peut être préféré pour son plus faible indice de réfraction ou un flou plus faible d'au plus 2% avec un laminage acceptable.

Il existe des polysiloxanes comme autre bas indice mais leurs propriétés mécaniques sont insuffisantes.

Un film fluoropolymère est aisément disponible à partir de 50 µm.

Pour un meilleur assemblage au verre, le premier film bas indice peut présenter des surfaces principales traitées par traitement de surface promoteur d'adhésion, de préférence un traitement corona.

Si le deuxième isolateur optique est distinct du premier on préfère choisir également un film bas indice identique ou similaire.

Dans un mode de réalisation préféré, on peut avoir la séquence suivante sur l'épaisseur de l'ensemble vitré dans une zone avec première et deuxième surfaces d'extractions:
- premier vitrage/premiers moyens d'extraction en couche diffusante /premier intercalaire de feuilletage (de préférence EVA)/premier isolateur optique en film bas indice /deuxième intercalaire de feuilletage (de préférence EVA)/ / deuxièmes moyens d'extraction en couche diffusante décalés des premiers moyens d'extraction/deuxième vitrage,
et même en particulier les première et deuxième sources de lumière sont du même côté (et même première et deuxième tranche alignées), mieux des ensembles de diodes.

Dans un autre mode de réalisation d'isolateur optique selon l'invention, le premier isolateur optique comprend (mieux est constitué de) une première couche de silice poreuse d'épaisseur e2 d'au moins 400nm située sur une face principale d'un autre vitrage transparent, en verre minéral, orientée côté face interne.

En outre, le deuxième isolateur optique peut de préférence comprendre (mieux être constitué de) une deuxième couche de silice poreuse d'épaisseur e'2 (d'au moins 400nm).

Le premier isolateur optique peut comprendre sur une face principale d'un autre vitrage transparent orientée côté face interne, en verre minéral, une première couche de silice poreuse d'épaisseur e2 d'au moins 400nm et de préférence revêtue d'un premier revêtement de protection minéral et transparent, qui est de préférence une couche de silice d'épaisseur e4 supérieure à 50nm et de préférence supérieure à 100nm et avec un indice de réfraction n4 d'au moins 1,4 à 550nm. Et l'ensemble vitré peut comprendre également, sur une autre face principale de l'autre vitrage orientée côté face de collage, une deuxième couche de silice poreuse d'épaisseur e'2 d'au moins 400nm formant deuxième isolateur optique revêtue d'un deuxième revêtement de protection minéral et transparent, qui est de préférence une couche de silice d'épaisseur e'4 supérieure à 50nm et de préférence supérieure à 100nm et avec un indice de réfraction n'4 d'au moins 1,4 à 550nm.

n2 (dans l'ensemble du spectre visible) peut être d'au plus 1,35, de préférence d'au plus 1,25 et même inférieur à 1,2. Il en est de même pour n'2.

On peut utiliser seulement la première couche sol gel poreuse avec son revêtement de protection (de préférence) mais étant donné l'épaisseur - notamment millimétrique- de l'autre verre « central » on augmente le trajet des rayons guidés et cela peut diminuer l'efficacité d'extraction.

Le document WO2008/059170 propose d'utiliser une couche poreuse bas indice comme isolateur optique dans un vitrage feuilleté éclairant à diodes. Cette couche isole optiquement le premier vitrage du deuxième vitrage teinté le plus extérieur. On peut reprendre les conditions de fabrication décrites en ajustant e2 (e'2).

Pour une isolation optique tenant compte de l'épaisseur de peau, on préfère que
- lorsque n2 (n'2) est inférieur ou égal à 1,3, e2 (e'2) est d'au moins 600nm,
- lorsque n2 (n'2) est inférieur ou égal à 1,25, e2 (e'2) est d'au moins 500nm,
- lorsque n2 (n'2) est inférieur ou égal à 1,2, e2 (e'2) est d'au moins 400nm.

Par sécurité on choisit e2 (e'2) d'au moins 600nm et même d'au moins 700nm ou même d'au moins 800nm.

La couche de silice poreuse peut être un empilement compact de nanoparticules de silice, par exemple obtenue par voie sol-gel, ou de préférence, une couche de silice comportant une matrice de silice (autrement appelée réseau de silice) contenant des pores et de préférence obtenue par voie sol-gel. On préfère tout particulièrement une couche poreuse comportant une phase solide (essentiellement) continue, formant ainsi les murs denses des pores, plutôt qu'une phase solide principalement sous forme de (nano)particules ou de cristallites.

Pour fabriquer la couche sol gel poreuse, il existe différents agents porogènes. Le document EP1329433 divulgue ainsi une couche de silice poreuse élaborée à partir d'un sol de tétraéthoxysilane (TEOS) hydrolysé en milieu acide avec un agent porogène à base de polyéthylène glycol tert phényle éther (dit Triton) à une concentration entre 5 et 50 g/l. La combustion de cet agent porogène à 500°C libère les pores. Cet agent porogène non localisé est de forme indéterminée et se répand dans la structure de façon incontrôlée.

D'autres agents porogènes connus tels que des micelles de molécules tensioactives cationiques en solution et, éventuellement, sous forme hydrolysée, ou de tensioactifs anioniques, non ioniques, ou des molécules amphiphiles, par exemple des copolymères blocs. De tels agents génèrent des pores sous forme de canaux de petite largeur ou des pores plus ou moins ronds de petite taille entre 2 et 5 nm.

On préfère une couche de silice poreuse obtenue avec un agent porogène particulaire comme des billes polymériques qui permet quant à lui une meilleure maîtrise de la taille des pores, notamment l'accès à des grandes tailles, une meilleure maîtrise de l'organisation des pores notamment une distribution homogène, ainsi qu'une meilleure maîtrise du taux de pores dans la couche et une meilleure reproductibilité. Les billes polymériques peuvent être un coeur polymérique et une écorce minérale.

La plus petite dimension caractéristique des pores peut être encore plus préférentiellement supérieure ou égale à 30 nm et de préférence inférieure à 120 nm mieux à 100 nm. Et de préférence également, la plus grande dimension caractéristique des pores peut être encore plus préférentiellement supérieure ou égale à 30 nm et de préférence inférieure à 120 nm mieux à 100 nm.

Le facteur de forme plus grande dimension divisé par plus petite dimension peut être inférieur à 2 et même à 1,5.

Dans un mode de réalisation préféré, la couche de silice poreuse est une matrice de silice avec des pores fermés (de préférence délimités par les parois de la silice) en volume, et en particulier une porosité ouverte en surface, notamment pores fermés de forme sensiblement ovale ou sensiblement sphérique, chacun de plus petite dimension d'au moins 30nm et de plus grande dimension d'au plus 120nm, de préférence entre 75nm et 100nm.

La couche poreuse à pores fermés en volume est mécaniquement stable, elle ne s'effondre pas même pour des fortes concentrations de pores. Les pores peuvent être aisément séparés les uns des autres, bien individualisés.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

La majorité des pores fermés, (voire entre 80% ou même 95% ou mieux tous), peuvent avoir de préférence une plus petite dimension caractéristique, et de préférence une plus grande dimension également, entre 75 et 100nm.

Dans la couche poreuse, les pores peuvent être de dimensions différentes, bien que ce ne soit pas préféré.

La porosité peut être en outre monodisperse en taille, la taille des pores étant alors calibrée à une valeur minimale de 30nm, de préférence 40nm encore plus préférentiellement 50nm et de préférence inférieure à 120nm.

La fraction volumique de pores peut être de préférence supérieure à 50% et même à 65% et de préférence inférieure à 85%.

Il doit être noté cependant que la fraction volumique maximale de 74 % est la valeur maximale théorique appliquée à un empilement de sphères de dimension identique, quelle qu'elle soit.

La Demanderesse a constaté qu'en appliquant (directement) la première couche de silice poreuse sur le premier intercalaire de feuilletage sur sa fonction d'isolateur optique était affectée. Il est probable que les pores, en particulier ceux ouverts en surface, de la couche poreuse soient pollués au moment de la fabrication et que les polluants restent piégés dans les pores même après un traitement thermique (pour le feuilletage).

Aussi de manière avantageuse, la première couche de silice poreuse est revêtue d'un premier revêtement de protection minéral et transparent, qui de préférence une couche de silice d'épaisseur e4 supérieure à 50nm et de préférence supérieure à 100nm et même à 180nm, et avec un indice de réfraction n4 d'au moins 1,4 à 550nm (mieux à λ1, λ2, λ3 λ4 et même dans l'ensemble du visible).

La transparence du revêtement de protection permet en particulier de préserver la vision.

Lors d'essais, la Demanderesse a constaté qu'avec une épaisseur inférieure à 50nm la barrière aux polluants de la couche de silice poreuse était parfois insuffisante.

La couche de silice dense comporte une phase solide (essentiellement) continue, plutôt qu'une phase solide principalement sous forme de (nano)particules ou de cristallites.

Une couche de silice dense (notamment non rendue poreuse de manière intentionnelle) présente de manière classique un indice de réfraction à 550nm de l'ordre de 1,45 si déposée par dépôt physique en phase vapeur et entre 1,42 et 1,46 si obtenue par voie sol gel.

Le vitrage avec la couche sol gel (et le revêtement de protection) peut avoir été traité thermiquement, à une température supérieure ou égale à 450°C de préférence supérieure ou égale à 600°C, notamment est même un verre trempé, bombage trempé.

La silice poreuse (et le revêtement de protection) peut être minérale ou même hybride minéral organique. La silice peut être dopée. Les éléments dopants peuvent de préférence être choisis parmi Al, Zr, B, Sn, Zn. Le dopant est introduit pour remplacer les atomes de Si dans un pourcentage molaire pouvant de préférence atteindre 10%, encore plus préférentiellement jusqu'à 5%.

La première (deuxième) couche de silice poreuse peut être une couche sol-gel et le premier (deuxième) revêtement de protection être une couche de silice sol-gel.

La fabrication de la couche de silice poreuse, servant comme isolateur optique entre un verre de guidage et un verre teinté d'un vitrage feuilleté lumineux, est décrite dans la demande WO2008/059170.

Dans un mode de réalisation préféré, on peut avoir la séquence suivante sur l'épaisseur de l'ensemble vitré dans une zone avec première et deuxième surface d'extraction:
premier vitrage/premiers (motifs) d'extraction en couche diffusante /premier intercalaire de feuilletage (de préférence PVB)/(premier revêtement de protection (couche de silice))/premier isolateur optique en couche de silice poreuse/ autre verre dit verre « central » (notamment mince)/deuxième isolateur optique en couche de silice poreuse/(deuxième revêtement de protection (couche de silice))/deuxième intercalaire de feuilletage (de préférence PVB)/ deuxièmes moyens d'extraction en couche diffusante décalés des premiers moyens d'extraction/deuxième vitrage.

La première face (extérieure) est de préférence libre (de revêtement, couvrant) hormis éventuellement les premiers moyens d'extraction (respectivement deuxièmes moyens d'extraction).

On entend selon l'invention par vitrage, une feuille de verre monolithique.

De préférence le premier vitrage, en verre minéral trempé, est d'épaisseur de 4 à 6,5mm, le deuxième vitrage, en verre minéral trempé, est d'épaisseur de 4 à 6,5mm notamment identique. Lorsque les premiers (resp. deuxièmes) moyens d'extraction sont en émail la cuisson pour former l'émail peut être suivi de l ' (unique) opération de trempe.

Le deuxième vitrage peut aussi être en verre organique (de préférence rigide, semi rigide) comme un polyméthacrylate de méthyle (PMMA)- de préférence avec intercalaire de feuilletage PU-, un polycarbonate (PC)-de préférence avec intercalaire de feuilletage PVB-.

Le premier (deuxième) vitrage peut être tout type de verre plat, (éventuellement bombé par les procédés de bombage connus de l'homme du métier, lorsqu'il s'agit de revêtir des surfaces courbes). Il s'agit de verres monolithiques, c'est-à-dire composés d'une seule feuille de verre minérale, laquelle peut être produite par le procédé « float » permettant d'obtenir une feuille parfaitement plane et lisse, ou par des procédés d'étirage ou de laminage.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le verre des premier et deuxième vitrages peut être clair, extra-clair, à très faible teneur en oxyde(s) de fer. Il s'agit par exemple des verres commercialisés dans la gamme « DIAMANT » par SAINT-GOBAIN GLASS.

Pour les premier et deuxième vitrages on peut choisir un vitrage en verre silicosodocalcique, notamment extraclair, peut présenter :
- une transmission du rayonnement lumineux supérieure ou égale à 91% voire supérieure ou égale 92% ou même 93% ou 94% à 550 nm ou de préférence sur toute la gamme visible,
- et/ou une réflexion du rayonnement lumineux inférieure ou égale à 7%, voire inférieure ou égale à 4%, à 550 nm ou de préférence sur toute la gamme visible.

Chaque tranche couplée optiquement peut être façonnée, notamment droite et polie.

Le verre peut avoir été traité thermiquement, à une température supérieure ou égale à 450°C de préférence supérieure ou égale à 600°C, notamment est même un verre trempé, bombage trempé.

L'épaisseur du premier vitrage est de préférence comprise entre 2 et 19mm, de préférence entre 4 et 10mm, plus particulièrement entre 5 et 9mm. L'épaisseur du deuxième vitrage est de préférence comprise entre 2 et 19mm, de préférence entre 4 et 10mm, plus particulièrement entre 5 et 9mm. On peut préférer des épaisseurs égales pour les deux verres.

L'épaisseur dudit autre vitrage éventuel (feuilleté aux premier et deuxième verres) est de préférence comprise entre 2 et 19mm, de préférence entre 2 et 4mm.On peut préférer des épaisseurs égales pour les trois verres (et même plus réduites qu'avec deux verres) par exemple 4mm environ/4mm environ/4mm environ.

L'épaisseur dudit troisième vitrage éventuel (double vitrage isolant) est de préférence comprise entre 2 et 19mm, de préférence entre 2 et 4mm.On peut préférer des épaisseurs égales pour les trois verres (et même plus réduites qu'avec deux verres) par exemple 4mm environ/4mm environ/4mm environ.

Le deuxième (troisième) vitrage peut être de préférence de taille identique au premier.

Pour le premier (resp. deuxième et même le troisième, ledit autre) vitrage en verre minéral, n1 (n'1, n"1) est typiquement de 1,50 à 1,53.

Naturellement, il peut y avoir sur le premier vitrage une pluralité de premières surfaces d'extraction, notamment en bandes horizontales ou verticales, de préférence espacées d'au moins 2cm , 5cm, même d'au moins 10cm de préférence pour laisser une zone transparente (également sans deuxième surface d'extraction), dans le clair de vitre (hors zone périphérique de montage, anti mélange ou points chauds).

Naturellement, il peut y avoir sur le deuxième vitrage une pluralité de deuxièmes surface d'extraction, en bandes horizontales ou verticales, espacées d'au moins 5cm, 10cm de préférence pour laisser une zone transparente (sans deuxième surface d'extraction), dans le clair de vitre (hors zone périphérique de montage, anti mélange ou points chauds)

De préférence au sein de la deuxième surface d'extraction avec plusieurs motifs d'extraction (diffusants, par une couche discontinue notamment blanche), la distance maximale entre motifs voisins (discret, caractère, décoratif...) est d'au plus 1cm et même d'au plus 0,5mm.

De préférence :
- la première (resp. deuxième) surface d'extraction présente une largeur d'au moins 3cm, 5cm ou même 10cm,
- la première (resp. deuxième) surface d'extraction est de surface d'au moins 25cm² (5x5cm²) ou même d'au moins 100cm² (10x10cm²), de taille pour être visible à au moins 1m ou même 2m, 10m,
- et/ou la première (resp. deuxième) surface d'extraction présente une transparence globale (vision au travers de l'ensemble vitré), à motifs de pas de préférence dans une gamme allant de 2mm à 4mm

Pour former premiers et /ou deuxième motifs d'extraction on choisit une couche diffusante de préférence blanche, définie par une clarté L* d'au moins 50. De préférence, la couche diffusante contient un pigment minéral choisi de telle sorte qu'il présente une coloration blanche. Ce pigment est notamment l'oxyde de titane TiO₂. Avantageusement, ce pigment minéral blanc présente une clarté L* telle que définie dans le modèle de représentation chromatique CIE Lab (1931) qui varie de 65 à 85, mesurée sur le premier vitrage.

La clarté L* peut être mesurée dans les conditions de la recommandation CIE (1931) utilisant un illuminant D₆₅, un observateur à 10°, en mode SCE (composante spéculaire exclue) diffuse 8° (CM 600 Minolta).

La fritte de verre de la couche diffusante est exempte d'oxyde de plomb PbO pour des raisons liées à la préservation de l'environnement.

Les détails et caractéristiques avantageuses de l'invention vont maintenant ressortir des exemples suivants non limitatifs, à l'aide des figures :

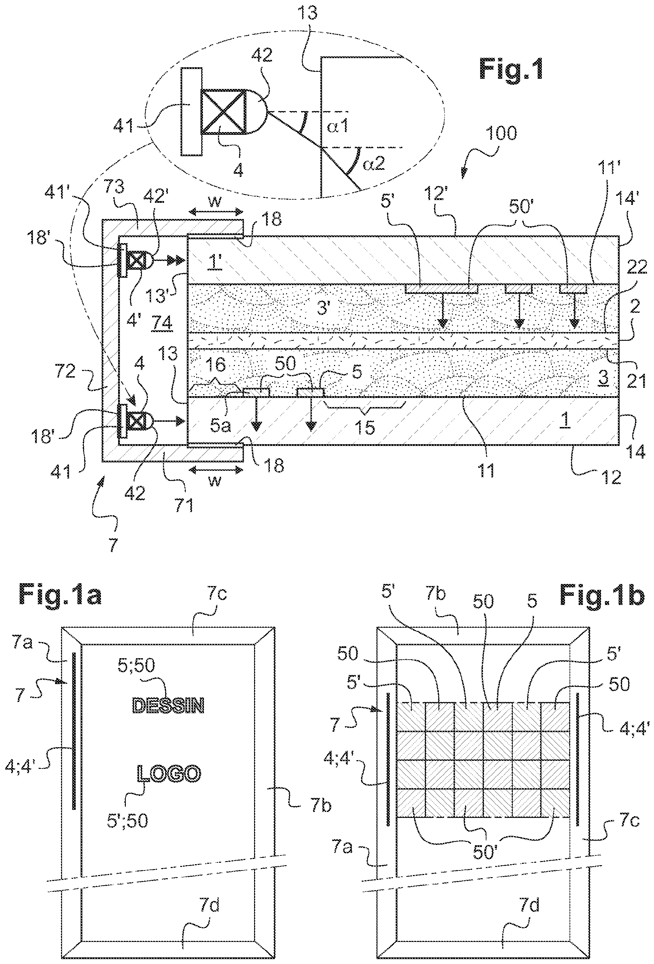

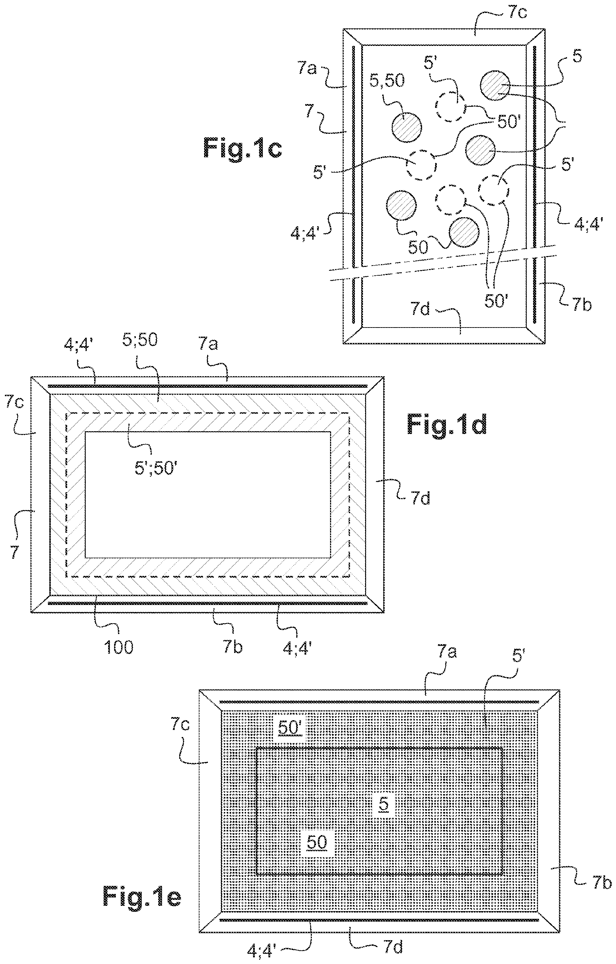

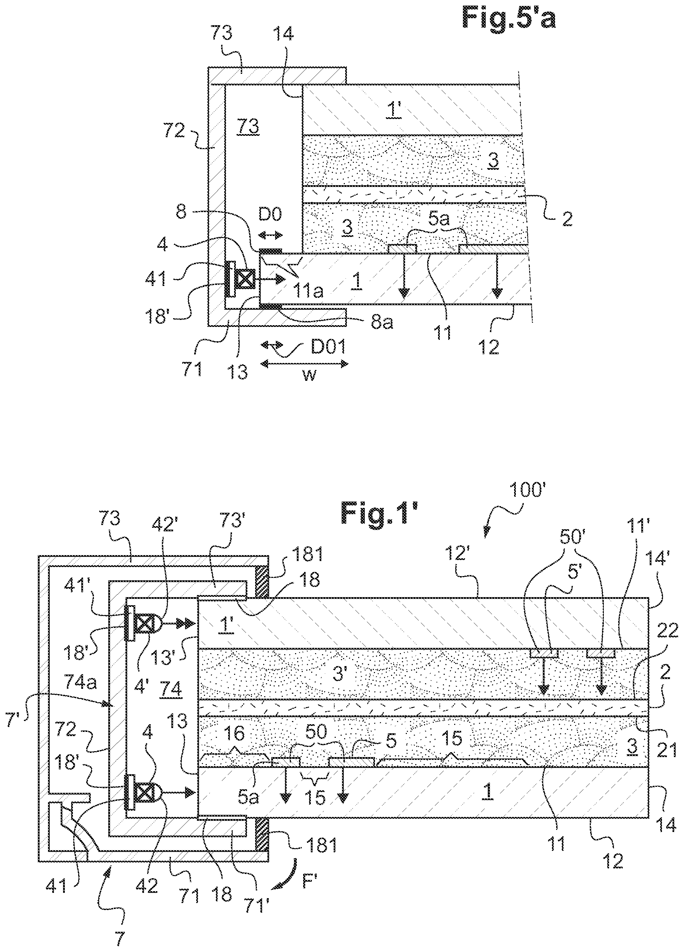

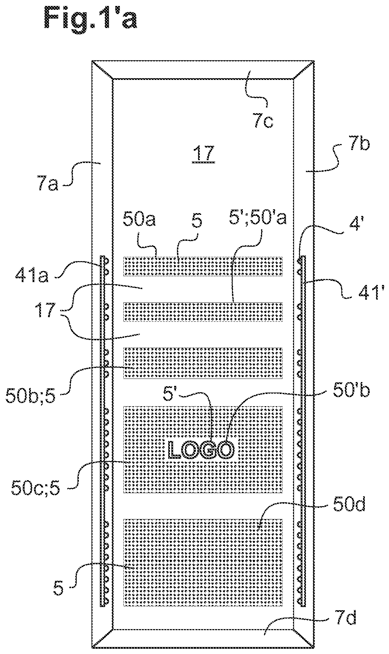

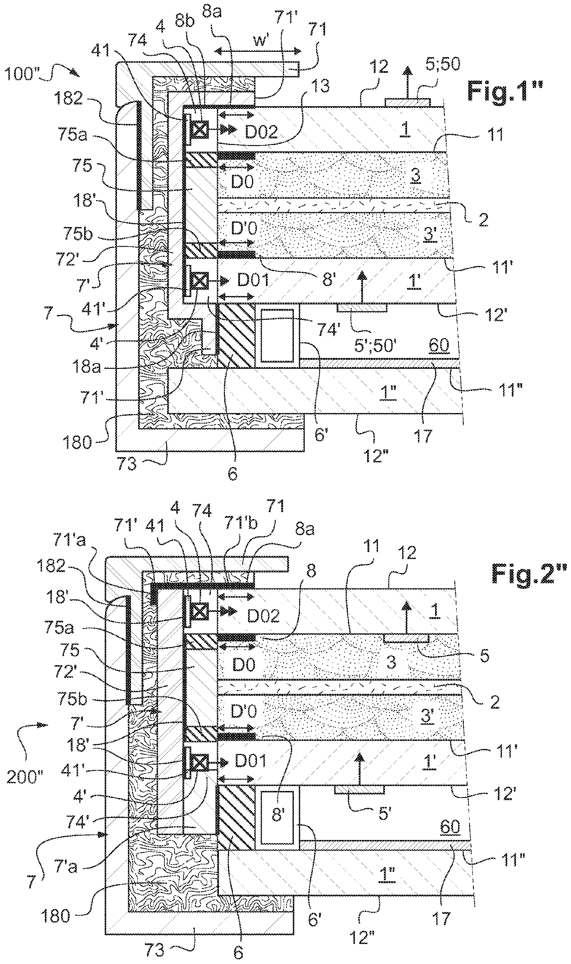

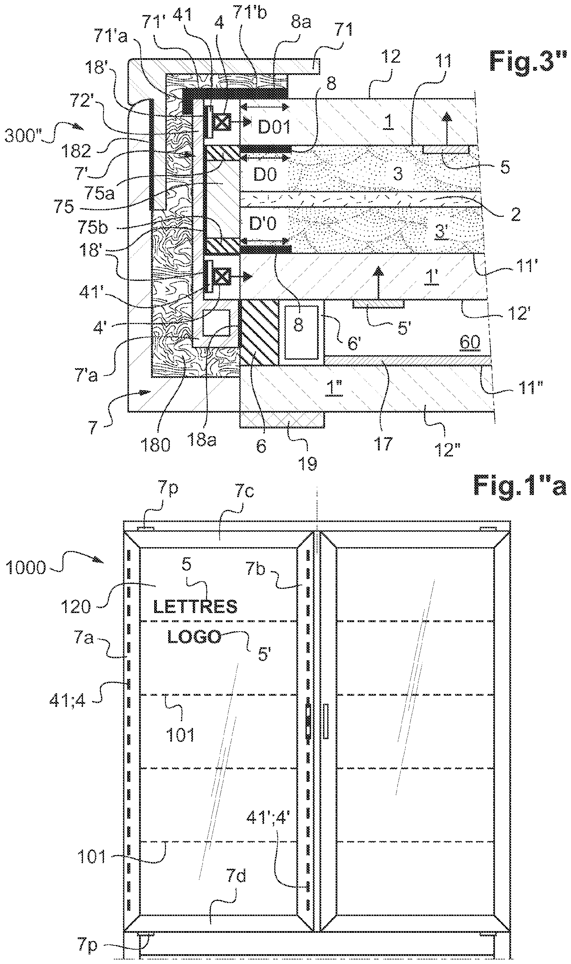

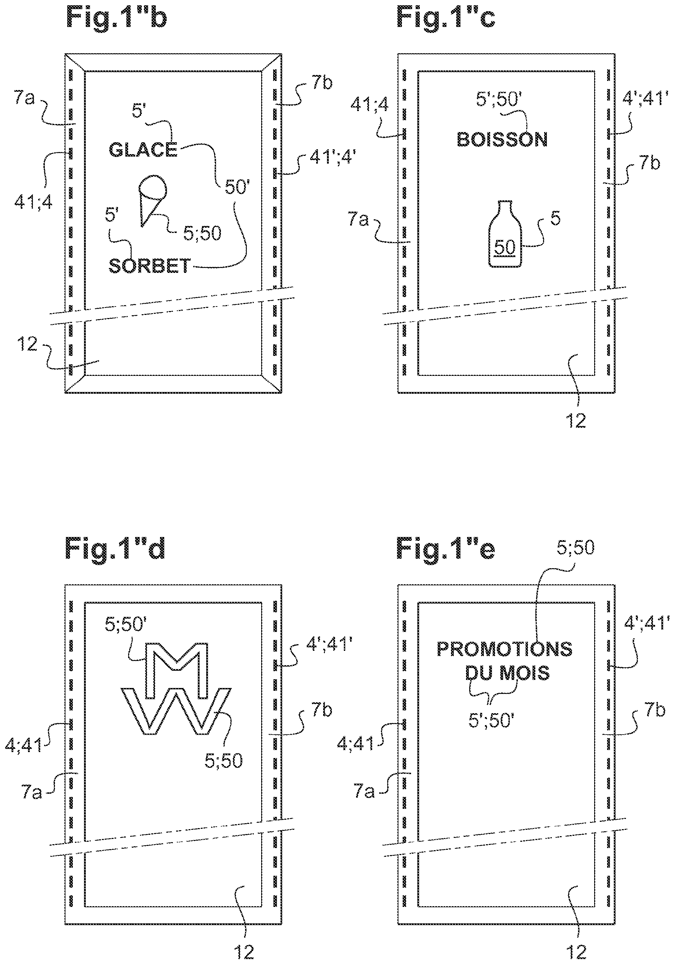

- les figures 1, 1', 1", 2, 2", 2a à 2f, 2'a, 2'b, 3, 3",4, 5a, 5'a, 5b sont des vues schématiques (parfois partielles) en coupe d'ensembles vitrés lumineux à motifs à deux couleurs dans plusieurs modes de réalisation de l'invention;
- les figures 1a, à 1e, 1'a, 1"a à 1"e sont des vues de face schématiques (parfois partielles) d'ensembles vitrés lumineux à motifs à deux couleurs dans plusieurs modes de réalisation de l'invention.

Les figures ne sont pas à l'échelle.

### EXEMPLES

La figure 1 montre plus en détail une vue en coupe d'un ensemble vitré 100 à deux zones lumineuses de couleurs distinctes dans un premier mode de réalisation comportant :
- un premier vitrage 1, ici de forme rectangulaire (par exemple longueur suivant la verticale, largeur par exemple de 250mm), plan ou en variante bombé (trempé), en verre silicosodocalcique de préférence clair ou extraclair trempé, (par exemple de 6mm environ notamment le verre dénommé Diamant de la Demanderesse, d'indice de réfraction n1 d'environ 1,5 à 550nm, de T_{L} d'au moins 90%, avec une face principale 11 dite face interne, une face principale 12 opposée dite première face ici extérieure, une première tranche 13 qui est verticale en position monté et sa tranche opposée 14 (ici chant formé de quatre tranches; la première tranche étant longitudinale),
- une première source de lumière 4, ici un premier ensemble de diodes électroluminescentes 4 rouges et vertes alignées sur une carte de circuit imprimé dit premier support PCB 41, source couplée optiquement à la première tranche 13, le premier vitrage 1 guidant la lumière émise par les diodes de préférence espacées ici d'au plus 1mm de la première tranche 13, de préférence centrée sur la première tranche et de largeur inférieure à l'épaisseur du premier vitrage 1, par exemple chaque diode de largeur W0 de 4mm,
- une première surface d'extraction 50 définie par des premiers motifs d'extraction de lumière 5, 5a associés au premier vitrage ici (directement) sur la face interne 11, qui sont une première couche diffusante discontinue blanche en présentant une clarté L* d'au moins 50, qui est ici un émail blanc diffusant contenant des pigments minéraux blancs et de la fritte de verre fondue, sous forme de premiers motifs diffusants de taille (largeur et/ou longueur) quelconque; ici par exemple un réseau de motifs 5a, 5 décoratifs par exemple géométriques de largeur 3cm - et/ou en variante de motifs discrets notamment adaptés pour une transparence globale par exemple géométriques, comme des disques -.

Le premier motif diffusant 5a, le plus proche de la première tranche 13, est distant de W de la première tranche 13.

Les premiers motifs 5 peuvent être alternativement ou cumulativement sur la première face 12.

Dans un premier exemple de fabrication, on applique par sérigraphie sur la face interne 11 (ou en variante première face 12) une première composition d'émail, diffusante, liquide de manière discontinue pour former la trame des premiers motifs diffusants 5, 5a comportant fritte de verre, pigment minéral blanc et médium organique, on sèche et cuit l'ensemble.

Plus précisément, la première composition d'émail renfermant une fritte de verre et des pigments de TiO₂ (commercialisée sous la référence 194100 par la société FERRO) et un médium organique (commercialisé sous la référence 801022 par la société Prince Minerais) en une quantité permettant d'obtenir une viscosité de 200 Poises (mesurée dans les conditions précitées). L'épaisseur (humide) moyenne de la première couche déposée est égale à 35µm.

En variante, l'émail diffusant blanc présente par exemple la composition suivante :
- entre 20 et 60 % en poids de SiO₂,
- 10 à 45 % en poids de pigments réfractaires, incluant le Ti0₂, notamment de taille micronique
- pas plus de 20 % en poids d'alumine et/ou d'oxyde de zinc.

Des exemples de composition d'émail peuvent être l'émail sous la dénomination Ferro 194011 commercialisé par l'entreprise FERRO, la référence AF5000 commercialisé par la société JM, la référence VV30-244-1 commercialisé par Pemco.

A la place d'un émail, on peut utiliser une peinture blanche. On peut citer par exemple la peinture extrablanc du produit Planilaque Evolution de la société Demanderesse avec comme pigment majoritaire du TiO2. L'épaisseur est typiquement entre 40 et 60µm. Une formulation de peinture peut être déposée selon le procédé du rideau. Le solvant est du xylène ou en variante aqueux. La laque après séchage comprend par exemple les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

La face interne 11 et les premiers motifs 5 dessus sont (directement) couverts par :
- un premier intercalaire de feuilletage 3 en matière thermoplastique ici de l'EVA submillimétrique, en un feuillet de 0,38mm, transparent même clair, présentant (seul) un flou d'au plus 1,5%,et même 1% et d'indice de réfraction n3 tel que n3-n1, en valeur absolue, est inférieur à 0,05 dans le spectre visible (ici n3 égal à 1,49 environ)
- un film bas indice 2, en fluoropolymère, formant premier (et ici unique) isolateur optique, de préférence ETFE ou FEP et d'épaisseur 50µm ayant des première et deuxième faces principales 21, 22 traitées par traitement corona, de flou entre 1,5 et 2%, tel le produit dénommé Norton ETFE de la société Saint Gobain Performance Plastics d'indice de réfraction n2 égal à 1,4 ou le produit Norton FEP de la société Saint Gobain Performance Plastics d'indice de réfraction n2 égal à 1,34 environ, film 2 en contact adhésif avec le premier intercalaire de feuilletage 3 par sa face 21,
- un deuxième intercalaire de feuilletage 3' en matière thermoplastique de préférence EVA transparent, clair, identique (nature, épaisseur, un feuillet) au premier intercalaire de feuilletage, en contact adhésif avec la face 22 du film bas indice 2, et d'indice de réfraction n'3
- un deuxième vitrage 1', en verre minéral, identique au premier vitrage congruent et en coïncidence, avec une face principale de collage 11' coté deuxième intercalaire de feuilletage 3', une face opposée dite deuxième face 12', une deuxième tranche 13' et sa tranche opposée 14', d'indice de réfraction n'1 d'environ 1,5 à 550nm, de T_{L} d'au moins 90%, avec n'3 tel que n'3-n'1, en valeur absolue, est inférieur à 0,05 dans le spectre visible (ici n'3 égal à 1,49 environ).

L'ensemble vitré 100 comporte donc ici un vitrage multiple qui est un vitrage feuilleté avec première et deuxième face qui sont les faces extérieures.

L'ensemble vitré 100 comporte en outre :
- une deuxième source de lumière 4', ici un deuxième ensemble de diodes électroluminescentes rouges et vertes alignées sur une carte de circuit imprimé dit deuxième support PCB 41', source couplée optiquement à la deuxième tranche 13', le deuxième vitrage 1' guidant la lumière émise par ces diodes 4' de préférence distantes (espacées ici) d'au plus 1mm de la deuxième tranche, de préférence centrée sur la deuxième tranche et de largeur inférieure à l'épaisseur du deuxième vitrage 1' , par exemple diode de largeur W'0 de 4mm,
- des deuxièmes moyens d'extraction de lumière 5' associés au deuxième vitrage définissant une deuxième surface d'extraction 50', ici (directement) sur la face de collage 12', qui sont une deuxième couche diffusante discontinue blanche en présentant une clarté L* d'au moins 50, de préférence un émail blanc diffusant avec des pigments minéraux blancs et de la fritte de verre fondue, ici de nature et épaisseur (sensiblement) identiques à la première couche diffusante 5, sous forme de deuxièmes motifs diffusants 5' décalés des premiers motifs (et ici même espacés), choisis parmi un ou des motifs décoratifs, un réseau de motifs discrets adaptés pour une transparence globale et/ou un ensemble de caractères, ici deuxièmes motifs décoratifs.

Pour la dissipation thermique, les supports PCB 41, 41' sont collés avec de la colle thermique 18' au profilé 7 métallique.

La fabrication du deuxième vitrage ainsi revêtu d'une couche émail diffusant blanc est identique à celle décrite pour le premier vitrage.

Entre les motifs 5,5' (zone de transparence 15) l'ensemble vitré 100 est transparent), avec une TL d'au moins 85%. Entre la première (respectivement la deuxième) tranche et le premier motif 5 (respectivement 5') il y a une zone 16 ici également transparente.

Le tableau III suivant donne des exemples de TL et de flou de la zone de transparence (côté première face) en fonction de l'EVA choisi de 0,38 mm environ.

**Tableau III**

| EVA | Flou (%) | TL (%) |
|---|---|---|
| EPDH de CNC | 2,58 | 89,3 |
| EVASafe039 de Brigdestone | 2 | 89,7 |

Le flou est mesuré au hazemeter.

On préfère un seul feuillet pour chaque intercalaire pour réduire le flou.

Alternativement avec deux PVB dénommés RB41 de flou de moins de 1,5% vendu par la société Solutia, dans la zone transparente (côté première face 12) la TL est 87% et le flou 2,5% environ.

La première source de lumière 4 est donc pilotée en dynamique pour émettre à l'instant t0 via une première série de diodes 4 un premier rayonnement principal à une première longueur d'onde dite λ1 et éventuellement, en mode dynamique, à l'instant t'≠t0 via une deuxième série de diodes 4 un deuxième rayonnement principal à une deuxième longueur d'onde dite λ2 distincte de λ1.

La deuxième source de lumière 4' est donc pilotée en dynamique pour émettre à l'instant t0 via une troisième série de diodes 4' un troisième rayonnement principal à une troisième longueur d'onde dite λ3 distincte de λ1 et de préférence, en mode dynamique, à l'instant t'≠t0 via une quatrième série de diodes 4' un quatrième rayonnement principal à une quatrième longueur d'onde dite λ4 distincte de λ3.

A titre d'exemple, avec deux couleurs verte et rouge commutables pour chaque source 4,4' à t0 :
- la première source 4 émet dans le vert avec λ1 dans une gamme allant de 515nm à 535nm et de largeur spectrale à mi-hauteur de moins de 50nm (et la lumière extraite C1 est verte définie par un premier rayonnement extrait principal à λ1' sensiblement égal à λ1, distinct d'au plus 10nm ou d'au plus 5nm et avec une largeur spectrale à mi-hauteur de moins de 30nm),
- la deuxième source 4' émet dans le rouge avec λ3 dans une gamme allant de 615nm à 635nm et de largeur spectrale à mi-hauteur de moins de 30nm (et la lumière extraite C3 est rouge définie par un troisième rayonnement extrait principal à λ3' sensiblement égal à λ3, distinct d'au plus 10nm ou d'au plus 5nm et avec une largeur spectrale à mi-hauteur de moins de 30nm) ou encore du blanc.

Et à t' :
- la première source émet dans le rouge avec λ2 dans une gamme allant de 615nm à 635nm et de largeur spectrale à mi-hauteur de moins de 30nm (et la lumière extraite C2 est rouge définie par un deuxième rayonnement extrait principal à λ1' sensiblement égal à λ1, distinct d'au plus 10nm ou d'au plus 5nm et avec une largeur spectrale à mi-hauteur de moins de 30nm)
- et la deuxième source émet dans le vert avec λ4 dans une gamme allant de 515nm à 535nm et de largeur spectrale à mi-hauteur de moins de 50nm (et la lumière extraite C4 est verte définie par un quatrième rayonnement extrait principal à λ4' sensiblement égal à λ4, distinct d'au plus 10nm ou d'au plus 5nm et avec une largeur spectrale à mi-hauteur de moins de 30nm).

Alternativement, la première source continue d'émettre dans le rouge avec λ4 dans une gamme allant de 615nm à 635nm et de largeur spectrale à mi-hauteur de moins de 30nm (et la lumière extraite C4 est rouge définie par un quatrième rayonnement extrait principal à λ4' sensiblement égal à λ1, par exemple distinct d'au plus 10nm ou d'au plus 5nm et de préférence avec une largeur spectrale à mi-hauteur de moins de 30nm).

Une autre configuration est que par exemple à t3 chaque source 4, 4' émette dans le vert ou dans le blanc. Il est aussi possible qu'une des sources soit éteinte (donc configurations suivantes : rouge et état off ; vert et état off ; blanc et état off....).

Pour prévenir le mélange des couleurs vertes et rouges au niveau de la deuxième surface d'extraction, chaque diode 4 de la première source 4 comporte une optique de collimation 42 qui assure un diagramme d'émission étroit. Chaque diode 4 de la première source de lumière 4 est espacée de la première tranche 13 par de l'air d'au plus 1mm (ou moins) et au moins 80% (mieux au moins 90% et même au moins 95%) du flux lumineux émis par chaque diode est dans un cône d'émission entre -α1 et α1 avec α1 = Arsin(n1 * sin (α2)) où α2=π/2-Arsin (n2/n1) et correspond à l'angle de réfraction dans le premier vitrage comme montré en vue de détail.

Pour prévenir le mélange des couleurs vertes et rouges au niveau de la première surface d'extraction, chaque diode de la deuxième source 4 comporte une optique de collimation 42' qui assure un diagramme d'émission étroit. Chaque diode 4' de la deuxième source de lumière 4' est espacée de la deuxième tranche 13' par de l'air d'1mm environ (ou moins) et au moins 80% (mieux au moins 90% et même au moins 95%) du flux lumineux émis par chaque diode est dans un cône d'émission entre -α'1 et α'1 avec α'1 = Arsin(n1 * sin (α'2)) où α'2=π/2-Arsin (n2/n'1) et correspond à l'angle de réfraction dans le deuxième vitrage.

Pour n2=1,4 (indice de l'ETFE) et n1=1,5 dans le spectre du visible α2 est de 21° et α1 de 33°. Pour n2=1,35 (indice du FEP) et n1=1,5 dans le spectre du visible α2 est de 26° et α1 de 41°.

Comme diodes, on peut choisir les diodes ALMD de la société Avago de 4mm de largeur avec 100% du flux lumineux émis par chaque diode dans un cône d'émission entre -30 et 30°. En particulier, on peut choisir les diodes rouges dénommées ALMD-EG3D-VX002 à base d'AlInGaP de longueur d'onde dominante à 626nm et de largeur spectrale entre 618nm et 630nm. En particulier on peut choisir les diodes vertes dénommées ALMD-CM3D-XZ002 à base d'InGaN de longueur d'onde dominante à 525nm et de largeur spectrale entre 519nm et 539nm.

Chaque support PCB est en barrette, rectangulaire ne dépassant pas de la tranche de l'ensemble vitré 100 et comprend en alternance LED rouge et LED verte. L'espacement max entre les diodes de même couleur est choisi d'au plus 20mm.

Les diodes de la première source 4 (respectivement de la deuxième source 4') ont chacune une direction principale d'émission donnée sensiblement parallèle à la première tranche 13 (respectivement à la deuxième tranche 13') par exemple de moins de 5°.

La Luminance à la normale d'un motif d'extraction côté première face ou deuxième face avec lumière verte ou rouge est d'environ 100 cd/m² (+/- 10 cd/m²). La luminance à la normale est uniforme à (+/- 10 cd/m²).

Pour la première source de lumière 4, le circuit électrique de chaque diode « verte » émettant dans le vert est ajusté pour que le flux F1 émis par cette diode « verte » soit inférieur à 0,8 même à 0,5 fois le flux F2 émis par une diode « rouge » émettant dans le rouge.

Pour la deuxième source de lumière 4', le circuit électrique de chaque diode « verte » émettant dans le vert est ajusté pour que le flux émis par cette diode « verte » soit inférieur à 0,8 même à 0,5 fois le flux émis par une diode « rouge » émettant dans le rouge.

Par exemple pour des premiers et deuxièmes supports PCB 41, 41' de même longueur, on peut avoir sur chacun n fois (n entier supérieur ou égal à 1) la séquence suivante : deux diodes rouges / une diode verte...

Les premier et deuxième supports PCB 41, 41' sont dans le volume intérieur 74 d'un profilé de montage 7 de l'ensemble vitré qui sert d'encadrement voire même pour la fixation de l'ensemble vitré 100 à une paroi. L'ensemble vitré peut ainsi être un panneau décoratif fixé à un mur, un sol, un plafond...

La première face 12 est la face de visualisation des motifs en deux couleurs.

En fonction de son installation, la deuxième face pour être aussi une face de visualisation. On peut alternativement couvrir la deuxième face 12' d'un réflecteur spéculaire, comme une argenture (et une couche de protection) et former par exemple un miroir lumineux.

Le profilé de montage 7 est un profilé de section en U, de préférence métallique (aluminium, acier laqué) ou en variante plastique (PVC etc) ou encore bois comportant :
- une base 72 en regard de la tranche de l'ensemble vitré 100 (incluant la première et deuxième tranche 13,13'; les tranches du film bas indice et des premier et deuxième intercalaire de feuilletage 3,3'), base portant ici les premier et deuxième supports PCB 41,41' par une colle 18' en face arrière et de préférence métallique servant par exemple de dissipateur thermique,
- de part et d'autre de la base 72 des première et deuxièmes ailes 71,73, de préférence métalliques comme la base (et donc réfléchissant), respectivement s'étendant sur la première face 12 et la deuxième face 12' sur une largeur W de 3cm, ailes collées aux faces 12, 12' par exemple avec une colle transparente ou un adhésif double face transparente 18 ou ruban adhésif transparent double face comme le produit tesa ACX 7054 de 0,5mm ou comme le produit dénommé D9605 de la société NITTO de 0,2mm d'épaisseur (support polyester avec en double face de la colle acrylique) .

Les première et deuxième faces 12, 12' sont des surfaces libres, visibles voire même accessible (au toucher). L'ensemble vitré 2000 comporte uniquement un vitrage feuilleté avec ces deux vitrages mais en variante on peut rajouter coté deuxième face 12' un autre intercalaire de feuilletage, un autre film bas indice, d'autres motif d'extraction et un autre vitrage avec des diodes émettrices de couleur distinctes de celles déjà possibles pour ajouter une troisième couleur

Les première et deuxième tranches 13,13' sont droites, polies. Les tranches opposées 14, 14' sont droites, polies ou même diffusantes.

Par simplification le montant du profilé en U encadrant le vitrage feuilleté n'est pas montré coté tranches opposées 14, 14'.

On peut rajouter d'autres diodes sur la tranche opposée 14,' à la première tranche 13 notamment dans le cas d'un vitrage avec une large première surface d'extraction et/ou avec plusieurs motifs centimétriques espacés.

On peut rajouter d'autres diodes sur la tranche opposée 14' à la deuxième tranche 13' notamment dans le cas d'un vitrage avec une large deuxième surface d'extraction et/ou avec plusieurs motifs centimétriques espacés.

Les deux zones lumineuses 50, 50' peuvent être de toute forme et étendue, pour la signalisation et/ou le décor...

L'une des zones lumineuses 50, 50' peut comprendre un motif fin comme par exemple une flèche ou encore être fermé et évidé (contour géométrique etc).

Les figures suivantes 1a, 1b, 1c, 1d, 1e montrent des ensembles vitrés en vue de face, avec des profilés d'encadrement métalliques sous forme de quatre montants 7a à 7d. Sont illustrées des exemples de zones lumineuses à deux couleurs et l'agencement des première et deuxième sources de lumières à diodes.

En figure 1a, la première surface d'extraction peut être un dessin 50 et la deuxième un LOGO 50' sous le dessin. Les premier et deuxième ensemble de diodes 4, 4' sont sur le même montant longitudinal (vertical après installation ici) 7a ou sur deux montants opposés.

S'il s'agit d'une porte de magasin on peut remplacer le dessin par le mot « entrée » (dans la langue souhaitée).

En considérant, la projection orthogonale des deuxièmes motifs dans le plan des premiers motifs, la distance bord à bord Db entre premiers motifs et cette projection est libre par exemple de quelques cm et même quelques mm. On dit que les premiers motifs sont espacés de Db des deuxièmes motifs.

En figure 1b, les premiers et deuxième motifs d'extraction 5,5' forment un damier. Il n'y a pas de zones sombres (non lumineuses) entre les première et deuxième surfaces d'extraction 50, 50'. Les premier et deuxième ensemble de diodes 4, 4' sont à la fois sur les montants opposés longitudinaux 7a, 7b (verticaux après installation ici). On utilise donc quatre sources de lumière.

Le damier peut servir pour un panneau décoratif mural (sur tout le clair de vitre par exemple), mais aussi une porte, une cloison etc.

En figure 1c, les premiers et deuxième motifs d'extraction 5,5' sont des motifs ronds espacés entre eux d'une distance Db libre par exemple de quelques cm. Les premier et deuxième ensemble de diodes 4, 4' sont à la fois sur les montants opposés longitudinaux 7a, 7b (verticaux après installation ici). On utilise donc quatre sources de lumière.

Ces motifs 5,5' peuvent servir pour un panneau décoratif mural (sur toute le clair de vitre par exemple), mais aussi une porte, une cloison etc.

En figure 1d, les premiers et deuxième motifs d'extraction 5,5' forment un double cadre lumineux. Il n'y a pas de zones sombres (non lumineuses) entre les première et deuxième surfaces d'extraction 50, 50'. Les premier et deuxième ensemble de diodes 4, 4' sont sur les montants opposés longitudinaux 7a, 7b (horizontaux après installation ici). On utilise donc quatre sources de lumière. On peut en rajouter deux autres sur les montants latéraux 7c, 7d.

Ainsi ces motifs 5,5' peuvent servir pour un panneau décoratif mural (sur toute le clair de vitre par exemple), mais aussi une porte, une cloison, une fenêtre etc.

Si on souhaite préserver un clair de vitre de préférence (dans la zone centrale), de préférence l'ensemble vitré n'est pas accolé à une paroi opaque et est transparent en dehors des surfaces d'extraction. En variante on forme un miroir éclairant.

En figure 1e, les premiers et deuxième motifs d'extraction 5, 5' forment chacun un réseau de motifs discrets par exemple des disques de diamètre 1mm, espacés de 4mm adaptés pour une transparence globale (vision au travers de l'ensemble vitré). Les premier et deuxième ensemble de diodes 4, 4' sont sur les montants opposés longitudinaux 7a, 7b (horizontaux après installation ici). On utilise donc quatre sources de lumière. On peut en rajouter deux autres sur les montants latéraux 7c, 7d

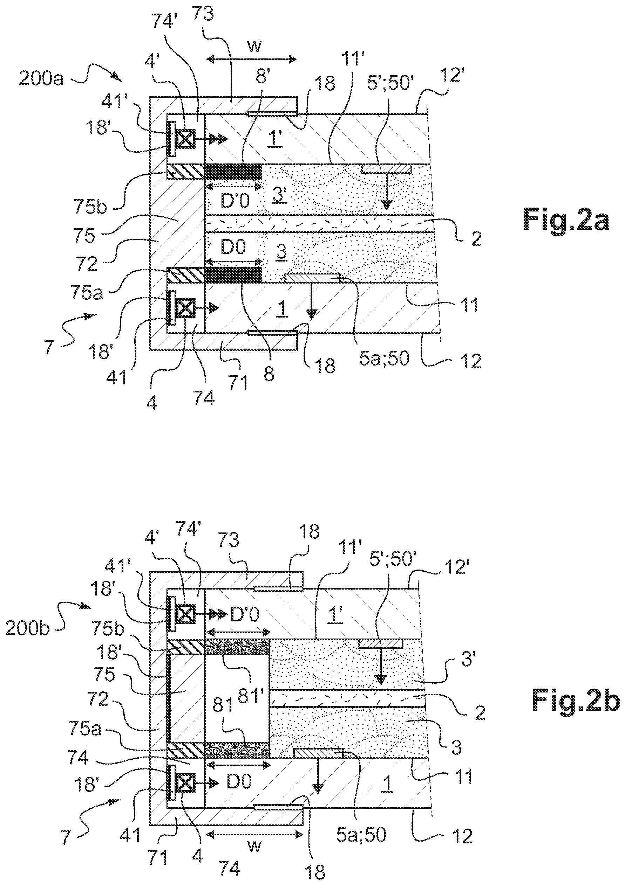

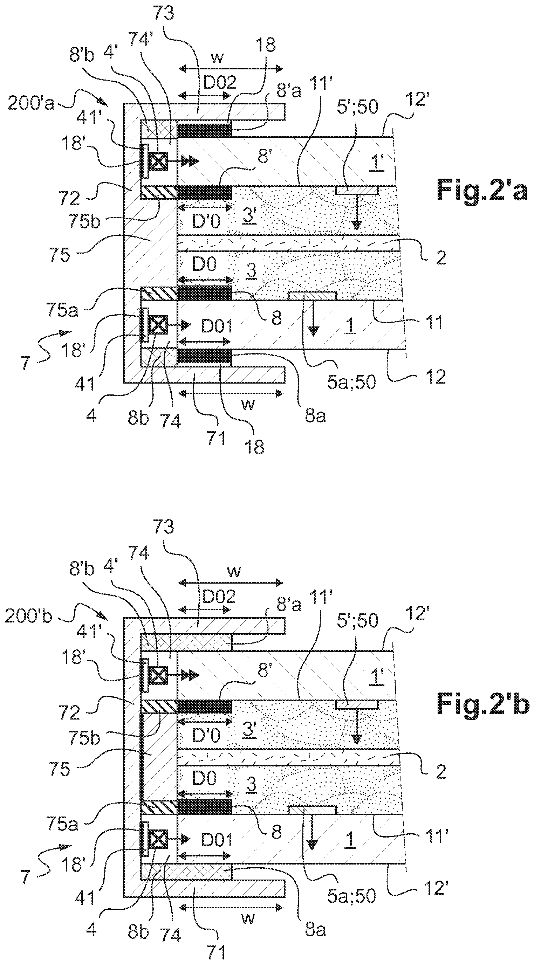

La figure 2a montre une vue partielle en coupe d'un ensemble vitré lumineux 200a dans un deuxième mode de réalisation.

Seules les différences par rapport au premier mode sont décrites. L'ensemble vitré lumineux 200a diffère comme suit de l'ensemble vitré 100.

On choisit des diodes 4,4' classiques, sans optique de collimation -et même sans (pré)encapsulation- ayant un diagramme d'émission avec des grands angles par exemple émission lambertienne (par exemple avec angle à mi hauteur de 120°).

Comme diodes on peut choisir les NSSM124T vendu par la société NICHIA de largeur WO égale à 3mm centrée sur la première tranche 13. Par précaution, on peut aussi choisir de conserver les diodes de l'exemple 1.

Pour éviter le mélange des couleurs, une première bande dite antimélange 8 en émail noir ou en peinture noire couvre sur une largeur D0 la face interne 11 pour couper les grands angles allant vers le deuxième vitrage 1'. La première bande antimélange 8 est en amont, espacée de la première surface d'extraction 50 (du premier motif d'extraction 5a) plus éloignée de la première tranche 13.

D0 est au moins égale à 0,8 Dmin où Dmin= d1 / tan (π/2-arsin(n2/n1)) et inférieure à 2cm et même 1cm. d1 est la distance entre le bord le plus éloigné de chaque diode 4 et la face interne 11. Pour d1 égale à 5mm, n2=1,4 et n1=1,5 Dmin vaut donc 13mm.

On peut préférer ajouter une autre première bande antimélange (non montrée) sur la première face 12 identique et de même largeur D01 pour couper les grands angles allant vers le deuxième vitrage 1' après réflexion sur l'aile 71. On choisit par exemple un ruban adhésif noir, mono ou double face en plus (sous la colle 18) ou remplaçant la colle 18.

Une deuxième bande dite antimélange 8' en émail noir ou en peinture noire couvre sur la largeur D0 la face de collage 11' pour couper les grands angles allant vers le premier vitrage 1. La deuxième bande 8' est espacée de la deuxième surface d'extraction 50 plus éloignée de la deuxième tranche 13'.

D'0 est au moins égale à 0,8 D'min où D'min= d'1 / tan (π/2-arsin(n2/n'1)) et inférieure à 2cm. d'1 est la distance entre le bord le plus éloigné de chaque diode 41' de la deuxième source 4' et la face de collage 11',. Pour d'1 égale à 5mm, n'2=1,4 et n'1=1,5 D'min vaut donc 13mm.

On choisit ici des première et deuxième bandes identiques. Ces bandes anti mélange sont utiles surtout si n2, n'2 sont d'au moins 1,2.

On préfère ajouter une autre première bande antimélange (non montrée) sur la deuxième face 12' identique et de même largeur D0 pour couper les grands angles allant vers le premier vitrage 1 après réflexion sur l'aile 73.

Par ailleurs on souhaite éviter tout mélange de couleurs dû à une fuite latérale de lumière des premières diodes 4 du volume intérieur 74 vers le deuxième vitrage (rayons non couplés au premier vitrage) en particulier réfraction dans le premier intercalaire voire même dans la deuxième tranche, et/ou dû à une fuite latérale de lumière des deuxièmes diodes 4' du volume intérieur 74' vers le premier vitrage (rayons non couplés au deuxième vitrage) en particulier réfraction dans le deuxième intercalaire voire même dans la première tranche.

Aussi, le support 7 est un profilé de section en E plutôt qu'un U avec une branche centrale 75 du E opaque qui à la fois cloisonne et absorbe ces lumières, de préférence contre ou espacé de moins de 1mm de la tranche (alignée) du vitrage feuilleté. Le profilé ou au moins cette branche centrale opaque 75 est d'épaisseur légèrement inférieure ou égale à l'épaisseur de cette tranche centrale entre face interne 11 et face de collage 11'.

Le profilé 7 est monolithique par exemple métallique. La branche 75 est opaque (et non réflectrice) par ajout d'un revêtement opaque comme une bande adhésive noire ou une peinture noire 75a, 75b sur la première surface latérale de la branche centrale 75 et sur la deuxième surface latérale de la branche centrale 75.

L'ensemble du profilé 7 peut être opaque (plongé dans un bain)

La première surface latérale avec le revêtement opaque 75a de préférence ne dépasse pas vers et sur la première tranche 13.

La deuxième surface avec le revêtement opaque 75b de préférence ne dépasse pas vers et sur la deuxième tranche 13'.

De préférence, on choisit un revêtement opaque de moins de 1mm et même de moins de 0,5mm.

Par exemple c'est une peinture noire ou c'est un adhésif noir comme :
- en monoface, le produit NORFIX T333 (mousse polyéthylène et colle acrylique) de Norton épais de 0,5mm
- en double face le produit D5395B de Nitto épais de 0,05mm (polyester noir et adhésif acrylique) ou D9625 épais de 0,100µm (polyéthylène noir et adhésif acrylique)
- en monoface le produit 61313B de Nitto épais de 0,05mm (polyester noir et adhésif acrylique)
- en double face le produit 521-12µm de Lohmann épais de 12µm.

Entre la branche centrale et la tranche centrale il n'y a pas de colle ou tout autre moyen de fixation.

On préfère le noir au blanc (tel le produit NORFIX V1500 de Norton) pour davantage d'opacité

En variante, la branche centrale 75 opaque (absorbante) - est une pièce (avec les revêtements opaques précités) distincte, rapportée (fixée) sur la base 72 par collage, par une encoche ....

En variante de montage, on place une deuxième source 4' sur son support 41', une deuxième bande de mélange en regard de la deuxième tranche sur un côté opposé (ou adjacent) du vitrage isolant. On rajoute alors un profilé en E identique (deuxième cloisonnement par branche centrale du E opaque) qui fait partie d'un profilé d'encadrement de préférence.

La figure 2b montre une vue partielle en coupe d'un ensemble vitré lumineux 200b dans une première variante du deuxième mode de réalisation.

Seules les différences par rapport au deuxième mode sont décrites. L'ensemble vitré lumineux 200b diffère comme suit de l'ensemble vitré 200a.

Les première et deuxième bandes 81, 81' sont chacune un bande adhésive opaque (type scotch) mono face ou double face d'épaisseur inférieure à celle des intercalaires (0,76mm voire 0,38mm) - par exemple bandes comme celles déjà précités pour la branche centrale 75 de l'exemple précédent.

Ces bandes adhésives 81, 81' ont une surface libre car les intercalaires de feuilletages 3,3' et le premier isolateur optique 2 sont en retrait des première et deuxième tranches 13,13' et commencent à partir de D0 ou D'0.

La branche centrale 75 avec les revêtements opaques 75a, 75b est collée sur la base 72 et est espacée de moins de 1mm de la gorge entre les vitrages 1,1'. Elle peut rentrer dans la gorge.

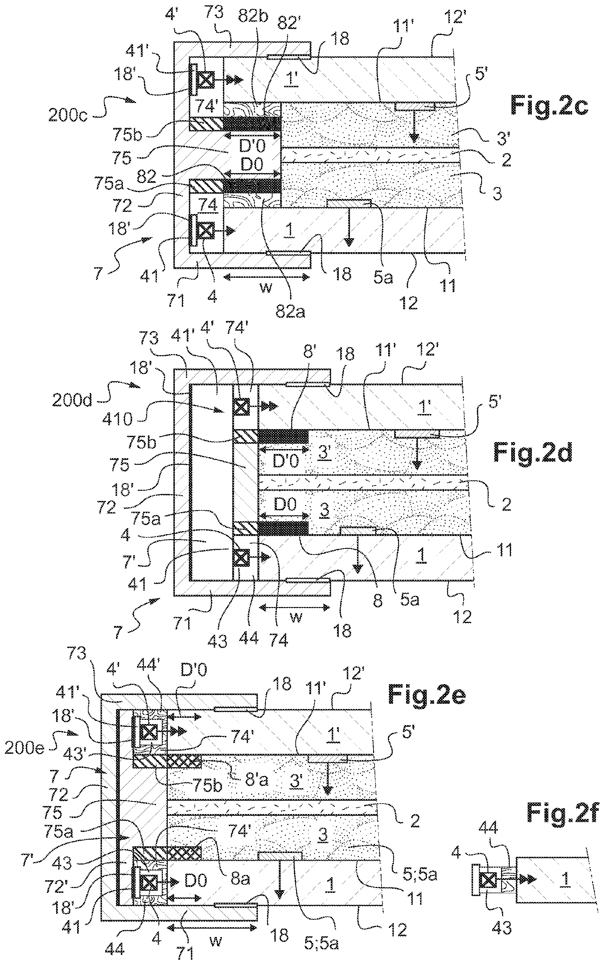

La figure 2c montre une vue partielle en coupe d'un ensemble vitré lumineux 200d dans une deuxième variante du deuxième mode de réalisation.

Seules les différences par rapport à la première variante sont décrites. L'ensemble vitré lumineux 200d diffère comme suit de l'ensemble vitré 200b.

Les première et deuxième bandes anti mélange 82, 82' sont chacune un revêtement opaque de préférence noir (encre etc) sur les faces principales de la branche centrale 75 qui rentre entre les vitrages 1,1' jusqu'aux tranches des intercalaires 3, 3' et de l'isolateur optique 2.

Ces revêtements opaques 82, 82' ont des surfaces externes collées aux faces interne et de collage 11,11' par une colle optique ou un adhésif double face transparent 82a, 82b comme support polyester avec en double face de la colle acrylique comme le produit dénommé D9605 de la société NITTO de 0,2mm d'épaisseur.

Pour former les surfaces latérales opaques 75a,75b, on peut étendre le revêtement opaque 82, 82' choisi ruban adhésif noir monoface.

On peut même supprimer les colles 82a et 82b et utiliser un ruban adhésif noir biface pour les bandes antimélanges 82 et 82' et les revêtements opaques 75a et75b sur les surfaces latérales coté 74 et 74'

Sur les ailes 71 et 73 en regard des surfaces latérales 75a et 75b on peut aussi former des parois internes opaques par un adhésif noir.

La figure 2d montre une vue partielle en coupe d'un ensemble vitré lumineux 200d dans une autre variante du deuxième mode de réalisation.

Seules les différences par rapport au deuxième mode sont décrites. L'ensemble vitré lumineux 200d diffère comme suit de l'ensemble vitré 200a.

Un support PCB commun 410 en regard des tranches 13 et 13' et de largeur inférieure ou égale à l'épaisseur de la tranche de l'ensemble vitré porte les premières et deuxièmes diodes 4, 4' .

Le support commun 410 est collé au profilé 7 par de la colle 410. Le cloisonnement de la lumière des premières et deuxièmes diodes 4,4' est une barrette 75 avec sur les surfaces latérales des revêtements opaques 75a et 75b. La barrette est collée sur le PCB commun 410 ou dans une encoche, toujours en saillie des diodes à émission par le haut et contre la tranche centrale entre 13 et 13'.

La figure 2e montre une vue partielle en coupe d'un ensemble vitré lumineux 200e dans une variante du deuxième mode de réalisation.

Seules les différences par rapport au deuxième mode sont décrites. L'ensemble vitré lumineux 200e diffère comme suit de l'ensemble vitré 200a.

Chacun des diodes de la première source 4 (resp. de la deuxième source 4') comporte une encapsulation primaire 43,43' et sont collées à la première tranche 13 (resp. à la deuxième tranche 14') par une colle optique 44, 44' ne dépassant pas de la tranche de l'ensemble vitré, vers l'extérieur.

En variante montrée figure 2f, elles sont collées par un adhésif double face transparent comme support polyester avec en double face de la colle acrylique comme le produit D9605 dénommé de la société NITTO par exemple ne dépassant pas de la tranche de l'ensemble vitré, vers l'extérieur

La première bande antimélange 83 de largeur D0 n'est plus un revêtement opaque mais est remplacée par une bande diffusante 8a (émail blanc) suffisamment épaisse (faiblement transparente) pour ne pas émettre côté opposé à la face interne 11.

La deuxième bande antimélange 83' de largeur D'0 n'est plus un revêtement opaque mais est remplacée par une deuxième bande diffusant 8'a (émail blanc) suffisamment épaisse (faiblement transparente) pour ne pas émettre côté opposé à la face de collage 11'.

Les premier et deuxième supports PCB 41,41' sont sur un profilé métallique commun 7' en T et non en U, donc toujours avec la branche centrale 75 avec surfaces latérales opaques 75a, 75b (ruban adhésif noir etc) pour cloisonner les sources de lumière 4,4'. Le profilé 7' est de largeur inférieure ou égale à l'épaisseur de la tranche de l'ensemble vitré.

Ce profilé 7' est prémonté, n'est pas fixé sur le profilé de montage 7 de l'ensemble vitré de section en U avec une base 72 et des ailes 71,73 dépassant sur la périphérie des première et deuxième faces 12, 12' sur une largeur W et collé par adhésif transparent double face 18 comme support polyester avec en double face de la colle acrylique comme le produit D9605 dénommé de la société NITTO.

La figure 2'a montre une vue partielle d'une variante de la figure 2a dans laquelle on ajoute une autre première bande antimélange 8a de largeur D01 égale à D0 comme un dépôt d'émail noir ou de peinture noire de préférence comme la première bande 8. Le profilé 7 est collé par un adhésif quelconque au-dessus de cette zone 8a et/ou par un adhésif double face transparent qui peut dépasser vers l'extrémité de l'aile 71 et/ou cantonné au-delà de la zone 8a.

Par précaution, on rajoute en regard de la surface latérale opaque 75a un ruban adhésif noir 8b sur l'aile 71 coté espace interne 74.

De même coté deuxième vitrage, on ajoute une autre deuxième bande antimélange 8'a de largeur D02 égale à D'0 comme un dépôt d'émail noir ou de peinture noire de préférence comme la deuxième bande 8'. Le profilé 7 est collé par un adhésif quelconque au-dessus de cette zone 8'a et/ou par un adhésif double face transparent qui peut dépasser vers l'extrémité de l'aile 73 et/ou être cantonné au-delà de la zone 8'a.

Par précaution, on rajoute en regard de la surface latérale opaque 75b un ruban adhésif noir 8'b sur l'aile 73 coté espace interne 74'.

La figure 2'b montre une vue partielle d'une variante de la figure 2a dans laquelle on ajoute une autre première bande antimélange 8a de largeur D01 égale à D0 comme un ruban adhésif noir double face. L'aile 71 dépasse de l'autre première bande anti mélange 8a. La colle 18 n'est plus nécessaire.

Par précaution, on prolonge le ruban adhésif noir 8b sur l'aile 71 coté espace interne 74 en regard de la surface latérale opaque 75a.

De même coté deuxième vitrage. on ajoute une autre deuxième bande antimélange 8'a de largeur D02 égale à D'0 comme un ruban adhésif noir double face. L'aile 73 dépasse de l'autre deuxième bande anti mélange 8'a. La colle 18 n'est plus nécessaire.

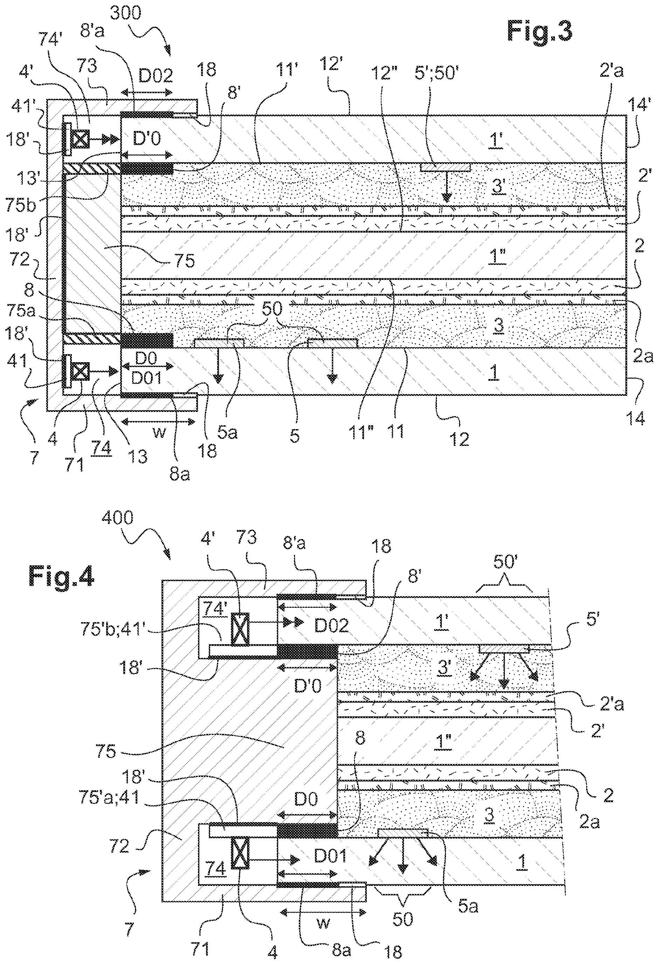

La figure 3 montre une vue partielle en coupe d'un ensemble vitré lumineux 300 dans un troisième mode de réalisation.

Seules les différences par rapport au deuxième mode 200a sont décrites. L'ensemble vitré lumineux 300 diffère comme suit de l'ensemble vitré 200a.

On n'utilise plus de film bas indice. On insère un nouveau vitrage 1", par exemple identique aux premier et deuxième vitrages 1,1'. On peut abaisser l'épaisseur de chacun à 4mm environ. d1 (d1') devient égal à 4mm.

Ce nouveau verre 1" est revêtu :
- sur sa face 11", côté face interne 11 d'une première couche bas indice qui est une couche de silice poreuse de préférence obtenue par voie sol-gel et d'épaisseur de 600nm mieux 800nm, surmontée si nécessaire d'un premier revêtement de protection transparent 2a en couche de silice (dense) obtenu par voie sol-gel, d'épaisseur 300nm ou même plus, avec un indice de réfraction n4 d'au moins 1,4 à 550nm
- sur sa face 12", côté face de collage 11' d'une deuxième couche bas indice qui est une couche de silice poreuse de préférence obtenue par voie sol-gel et d'épaisseur de 600nm mieux 800nm, de préférence identique à la première couche bas indice, surmonté si nécessaire d'un deuxième revêtement de protection transparent 2'a en couche de silice (dense) obtenu par voie sol-gel, d'épaisseur 300nm ou même plus, de préférence identique au premier revêtement de protection 2a.

Le profilé de montage 7 est en U (ou en variante de préférence reste en E pour cloisonner et absorber la lumière ou une pièce est rajoutée).

L'indice n2 de la première couche bas indice (resp. n'2 de la deuxième couche bas indice) varie en fonction de la fraction volumique de pores et peut aller de 1,4 à 1,15 aisément. La fraction volumique de pores est de préférence supérieure à 50% et même à 65% et de préférence inférieure à 85% pour une grande tenue de la couche.

Chaque couche de silice poreuse 2, 2' est une matrice de silice avec des pores fermés (de préférence délimités par les parois de la silice) en volume.

Le cloisonnement opaque 75 est une pièce collé à la base 72 par de la colle 18' et avec sur ses surfaces latérales les revêtements opaques 75a 75b (adhésif monoface, peinture...)

On ajoute une autre première bande antimélange 8a de largeur D01 égale à D0 comme un ruban adhésif noir monoface sur la première face 12. L'aile 71 dépasse de la bande anti mélange et y est collée par le double face transparent 18.

Par précaution, on pourrait prolonger le ruban adhésif noir 8a sur l'aile 71 coté espace interne 74 en regard de la première surface latérale opaque 75a.

On fait de même coté deuxième vitrage. On ajoute une autre deuxième bande antimélange 8'a de largeur D02 égale à D'0 comme un ruban adhésif noir monoface. L'aile 73 dépasse de l'autre deuxième bande anti mélange et y est collée par le double face transparent 18 ou une colle transparente.

Par précaution, on pourrait prolonger le ruban adhésif noir 8'a sur l'aile 73 coté espace interne 74' en regard de la deuxième surface latérale opaque 75b.

En variante on utilise un adhésif double face noir pour les bandes 8a et 8'a et la colle 18 n'est plus nécessaire.

En variante, le profilé est chaussé et on n'utilise pas de colle 18.

Si n2 descend sous 1,2 (resp si n'2 descend sous 1,2) on peut retirer la première (resp deuxième) bande antimélange 8,8' et toutes autres bandes anti mélange 8a, 8'a.

La porosité peut être en outre monodisperse en taille, la taille des pores étant alors calibrée. 80% ou même plus des pores sont fermés de forme sphériques (ou ovales) présentent un diamètre entre 75nm et 100nm.

On peut utiliser, en variante, seulement le vitrage 1" avec la première couche sol gel de silice 2 poreuse avec son revêtement de protection 2a (de préférence) - la face opposée alors en contact avec le deuxième intercalaire de feuilletage. Mais étant donné l'épaisseur millimétrique du vitrage central 1" on augmente le trajet des rayons guidés et cela peut diminuer l'efficacité d'extraction.

Un exemple de fabrication de la couche de silice poreuse est décrit dans le WO2008/059170. De préférence, la cuisson à haute température est après le dépôt liquide de la couche de silice dense sur la couche de silice poreuse séchée.

La figure 4 montre une vue partielle en coupe d'un ensemble vitré lumineux 400 dans un quatrième mode de réalisation.

Seules les différences par rapport au troisième mode 300 sont décrites. L'ensemble vitré lumineux 400 diffère comme suit de l'ensemble vitré 300.

Le profil 7 est en E, métallique et par exemple d'au plus 5mm (épaisseur inférieure ou égale à la distance face de collage - face interne), avec une branche centrale 75 intercalée entre les faces interne 11 et de collage 11'. Les intercalaires 3,3', les couches bas indice 2, 2' et leurs revêtements de protection 2a,2b, le verre central 1" étant en retrait des première et deuxième tranches 13,13' de D0, D'0 (D'0 égal à D0). Sur cette branche centrale 75 est agencé d'un côté sur la première surface latérale 75a le premier support PCB 41, de l'autre sur la deuxième surface latérale 75b le deuxième support PCB 41'.

Les diodes 4, 4' sont à émission latérale (« side emitting » en anglais). Chaque face émettrice de la première source 4 (resp. de la deuxième 4') est parallèle au premier support PCB 41 (respectivement deuxième support PCB 41').

La largeur de la face émettrice est par exemple de 1mm. d1 est de l'ordre de 2,5mm (pour 4mm de verre, avec diodes centrées).

Les supports PCB 41, 41' peuvent participer au cloisonnement anti mélange des lumières. Ainsi le premier support PCB 41 est opaque (ou avec un revêtement opaque coté 74) et forme le premier cloisonnement opaque 75'a et le deuxième support PCB 41' est opaque (ou avec un revêtement opaque coté 74') et forme le deuxième cloisonnement opaque 75'b.

Chaque support PCB est collé à la surface de la branche centrale avec de la colle 18' qui peut être opaque.

On préfère que la tranche du premier support PCB (resp. deuxième) ne soit pas en regard de la première tranche (resp. de la deuxième).

Alternativement, il n'y a pas de retrait, comme dans l'exemple de la figure 3. Les supports PCB 41,41' (et la branche centrale 75 les portant) sont alors contre la tranche centrale.

Par précaution, on pourrait prolonger le ruban adhésif noir 8a sur l'aile 71 coté espace interne 74 en regard du premier PCB 41.Par précaution, on pourrait prolonger le ruban adhésif noir 8'a sur l'aile 73 coté espace interne 74' en regard du deuxième PCB 41'.

Alternativement, les supports PCB 41,41' sont fixés sur les ailes 71,73 du profilé de montage 7.

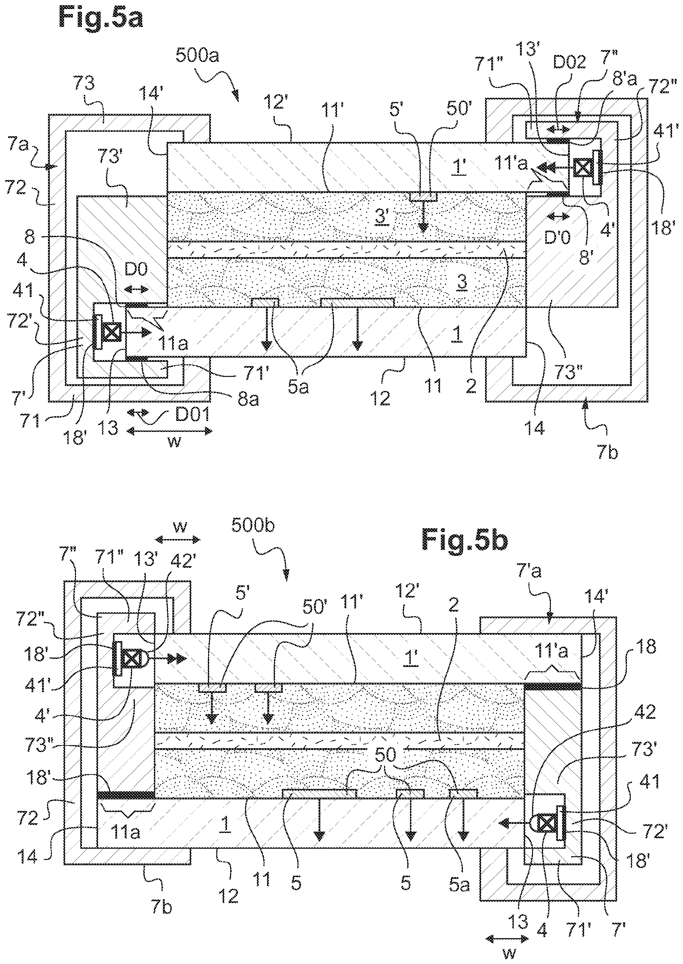

La figure 5a montre une vue partielle en coupe d'un ensemble vitré lumineux 500a dans un cinquième mode de réalisation.

Seules les différences par rapport au deuxième mode 200a sont décrites. L'ensemble vitré lumineux 500a diffère comme suit de l'ensemble vitré 200a.

La deuxième source de lumière à diodes 4' est du côté opposé de l'ensemble vitré par rapport à la première source de lumière à diodes 4. La deuxième tranche 13' est donc du côté opposé de l'ensemble vitré par rapport à la première tranche 13. De même la deuxième bande anti mélange 8' est du côté opposé de l'ensemble vitré par rapport à la première bande anti mélange 8. Les premier et deuxième vitrages 1,1' restent de taille identique mais sont décalés latéralement définissant une première zone dépassante 11a et une deuxième zone dépassante 11'a.

Un profilé de fixation 7' du PCB 41 au premier vitrage 1 est de section en U, métallique par exemple, et est rapporté sur le premier vitrage sur la première zone dépassante 11a de la face interne 11 due au décalage des vitrages.

Un autre profilé de fixation 7" du PCB 41' au deuxième vitrage 1' est métallique par exemple, de section en U et est rapporté sur le deuxième vitrage 1' (sur la deuxième zone dépassante 11'a de la face de collage 11' due au décalage des vitrages).

Un profilé de montage de l'ensemble vitré 7a, 7b est rapporté sur toute l'épaisseur de l'ensemble vitré, de chaque côté renfermant profilés de fixation 7', 7".

Les première et deuxième bandes antimélanges 8 et 8' sont dans les zones dépassantes 11a, 11'a.-On préfère rajouter d'autres bandes antimélanges 8a,8'a de largeur D01, D02 respectivement égales à D0, D'0 sur les première et deuxième faces 12, 12' en face des bandes 8 et 8'. Par exemple chaque bande antimélange est un ruban adhésif noir double face pour coller le profilé 7, 7' ou encore est monoface.

On peut préférer en outre que les ailes 71" et 73" soient opaques (parois internes avec dépôt, noir ou ruban adhésif noir) pour renforcer l'anti-mélange.

Dans une première variante on supprime les ailes 71' et 71", les profilés sont de section en L.

Dans une deuxième variante présentée en figure 5'a qui montre une vue partielle coté première tranche 13, le premier support PCB est collé par de la colle thermique à la base 72 d'un profilé métallique 7 en U fixé au vitrage multiples par ses ailes 71, 73 (chaussement, colle...).

La première bande anti mélange 8 a une surface libre, par exemple ruban adhésif noir monoface ou dépôt noir (émail, etc).

L'autre première bande anti mélange 8a est par exemple ruban adhésif noir double face ou un dépôt noir (émail, etc).

On peut ajouter un revêtement opaque interne (coté intérieur 74) sur les ailes 71 et 73.

En variante, si la base 72 n'est pas métallique on intercale entre PCB 41 et la base une barrette métallique.

Coté deuxième tranche, on utilise le même montage.

La figure 5b montre une vue partielle en coupe d'un ensemble vitré lumineux 500b dans une variante du cinquième mode de réalisation.

Seules les différences par rapport au cinquième mode 500a sont décrites. L'ensemble vitré lumineux 500b diffère comme suit de l'ensemble vitré 500a.

Le profilé de fixation 7' ne forme pas une surépaisseur de l'ensemble vitré car il est en regard de la zone dépassante 11'a du deuxième vitrage 1'. Il est fixé par son aile 73' à cette zone dépassante (au-delà de la deuxième surface d'extraction 50'). L'autre profilé 7" ne forme pas non plus une surépaisseur de l'ensemble vitré car il est en regard de la zone dépassante 11a du premier vitrage 1'. Il est fixé par son aile 73" à cette zone dépassante (au-delà de la première surface d'extraction 50).

On supprime éventuellement les bandes antimélange.

Alors, les diodes comportent une lentille 42, 42' pour un diagramme d'émission étroit. Alternativement on utilise une couche bas indice (avec un revêtement de protection) comme isolateur optique avec n2 de moins de 1,2. On ajoute des profilés additionnels 7a et 7b renfermant profilé 7' et 7".

La figure 1' montre une vue partielle en coupe d'un ensemble vitré lumineux 100' dans une variante du premier mode de réalisation.

Seules les différences par rapport au premier mode 100 sont décrites. L'ensemble vitré lumineux 100' diffère comme suit de l'ensemble vitré 100 par l'usage d'un profilé de positionnement 7' des diodes 4 et 4' au sein du profilé de montage 7, pour une application de cloison.

Le profilé de montage 7 est de préférence métallique, en aluminium ou en inox, mais peut être en matière plastique, en particulier composite.

Le profilé 7 présente un corps de type en U comprenant une âme 72 et deux ailes 71 et 73 perpendiculaires à l'âme et parallèles et espacées entre elles.

La première aile 71 du profilé de montage 7 est mobile ou amovible, procurant un accès à l'intérieur du profilé à tout moment, en particulier ultérieurement à l'installation de la cloison.

L'aile 71 peut être mobile ou amovible par rapport au point de jonction avec l'âme 72, ou bien tel qu'illustré, au niveau de l'extrémité distale 71a d'une extension fixe 72a se projetant perpendiculairement depuis l'âme 72.

L'aile 71 est mobile en ce sens qu'elle pivote par rapport à un axe longitudinal qui suit l'extension 71a, et forme une charnière invisible esthétiquement de l'extérieur du profilé. Le pivotement de l'aile se fait en direction de l'extérieur du profilé 7, vers l'opposé de la première aile 71 (tel que selon la flèche F1 de la figure 1').

Des moyens d'étanchéité 181 amovibles sont prévus en étant apposés contre les premières et deuxièmes faces (extérieures) 12,12' et les ailes respectives 71 et 73 du profilé de montage. Ces moyens d'étanchéité sont par exemple fixés par clipsage.

Un profilé dit de positionnement 7' de section en U porte les supports PCB et les diodes 4, 4' et est dans le volume intérieur 74a du profilé de montage. Les ailes 71', 73' de ce profilé 7' sont espacés des ailes 71,73 du profilé de montage.

Les ailes 71' et 73' sont fixées par un adhésif double face transparent 18 aux première et deuxième faces extérieures 12,12'.

En variante, par précaution :,
- les rubans adhésifs transparents 18 sont remplacés par des dépôt d'émail noir (émail noir également ajouté en faces de collage et interne) ou ruban adhésif noir double face
- on ajoute un cloisonnement commun à surfaces latérales opaques comme déjà décrit fixé à la base 72', saillant par rapport aux diodes 4,4'
- les supports PCB sont remplacés par un support PCB commun (portant de préférence le cloisonnement opaque)

Par simplification le montant du profilé 7 en U encadrant le vitrage feuilleté n'est pas montré coté tranches opposées 14, 14'.

On peut rajouter un autre profilé interne similaire et d'autres diodes sur la tranche opposée 14,' à la première tranche 13 notamment dans le cas d'un vitrage avec une large première surface d'extraction et/ou avec plusieurs motifs centimétriques espacés.

On peut rajouter sur l'autre profilé interne d'autres diodes sur la tranche opposée 14' à la deuxième tranche 13' notamment dans le cas d'un vitrage avec une large deuxième surface d'extraction et/ou avec plusieurs motifs centimétriques espacés.

La figure 1'a montre une vue partielle d"une porte vitrée à motifs bi couleurs.

L'ensemble vitré comporte quatre premières surfaces d'extractions 50a à 50d sous forme de bandes horizontales rectangulaires de largeur (hauteur) croissante en direction du sol par exemple à l'instant t0 formant des zones lumineuses rouges.

Il y a en outre deux deuxièmes surface d'extraction 50'a, 50'b par exemple à l'instant t0 formant des zones lumineuses vertes.

Plus précisément, l'un des deuxièmes surface d'extraction 50'a est une bande horizontale rectangulaire entre deux premières surfaces d'extractions 50a, 50b (en vision de face). La troisième première surface d'extraction 50c (en partant du haut) encadre (en vision de face) un ensemble de caractères sous forme de LOGO formant l'autre des deuxièmes surfaces d'extraction 50'b.

Entre les bandes d'extractions 50a à 50e et sur la partie haute et basse il y a des zones de transparence 17.

L'ensemble vitré comporte un cadre de montage 7a, 7b, 7c, 7d par exemple métallique ou plastique (PVC etc) ou même bois - (monolithique ou en plusieurs pièces) - par exemple de section en U. Dans le volume intérieur du profilé de montage longitudinal et vertical 7a côté première tranche, on place un ensemble de diodes 4 rouges sur un support PCB 41a face à la première tranche. Dans le volume intérieur du profilé de montage longitudinal et vertical 7b côté deuxième tranche opposée à la première tranche, on place un deuxième ensemble de diodes 4' vertes, sur un support PCB 41' face à la deuxième tranche.

La figure 1" montre une vue partielle en coupe d'un ensemble vitré lumineux 100" dans une variante du deuxième mode de réalisation.

Seules les différences par rapport au deuxième mode 200a sont décrites. L'ensemble vitré lumineux 100" diffère comme suit de l'ensemble vitré 200a.

Il s'agit par exemple d'une porte vitrée lumineuse de meuble réfrigéré commercial. Le vitrage multiple est un vitrage isolant. Aussi, on ajoute un troisième vitrage 1" coté deuxième face 12' (qui n'est plus la face la plus extérieure) avec des troisième et quatrième faces 11",12", troisième vitrage 1" d'épaisseur égale à au moins 3,8mm (4mm en ou 6mm environ standard), identiques à celles des premier et deuxième vitrages 1,1' et la troisième face est espacée par une lame de gaz 60 de la deuxième face 12'. En périphérie des deuxième et troisième faces 12, 11'" un premier joint polymérique 6 en cadre et un intercalaire 6' formant espaceur.

Usuellement, l'intercalaire 6' est fixé à l'intérieur du vitrage par ses faces latérales aux faces 12, 11'" des vitrages 1',1" par du caoutchouc butyl (non montré) qui a également pour rôle de rendre étanche l'intérieur du vitrage isolant à la vapeur d'eau. L'intercalaire 6' est disposé en retrait à l'intérieur du vitrage isolant et à proximité des bords longitudinaux des tranches desdites feuilles de verre, de façon à ménager une gorge périphérique dans laquelle est injecté un premier joint polymérique 6 du type mastic, tel qu'en polysulfure ou polyuréthane, noir. Le mastic 6 confirme l'assemblage mécanique des deux feuilles de verre 1',1" et assure une étanchéité à l'eau liquide ou aux solvants.

On ajoute une autre première bande anti mélange 8 côté première face (extérieure) 12 de largeur D01 égale à D0. Il s'agit d'un adhésif noir monoface ou double face mince comme ceux déjà décrits.

Un profilé métallique de positionnement 7' des diodes 4,4' comporte :
- une partie dite de fond 72' en regard des première et deuxième tranches 13,13'
- une première partie latérale 71' collée à la première face extérieure 12 (ou contre) en créant une surépaisseur d'au plus 1,5mm, et même d'au plus 1mm ou même d'au plus 0,5mm. pour ne trop écarter le profilé d'encadrement 7 du premier vitrage,
- une deuxième partie latérale ou retour 71' (extension de la partie de fond) collée au premier joint 6 par un adhésif double face 18a, retour sans contact avec le troisième vitrage 1" pour ne pas créer de pont thermique, retour adjacent et longeant la deuxième tranche 13', retour permettant la fixation à la tranche du profilé au vitrage isolant.

La première partie latérale 71' dépasse sur la première face 12 sur une largeur de D01 ou même jusqu'à W (comme le profilé extérieur décrit ci-après) sans qu'il y ait de préférence de moyen opaque au-delà de D01.

Le joint 6 remplit la fonction de l'autre deuxième bande d'anti mélange de largeur D02 égale à D'0. En variante le caoutchouc butyl forme une partie de l'autre deuxième bande antimélange en complément du premier joint.

Le retour peut aussi comprendre un revêtement opaque sur sa surface interne (côté espace 74') en regard de la deuxième surface latérale 75b.

La troisième face 11" porte une couche 17 basse émissive telle qu'un empilement monoargent.

La quatrième face 12" est la face côté intérieur du meuble réfrigéré commercial. La première face extérieure 12 est côté usager.

Le premier motif d'extraction 5 est par exemple sur la première face 12, comme un émail blanc ou tout autre un revêtement diffusant blanc. Le deuxième motif d'extraction 5' est par exemple sur la deuxième face 12' comme un émail blanc ou tout autre revêtement diffusant blanc.

La porte vitrée 100" comprend le profilé d'encadrement 7 fixé au vitrage isolant de préférence par une colle dite de montage 180 opaque, profilé masquant premier joint 6 et intercalaire 6'.

Le montant d'encadrement 7 est en deux parties l'une métallique et l'autre isolant thermique pour éviter tout pont thermique (si tout métallique). Une première partie métallique est coudée par exemple profilé de section en L :
- avec une première partie frontale 72a en regard de la tranche du vitrage isolant. (première tranche 13 voire la deuxième tranche sans aller jusqu'à la troisième tranche 13", avec la face cotée tranche du vitrage adhésivée avec de la colle opaque 180
- avec une première aile 71 collée à la première face extérieure par la colle 180 opaque au-dessus de la première partie latérale 71' et dépassante (largeur W' au-dessus de la première face 12 entre 1cm et 3cm).

La deuxième partie du profilé 7 est isolante thermique, de préférence polymérique solidaire par une colle 182 avec la première partie, coudée, de section en L :
- avec une deuxième partie frontale 72b en regard de la tranche du vitrage isolant. (sans aller jusqu'à la première tranche 13) collé à la première partie frontale de la première partie métallique,
- avec une deuxième aile 73 collée à la deuxième face extérieure 12" (quatrième face).

Le profilé de positionnement des diodes est donc dans le volume intérieur de ce profilé 7.

La troisième tranche 13" dépasse des première et deuxième tranches 13,13'. voire affleure ou dépasse la face arrière du profilé de positionnement.

Les parties latérales réfléchissent la lumière latérale des diodes pour la diriger vers les première et deuxième tranches d'injection 13, 13'.

La colle de montage 18 est absente de l'espace entre la première tranche et première source de lumière 4, et entre la deuxième tranche et deuxième source de lumière 4' grâce au profilé de positionnement 7.

Le cloisonnement 75 de la lumière des première et deuxième sources de lumière est ici distinct du profilé de positionnement, et est collé sur la pièce de fond 72'.

Naturellement en variante :
- on peut comme en figure 2d, utiliser un PCB commun et le cloisonnement est collé sur ce PCB.
- et/ou on place deuxième source 4' sur son support 41', deuxième bande de mélange en regard de la deuxième tranche sur un côté opposé du vitrage isolant. On rajoute un deuxième cloisonnement comme le premier et un profilé de positionnement et d'encadrement comme ceux décrits.

En variante, on peut former une fenêtre lumineuse avec une telle structure de vitrage isolant et sources de lumière. Le profilé de montage (comme le profilé de posiotnnement) peut être modifié.

La figure 2" montre une vue partielle en coupe d'un ensemble vitré lumineux 200" qui est une porte de meuble réfrigéré dans une variante du mode de réalisation précédent décrit en figure 1".

Seules les différences par rapport à la porte de meuble réfrigéré 100" sont décrites. La porte de meuble réfrigéré 200" diffère comme suit de la porte de meuble réfrigéré 100".

Le profilé de positionnement 7' est en plusieurs pièces solidaires car :
- la première partie latérale est une feuille 71' opaque comme un ruban adhésif noir monoface mince comme déjà décrit- dont une partie 71'b est collée la première face extérieure 12 sur la largeur D01 et une partie 71'a est collée à la pièce de fond (en sa face arrière).
- la partie de fond 72' est une barrette de section rectangulaire,
- une entretoise 7'a, par exemple métallique est collée à la partie de fond 72' et au premier joint 6.

La tranche 13" ici est alignée avec les autres tranches 13,13'.

L'entretoise peut aussi comprendre un revêtement opaque sur sa surface interne (côté espace 74') en regard de la deuxième surface latérale 75b.

En variante, un profilé est de section n L, par exemple un extrudat, forme la partie de fond avec une zone plus épaisse (le retour) collée au mastic 6.

En variante, la première partie latérale 71' est une feuille métallique adhésivée de 50 à 100µm d'épaisseur- par exemple une feuille aluminium collée par adhésif double face noire sur la largeur D01.

La figure 3" montre une vue partielle en coupe d'un ensemble vitré lumineux 300" qui est une porte de meuble réfrigéré dans une variante du mode de réalisation décrit en figure 1".

Seules les différences par rapport à la porte de meuble réfrigéré 100" sont décrites. La porte de meuble réfrigéré 300" diffère comme suit de la porte de meuble réfrigéré 100".

La tranche 13" ici est alignée avec les première et deuxième tranches 13, 13'.

Le profilé de positionnement 7' est en plusieurs pièces solidaires car la première partie latérale 71' est une feuille opaque comme un ruban adhésif noir monoface mince déjà décrit- dont une partie 71'b est collée la première face extérieure 12 sur la largeur D01 et une partie 71'a est collée à la partie de fond (en sa face arrière).

Le retour ou pièce de fixation 7'a est creux de section rectangulaire (ou carré), la partie de fond 72' formant un décrochement latéral de cette pièce de fixation.

La deuxième partie du profilé 7 ne s'étend pas jusqu'à la deuxième face extérieure 12" (quatrième face). Par exemple il s'agit d'un profilé en L contre la troisième tranche 13".

On ajoute un émail noir voire blanc, opaque, 19 sur la quatrième face 12" pour masquer premier joint 6 et espaceur 6'.

La figure 1"a représente une vue schématique d'un meuble réfrigéré 1000 avec la porte lumineuse du meuble réfrigéré de type déjà décrite en figure 1" mais avec des diodes sur deux côtés opposés du vitrage isolant.

Ce meuble réfrigéré est ici une armoire comportant des étagères 1001 (en pointillés) et deux portes comportant chacune un vitrage feuilleté et isolant lumineux comportant une première face principale extérieure 12 côté usager (visible ici) deuxième face principale interne (côté étagère) et une tranche avec quatre bords. Les bords longitudinaux de la tranche sont à la verticale. Le profilé d'encadrement est un cadre fixé en périphérie du vitrage isolant 1,1",1'" rectangulaire. Le cadre comporte quatre montants aboutés aux coins du vitrage isolant. Les deux montants longitudinaux 7a et 7b sont identiques et verticaux. Deux montants latéraux 7c et 7d sont horizontaux. Les première et deuxième sources de lumière 4,4' (masquées) sont respectivement dans le volume intérieur du premier montant longitudinal 7a et dans le volume intérieur du deuxième montant longitudinal 7b.

Chaque porte est ouvrante vers l'extérieure grâce à un pivot 7p sur les montants supérieur et inférieur 7c, 7d

Les premiers motifs 5 (mot ...) et les deuxièmes motifs 5 (logo etc) sont de part et d'autre de la visualisation d'une étagère.

Diverses zones lumineuses à deux couleurs en statique ou en dynamique sont possibles pour repérer des produits classés par type et/ou des promotions.

Comme montré en figure 1"b (vue de face d'une porte de meuble réfrigéré côté première face 12), les premiers motifs 5, 50 forment l'image du produit et les deuxièmes motifs 5',50' les noms du type de produits sur l'étagère (« glace » « sorbet » par exemple) de part et d'autre du nom.

Comme montré en figure 1"c, (vue de face d'une porte de meuble réfrigéré côté première face 12), les premiers motifs 5 forment l'image de ce produit et les deuxième motifs 5',50' le nom du type de produit sur l'étagère (« boisson ») au-dessus.

Comme montré en figure 1"d, (vue de face d'une porte de meuble réfrigéré côté première face 12), les premiers motifs 5,50 forment avec les deuxièmes motifs 5',50' un LOGO à deux couleurs (un « M » entrelacé avec un « W »).

Comme montré en figure 1"e, (vue de face d'une porte de meuble réfrigéré côté première face 12), les premiers motifs 5, 50 et les deuxièmes motifs 5',50' signalent les promotions du mois.

## Revendications

1. Ensemble vitré lumineux (100, 100', 100", 200", 200a à 200e, 300, 300", 400, 500a, 500b) comprenant :
- un vitrage multiple, avec des faces principales extérieures dites première face extérieure et deuxième face extérieure, comportant :
- un premier vitrage (1) d'indice de réfraction n1, avec des faces principales (11, 12), appelées face interne (11) et première face (12), et une première tranche (13),
- en contact optique avec le premier vitrage, un deuxième vitrage (1'), d'indice de réfraction n'1, avec des faces principales appelées face de collage (11') et deuxième face (12'), la face de collage étant en regard de la face interne, et une tranche (13'), dite deuxième tranche,
- une première source de lumière (4), couplée optiquement au premier vitrage par la première tranche, premier vitrage guidant ainsi la lumière émise par la première source, première source de lumière pilotée, en statique ou dynamique, pour émettre à l'instant t0 un premier rayonnement principal à une première longueur d'onde dite λ1 et de préférence commutable pour émettre à l'instant t'≠t0 un deuxième rayonnement principal à une deuxième longueur d'onde dite λ2 notamment distincte de λ1,
- des premiers moyens d'extraction de lumière (5, 5a), associés au premier vitrage, comportant un ou une pluralité de premiers motifs d'extraction définissant une première surface d'extraction (50), la lumière extraite étant visible côté première face extérieure, de préférence qui est la première face, premiers moyens d'extraction tels que la lumière extraite audit t0 est d'une première couleur dite C1 et de préférence audit t' est d'une deuxième couleur dite C2 notamment distincte de C1,
- une deuxième source de lumière (4'), couplée optiquement au deuxième vitrage, par la deuxième tranche, deuxième vitrage guidant ainsi la lumière émise par la deuxième source de lumière, deuxième source de lumière pilotée en statique ou dynamique, pour émettre audit t0 un troisième rayonnement principal à une longueur d'onde dite λ3 distincte de λ1 et de préférence, pour émettre audit instant t' un quatrième rayonnement principal à une longueur d'onde dite λ4,
- des deuxièmes moyens d'extraction de lumière (5') associés au deuxième vitrage, comportant un ou une pluralité de deuxièmes motifs d'extraction définissant une deuxième surface d'extraction (50'), deuxième(s) motif(s) décalés du ou des premiers motifs d'extraction, la lumière ainsi extraite des deuxièmes moyens d'extraction étant visible de la première face extérieure, deuxièmes moyens d'extraction de lumière tels que la lumière ainsi extraite à t0 est d'une couleur dite C3 distincte de C1, et de préférence audit t' est d'une couleur dite C4 notamment distincte de C2,
- entre la face interne et la face de collage, un isolateur optique (2), dit premier isolateur optique, transparent, d'indice de réfraction n2 tel que, aux longueurs d'onde de la première source de lumière, n1-n2 est d'au moins 0,08, qui est en regard de la face interne : entre la première tranche et la première surface d'extraction (50) et/ou entre le ou les premiers motifs d'extraction (5a), de préférence couvrant la première surface d'extraction (50),
le premier isolateur optique est feuilleté au premier vitrage au moyen d'un premier intercalaire de feuilletage (3), en première matière polymérique transparente, qui est d'indice de réfraction n3 tel que n3-n1, en valeur absolue, est inférieur à 0,05 aux longueurs d'onde de la première source de lumière, lorsque les premiers moyens d'extraction sont du côté face interne le premier isolateur optique est plus éloigné de la face interne que les premiers moyens d'extraction
- entre la face de collage et le premier isolateur optique un deuxième intercalaire de feuilletage (3'), en deuxième matière polymérique transparente, qui est d'indice de réfraction n'3 tel que n'3-n'1, en valeur absolue, inférieur à 0,05 aux longueurs d'onde de la deuxième source de lumière et en contact adhésif avec le deuxième vitrage,

2. Ensemble vitré lumineux (100", 200", 200a à 200e, 300, 300",400, 500a) selon la revendication précédente **caractérisé en ce qu'**une première bande dite antimélange (8, 81, 82, 83) est en contact optique avec la face interne (11), en périphérie de la face interne, s'étendant à partir de la première tranche (13), le long de la première tranche, bande de largeur D0 au moins égale à 0,8 Dmin où Dmin= d1 / tan ((π/2)-arsin(n2/n1)) et de préférence inférieure à 2cm où d1 est la distance entre la première source de lumière (4) et la face interne, première bande opaque (8,81,82) ou première bande diffusante (83) avec un facteur de transmission dans le visible d'au plus 2% côté face interne, et de préférence une autre première bande dite antimélange (8a) est en contact optique avec la première face, en périphérie de la première face, s'étendant à partir de la première tranche, le long de la première tranche, bande de largeur D01 au moins égale à 0,8Dmin, autre première bande opaque de préférence, **en ce qu'**une deuxième bande dite antimélange (8', 81', 82', 83') est en contact optique avec la face de collage (11'), en périphérie de la face de collage, s'étendant à partir de la deuxième tranche, le long de la deuxième tranche, bande de largeur D'0 au moins égale à 0,8D'min avec D'min= d'1 / tan ((π/2)-arsin(n'2/n'1)) et de préférence inférieure à 2cm, où d'1 est la distance entre la deuxième source de lumière (4') et la face de collage, deuxième bande opaque (8', 81', 82') ou deuxième bande diffusante (83') avec un facteur de transmission dans le visible d'au plus 2% côté face de collage et de préférence une autre deuxième bande dite antimélange (8'a, 6) est en contact optique avec la deuxième face, en périphérie de la deuxième face, s'étendant à partir de la deuxième tranche, le long de la deuxième tranche, bande de la largeur D02 au moins égale à 0,8D'min, autre deuxième bande opaque de préférence.

3. Ensemble vitré lumineux (100", 200", 300") selon l'une des revendications précédentes en ce que le vitrage multiple forme un vitrage isolant et comporte un troisième vitrage ayant une troisième face principale (11") et une quatrième face principale (12"), les deuxième face et troisième faces étant espacées par une première lame de gaz, et en périphérie des deuxième et troisième faces un premier joint polymérique (6) en cadre formant ou faisant partie de l'autre deuxième bande anti mélange de préférence opaque.

4. Ensemble vitré lumineux (500a) selon l'une quelconque des revendications 2 ou 3 en ce que les première et deuxième sources de lumière sont sur des côtés opposés du vitrage multiple, le premier vitrage dépasse de la deuxième tranche formant une première région dépassante (11a), la première bande de masquage, opaque (8) de préférence, est dans la première région dépassante sur la face interne, notamment un adhésif opaque, et même une autre première bande de masquage (8a) est dans la première région dépassante sur la première face, notamment un adhésif opaque, et en ce que le deuxième vitrage dépasse de la première tranche formant une deuxième région dépassante (11'a) et la deuxième bande de masquage, opaque de préférence, est dans la deuxième région dépassante (8') notamment un adhésif opaque et même une autre deuxième bande de masquage (8'a), opaque de préférence, est dans la deuxième région dépassante sur la deuxième face notamment un adhésif opaque.

5. Ensemble vitré lumineux (100, 100', 500b) selon l'une quelconque des revendications précédentes **caractérisé en ce que** la première source de lumière (4) comprend une première diode électroluminescente (4) avec ledit premier rayonnement principal à λ1 et notamment une deuxième diode électroluminescente avec ledit deuxième rayonnement principal à λ2, chacune des première et éventuelle deuxième diodes est espacée de la première tranche (13) et au moins 80% du flux lumineux émis par chacune des première et éventuelle deuxième diodes est dans un cône d'émission entre -α1 et α1 avec α1 = Arsin(n1 * sin (α2)) où α2=(π/2)-Arsin (n2/n1) et correspond à l'angle de réfraction dans le premier vitrage, et **en ce que** la deuxième source de lumière (4') comprend une troisième diode électroluminescente avec ledit troisième rayonnement principal à λ3 et éventuellement une quatrième diode électroluminescente avec ledit quatrième rayonnement principal à λ4, la troisième diode, voire la quatrième diode éventuelle, est espacée de la deuxième tranche (13',14') et au moins 80% du flux lumineux émis par chacune de la troisième et éventuelle quatrième diodes est dans un cône d'émission entre -α'1 et α'1 avec α'1 = Arsin(n'1 * sin (α'2)) où α'2=(π/2)-Arsin (n'2/n'1) et correspond à l'angle de réfraction dans le deuxième vitrage.

6. Ensemble vitré lumineux (100", 200", 200a à 200e, 300,300", 400, 500a) selon l'une quelconque des revendications précédentes en ce que l'ensemble vitré comporte :
- un premier moyen dit cloisonnement (75, 75a, 75'a) de préférence opaque empêchant tout ou partie de la réfraction de la lumière émise par la première source de lumière à la tranche du vitrage multiple entre la face interne et la deuxième face côté première tranche et de préférence un deuxième moyen dit cloisonnement (75, 75b, 75'b) de préférence opaque empêchant tout ou partie de la réfraction de la lumière émise par la deuxième source de lumière à la tranche du vitrage multiple entre la face de collage et la première face côté deuxième tranche,
- ou de préférence lorsque la première et la deuxième source de lumière sont du même côté du vitrage multiple, un moyen dit cloisonnement commun (75, 75a, 75b, 75'a, 75'b) de préférence opaque empêchant tout ou partie de la réfraction de la lumière émise par la première source de lumière à la tranche vitrage multiple entre la face interne et la deuxième face côté première tranche et empêchant tout ou partie de la réfraction de la lumière émise par la deuxième source de lumière à la tranche entre face de collage et face interne côté deuxième tranche.

7. Ensemble vitré lumineux (100, 100', 100", 200", 200a à 200e, 300,300', 400,500a, 500b) selon l'une quelconque des revendications précédentes **caractérisé en ce que** :
à t0 la première source de lumière (4) comporte une diode électroluminescente dite diode verte qui émet dans le vert avec λ1 dans une gamme allant de 515 à 535nm, et la deuxième source de lumière (4') comporte une diode électroluminescente dite diode rouge qui émet dans le rouge avec λ3 dans une gamme allant de 615nm à 635nm, le flux émis F1 par la diode verte est inférieur à 0,8 fois le flux F3 émis par la diode rouge et/ou
à t'la première source de lumière (4) comporte une diode électroluminescente dite diode rouge qui émet dans le rouge avec λ2 dans une gamme allant de 615nm à 635nm, et la deuxième source de lumière (4') comporte une diode électroluminescente dite diode verte qui émet dans le vert avec λ4 dans une gamme allant de 515 à 535nm, le flux émis F4 par la diode verte est inférieur à 0,8 fois le flux F2 émis par la diode rouge.

8. Ensemble vitré lumineux (100, 100', 100", 200", 200a à 200e, 300, 300", 400, 500a, 500b) selon l'une quelconque des revendications précédentes en ce que la première source de lumière (4) est un premier ensemble de diodes électroluminescentes sur une carte de circuit imprimé dite premier support PCB (41) et les diodes sont couplées à la première tranche, et de préférence la deuxième source de lumière (4') est un deuxième ensemble de diodes électroluminescentes sur une carte de circuit imprimé dite deuxième support PCB (41'), et les diodes sont couplées à la deuxième tranche, premier et deuxième support PCB étant espacés, jointifs ou en un support PCB commun.

9. Ensemble vitré lumineux (100", 200", 200a à 200e, 300, 300", 400, 500a) selon la revendication précédente en ce que le premier ensemble de diodes électroluminescentes et le deuxième ensemble de diodes électroluminescentes sont agencés du même côté du vitrage multiple et à émission par le haut, et le premier et/ou deuxième support PCB ou encore un support PCB dit support PCB commun formant les premier et deuxième supports PCB, a une face principale en regard des première et deuxième tranches et le support PCB commun porte un cloisonnement dit commun de préférence pièce avec deux revêtements opaques (75a, 75b) coté premier ensemble et côté deuxième ensemble sensiblement parallèles au vitrage multiple, entre le premier ensemble de diodes électroluminescentes et le deuxième ensemble de diodes électroluminescentes, cloisonnement commun empêchant tout ou partie de la réfraction de la lumière émise par le premier ensemble de diodes à la tranche entre face interne et deuxième face et empêchant tout ou partie de la réfraction de la lumière émise par le deuxième ensemble de diodes à la tranche entre face de collage et première face, de préférence saillant par rapport aux première et deuxième ensemble de diodes électroluminescentes en direction des première et deuxième tranches.

10. Ensemble vitré lumineux (100", 200", 300") selon l'une quelconque des revendications précédentes en ce que le vitrage multiple formant un vitrage isolant, comportant un troisième vitrage ayant une troisième face principale (11") et une quatrième face principale (12") et une troisième tranche (13"), les deuxième face et troisième faces étant espacées par une première lame de gaz, et en périphérie des deuxième et troisième faces un premier joint polymérique (6) en cadre,
en ce que les première et deuxième sources de lumière (4, 4'), sont agencés du même côté du vitrage multiple, et en ce que l'ensemble vitré comporte un profilé (7') dépassant sur la première face extérieure qui est la première face ou côté première face et en regard des première et deuxième tranches définissant un volume contenant les première et deuxième sources de lumière, le profilé étant de préférence interne à un profilé additionnel (7), notamment de montage de l'ensemble vitré, le profilé dit de positionnement (7') comporte :
- une partie dite de fond (72') en regard de la tranche du vitrage multiple qui inclut les première et deuxième tranches et d'une tranche dite centrale entre les première et deuxième tranches,
- une première partie latérale (71') collée ou contre la première face extérieure (12) en créant une surépaisseur d'au plus 1,5mm, notamment un adhésif opaque rapporté à la partie de fond
- soit une partie (75) formant un cloisonnement de la lumière des première et deuxième sources de lumière, fixée ou monolithique avec la partie de fond et contre la tranche centrale ou espacé d'au plus 1mm, soit un cloisonnement de la lumière des première et deuxième sources de lumière (75) distinct du profilé de positionnement contre la tranche centrale ou espacé d'au plus 1mm, le cloisonnement de préférence opaque empêchant tout ou partie de la réfraction de la lumière émise par la première source de lumière à la tranche entre face interne et deuxième face et empêchant tout ou partie de la réfraction de la lumière émise par la deuxième source de lumière à la tranche entre face de collage et première face,
et en ce qu'une pièce, dite de fixation (73') adjacente et longeant la deuxième tranche (13'), est fixée au premier joint polymérique (6) et solidaire ou monolithique avec la partie de fond,
et en ce que le profilé additionnel éventuel (7) comporte :
- une base (72) en regard des premières et deuxième tranches collée, contre ou espacée de la partie de fond,
- une première aile (71) fixée à la première face extérieure, au-dessus de la première partie latérale et avec une portion dépassante de la première partie latérale vers le centre du vitrage multiple, fixée de préférence par une colle dite de montage opaque, la colle de montage notamment opaque éventuelle étant absente de la région entre la première tranche et première source de lumière, et entre la deuxième tranche et deuxième source de lumière, et de préférence même entre la portion dépassante et la première face extérieure
- et éventuellement avec une deuxième aile (73) collée à la deuxième face extérieure.

11. Ensemble vitré lumineux (100", 200",300") selon la revendication précédente **caractérisé en ce que** la pièce de fixation (73') est métallique et n'est pas en contact à la fois avec le deuxième vitrage (1') et le troisième vitrage (1").

12. Ensemble vitré lumineux (300") selon la revendication 10 ou 11 **caractérisé en ce que** la première aile (71) est en un premier matériau de préférence métallique, la base (72) est en ledit premier matériau dans une première zone en regard des premier et deuxième vitrages, et la base est dans une deuxième zone en regard du troisième vitrage en un deuxième matériau, premier matériau solidaire par des moyens de collage au deuxième matériau, l'un des premier et deuxième matériaux étant métallique, l'autre étant isolant thermique et **en ce qu'**une deuxième aile éventuelle (73), en le deuxième matériau, dépasse sur la deuxième face extérieure.

13. Ensemble vitré lumineux (100, 100', 100", 200", 300", 200a à 200e, 500a, 500b) selon l'une quelconque des revendications précédentes **caractérisé en ce que** le premier isolateur optique (2) comprend un premier film, dit bas indice, en matière à base de fluoropolymère.

14. Ensemble vitré lumineux (100, 100', 100", 200", 300", 200a à 200e, 500a, 500b) selon la revendication précédente **caractérisé en ce que** chaque surface principale du premier film bas indice (2) est traitée par un traitement promoteur d'adhésion qui est de préférence un traitement corona.

15. Ensemble vitré lumineux (100, 100', 100", 200", 300", 200a à 200e, 500a, 500b) selon l'une quelconque 13 à 14 **caractérisé en ce que** le fluoropolymère (2) est de l'ETFE ou du FEP.

16. Ensemble vitré lumineux (300, 400) selon l'une quelconque des revendications 1 à 15 **caractérisé en ce que** le premier isolateur optique (2) comprend une première couche de silice poreuse d'épaisseur e2 d'au moins 400nm.

17. Ensemble vitré lumineux (300, 400) selon la revendication précédente **caractérisé en ce que** la première couche de silice poreuse est revêtue d'un premier revêtement de protection (2a) minéral et transparent, qui est de préférence une couche de silice d'épaisseur e4 supérieure à 50nm et de préférence supérieure à 100nm et avec un indice de réfraction n4 d'au moins 1,4 à 550nm.

18. Ensemble vitré lumineux (300, 400) selon l'une des revendications précédentes**caractérisé en ce que** le premier isolateur optique (2) comprend une première couche de silice poreuse d'épaisseur e2 d'au moins 400nm sur une face principale d'un autre vitrage transparent (1"), en verre minéral, orientée côté face interne et de préférence et un deuxième isolateur optique comprend une deuxième couche de silice poreuse d'épaisseur e'2 d'au moins 400nm sur une autre face principale dudit autre vitrage orientée côté face de collage, d'indice de réfraction n'2 tel que, aux longueurs d'onde de la deuxième source de lumière (4') n'1-n'2 est d'au moins 0,08.

19. Cloison, dalle, fenêtre, porte, panneau décoratif, porte vitrée de meuble réfrigéré commercial incorporant l'ensemble vitré lumineux (100, 100', 100", 200", 300", 200a à 200e, 300,400, 500a, 500b) selon l'une des revendications 1 à 18.

## Patentansprüche

1. Leuchtendes Glasensemble (100, 100', 100", 200", 200a bis 200e, 300, 300", 400, 500a, 500b), das Folgendes umfasst:
- eine Mehrfachverglasung mit äußeren Hauptflächen, erste äußere Fläche und zweite äußere Fläche genannt, die Folgendes umfasst:
- eine erste Verglasung (1) mit Brechungsindex n1, mit Hauptflächen (11, 12), die innere Fläche (11) und erste Fläche (12) genannt werden, und eine erste Kante (13),
- in optischem Kontakt mit der ersten Verglasung, eine zweite Verglasung (1'), mit Brechungsindex n'1, mit Hauptflächen, die Klebefläche (11') und zweite Fläche (12') genannt werden, wobei die Klebefläche der inneren Fläche gegenüber liegt, und eine Kante (13'), zweite Kante genannt,
- eine erste Lichtquelle (4), die optisch mit der ersten Verglasung über die erste Kante gekoppelt ist, wodurch die erste Verglasung das von der ersten Quelle abgegebene Licht führt, wobei die erste Lichtquelle statisch oder dynamisch gesteuert ist, um in dem Augenblick t0 eine erste Hauptstrahlung mit einer ersten Wellenlänge, λ1 genannt, abzugeben, und die bevorzugt umschaltbar ist, um in dem Augenblick t'≠t0 eine zweite Hauptstrahlung mit einer zweiten Wellenlänge, λ2 genannt, die inbesondere von λ1 unterschiedlich ist, abzugeben,
- erste Lichtextraktionsmittel (5, 5a), die mit der ersten Verglasung assoziiert sind, die ein oder eine Vielzahl erster Extraktionsmuster umfassen, die eine erste Extraktionsoberfläche (50) definieren, wobei das extrahierte Licht auf der Seite der ersten äußeren Fläche sichtbar ist, die bevorzugt die erste Fläche ist, wobei die ersten Extraktionsmittel derart sind, dass das in dem t0 extrahierte Licht eine erste Farbe, C1 genannt, hat, und bevorzugt in dem t' eine zweite Farbe, C2 genannt, die von C1 unterschiedlich ist, hat,
- eine zweite Lichtquelle (4'), die optisch mit der zweiten Verglasung über die zweite Kante gekoppelt ist, wodurch die zweite Verglasung das von der zweiten Lichtquelle abgegebene Licht führt, wobei die zweite Lichtquelle statisch oder dynamisch gesteuert ist, um in dem t0 eine dritte Hauptstrahlung mit einer Wellenlänge, λ3 genannt, die von λ1 unterschiedlich ist, abzugeben, und um bevorzugt in dem Augenblick t' eine vierte Hauptstrahlung mit einer Wellenlänge, λ4 genannt, abzugeben,
- zweite Lichtextraktionsmittel (5'), die mit der zweiten Verglasung assoziiert sind, die ein oder eine Vielzahl zweiter Extraktionsmuster umfassen, die eine zweite Extraktionsoberfläche (50') definieren, ein zweites/zweite Muster, das/die von dem oder den ersten Extraktionsmustern versetzt ist/sind, wobei das von den zweiten Extraktionsmitteln extrahierte Licht von der ersten äußeren Fläche sichtbar ist, zweite Lichtextraktionsmittel derart, dass das derart in t0 extrahierte Licht eine Farbe, C3 genannt, die von C1 unterschiedlich ist, hat, und in t' bevorzugt eine Farbe, C4 genannt, die insbesondere von C2 unterschiedlich ist, hat,
- zwischen der inneren Fläche und der Klebefläche einen optischen Isolator (2), erster optischer Isolator genannt, der durchsichtig ist, mit Brechungsindex n2 derart, dass bei den Wellenlängen der ersten Lichtquelle n1-n2 mindestens 0,08 beträgt, der gegenüber der inneren Fläche liegt: zwischen der ersten Kante und der ersten Extraktionsoberfläche (50) und/oder zwischen dem oder den ersten Extraktionsmuster(n) (5a), die bevorzugt die erste Extraktionsoberfläche (50) abdecken,
wobei der erste optische Isolator mit der ersten Verglasung verbunden ist mittels einer ersten verbindenden Zwischenschicht (3) aus erstem durchsichtigem Polymermaterial, das einen Brechungsindex n3 derart hat, dass n3-n1 bei den Wellenlängen der ersten Lichtquelle im Absolutwert kleiner ist als 0,05, wenn die ersten Extraktionsmittel auf der Seite der inneren Fläche sind, der erste optische Isolator weiter von der inneren Fläche entfernt ist als die ersten Extraktionsmittel
- zwischen der Klebefläche und dem ersten optischen Isolator eine zweite verbindende Zwischenschicht (3') aus einem zweiten durchsichtigen Polymermaterial, das einen Brechungsindex n'3 derart hat, dass n'3-n'1 bei den Wellenlängen der zweiten Lichtquelle im Absolutwert kleiner ist als 0,05 und in Klebekontakt mit der zweiten Verglasung.

2. Leuchtendes Glasensemble (100", 200", 200a bis 200e, 300, 300", 400, 500a) nach dem vorhergehenden Anspruch, **dadurch gekennzeichnet, dass** ein erstes Band, Mischschutz genannt, (8, 81, 82, 83) in optischem Kontakt mit der inneren Fläche (11) am Umfang der inneren Fläche ist, die sich ausgehend von der ersten Kante (13) entlang der ersten Kante erstreckt, Band mit einer Breite D0 mindestens gleich 0,8 Dmin, wobei Dmin= d1 / tan ((π/2)-arsin(n2/n1)), und bevorzugt kleiner als 2 cm, wobei d1 der Abstand zwischen der ersten Lichtquelle (4) und der inneren Fläche ist, wobei das erste lichtundurchlässige Band (8, 81, 82) oder das erste diffundierende Band (83) mit einem Transmissionsfaktor in dem sichtbaren Bereich von höchstens 2 % auf der Seite der inneren Fläche ist, und bevorzugt ein anderes erstes Band, Mischschutz genannt, (8a), das sich ausgehend von der ersten Kante entlang der ersten Kante erstreckt, Band mit einer Breite D01 mindestens gleich 0,8 Dmin, ein anderes erstes bevorzugt lichtundurchlässiges Band, dass ein zweites Mischschutz genanntes Band, (8', 81', 82', 83') in optischem Kontakt mit der Klebefläche (11') am Umfang der Klebefläche ist, die sich ausgehend von der zweiten Kante entlang der zweiten Kante erstreckt, Band mit einer Breite D'0 mindestens gleich 0,8 D'min, wobei D'min= d'1 / tan ((π/2)-arsin(n'2/n'1)), und bevorzugt kleiner als 2 cm ist, wobei d'1 der Abstand zwischen der zweiten Lichtquelle (4') und der Klebefläche ist, ein zweites lichtundurchlässiges Band (8', 81', 82') oder zweites diffundierendes Band (83') mit einem Transmissionsfaktor in dem sichtbaren Bereich von höchstens 2 % auf der Seite der Klebefläche, und bevorzugt ein anderes zweites Band, Mischschutz genannt, (8'a, 6) in optischem Kontakt mit der zweiten Fläche ist, am Umfang der zweiten Fläche, die sich ausgehend von der zweiten Kante entlang der zweiten Kante erstreckt, Band mit einer Breite D02 mindestens gleich 0,8D'min, bevorzugt ein anderes zweites lichtundurchlässiges Band.

3. Leuchtendes Glasensemble (100", 200", 300") nach einem der vorhergehenden Ansprüche, **dadurch gekennzeichnet, dass** die Mehrfachverglasung eine isolierende Verglasung bildet und eine dritte Verglasung umfasst, die eine dritte Hauptfläche (11") und eine vierte Hauptfläche (12") hat, wobei die zweite und die dritte Fläche durch eine erste Gasschicht beabstandet sind, und am Umfang der zweiten und dritten Fläche eine erste Polymerdichtung (6) als Rahmen, die das andere zweite Mischschutz-Band, das bevorzugt lichtundurchlässig ist, bildet oder zu ihm gehört.

4. Leuchtendes Glasensemble (500a) nach einem beliebigen der Ansprüche 2 oder 3, **dadurch gekennzeichnet, dass** die erste und zweite Lichtquelle auf gegenüberliegenden Seiten der Mehrfachverglasung sind, wobei die erste Verglasung über die zweite Kante vorragt, wodurch ein erster vorragender Bereich (11a) gebildet wird, das erste Abdeckband, das bevorzugt lichtundurchlässig (8) ist, in dem ersten vorrangenden Bereich auf der inneren Fläche ist, insbesondere ein lichtundurchlässiges Klebeband, und sogar ein anderes erstes Abdeckband (8a) in dem ersten vorragenden Bereich auf der ersten Fläche ist, insbesondere ein lichtundurchlässiges Klebeband, und dass die zweite Verglasung über die ersten Kante vorragt, wodurch ein zweiter vorragender Bereich (11'a) gebildet wird, und das zweite Abdeckband, das bevorzugt lichtundurchlässig ist, in dem zweiten vorragenden Bereich (8') ist, insbesondere ein lichtundurchlässiges Klebeband, und sogar ein anderes zweites Abdeckband (8'a), das bevorzugt lichtundurchlässig ist, in dem zweiten Bereich ist, der auf der zweiten Fläche vorragt, insbesondere ein lichtundurchlässiges Klebeband.

5. Leuchtendes Glasensemble (100, 100', 500b) nach einem beliebigen der vorhergehenden Ansprüche, **dadurch gekennzeichnet, dass** die erste Lichtquelle (4) eine erste Licht emittierende Diode (4) mit der ersten Hauptstrahlung λ1 umfasst, und insbesondere eine zweite Licht emittierende Diode mit der zweiten Hauptstrahlung λ2, wobei jede der ersten und eventuellen zweiten Diode von der ersten Kante (13) beabstandet ist, und mindestens 80 % des Lichtflusses, der von jeder der ersten und eventuellen zweiten Diode abgegeben wird, in einem Emissionskegel zwischen-α1 und α1 liegt, wobei α1 = Arsin(n1 * sin (α2)), wobei α2=(π/2)-Arsin (n2/n1) und dem Brechungswinkel in der ersten Verglasung entspricht, und dass die zweite Lichtquelle (4'), eine dritte Licht emittierende Diode mit der dritten Hauptstrahlung λ3 und eventuell eine vierte Licht emittierende Diode mit der vierten Hauptstrahlung λ4 umfasst, wobei die dritte Diode, sogar die eventuelle vierte Licht emittierende Diode, von der zweiten Kante (13', 14') beabstandet ist und mindestens 80 % des Lichtflusses, der von jeder der dritten und eventuellen vierten Diode abgegeben wird, in einem Emissionskegel zwischen -α'1 und α'1 liegt, wobei α'1 = Arsin(n'1 * sin (α'2)), wobei α'2=(π/2)-Arsin (n'2/n'1) und dem Brechungswinkel in der zweiten Verglasung entspricht.

6. Leuchtendes Glasensemble (100", 200", 200a bis 200e, 300, 300", 400, 500a) nach einem beliebigen der vorhergehenden Ansprüche, **dadurch gekennzeichnet, dass** das Glasensemble Folgendes umfasst:
- ein erstes Abschottung genanntes Mittel (75, 75a, 75'a), das bevorzugt lichtundurchlässig ist, das die ganze oder einen Teil der Brechung des Lichts, das von der ersten Lichtquelle an der Kante der Mehrfachverglasung zwischen der inneren Fläche und der zweiten Fläche auf der Seite der ersten Kante abgegeben wird, verhindert, und bevorzugt ein zweites Abschottung genanntes Mittel (75, 75b, 75'b), das bevorzugt lichtundurchlässig ist, das die ganze oder einen Teil der Brechung des Lichts, das von der zweiten Lichtquelle an der Kante der Mehrfachverglasung zwischen der Klebefläche und der ersten Fläche auf der Seite der zweiten Kante abgegeben wird, verhindert,
- oder bevorzugt, wenn die erste und die zweite Lichtquelle auf derselben Seite der Mehrfachverglasung sind, ein gemeinsame Abschottung genanntes Mittel (75, 75a, 75b, 75'a, 75'b), das bevorzugt lichtundurchlässig ist, das die ganze oder einen Teil der Brechung des Lichts, das von der ersten Lichtquelle an der Kante der Mehrfachverglasung zwischen der inneren Fläche und der zweiten Fläche auf der Seite der ersten Kante abgegeben wird, verhindert, und die ganze oder einen Teil der Brechung des Lichts, das von der zweiten Lichtquelle an der Kante zwischen der Klebefläche und der inneren Fläche auf der Seite der zweiten Kante abgegeben wird, verhindert.

7. Leuchtendes Glasensemble (100, 100', 100", 200", 200a bis 200e, 300, 300', 400, 500a, 500b) nach einem beliebigen der vorhergehenden Ansprüche, **dadurch gekennzeichnet, dass**:
an t0 die erste Lichtquelle (4) eine Licht emittierende Diode, grüne Diode genannt, umfasst, die in Grün mit λ1 in einem Bereich sendet, der von 515 bis 535 nm geht, und die zweite Lichtquelle (4') eine Licht emittierende Diode, rote Diode genannt, umfasst, die in Rot mit λ3 in einem Bereich sendet, der von 615 nm bis 635 nm geht, wobei der Fluss F1, der von der grünen Diode abgegeben wird, kleiner ist als 0,8 Mal der Fluss F3, der von der roten Diode abgegeben wird, und/oder
an t' die erste Lichtquelle (4) eine Licht emittierende Diode, rote Diode genannt, umfasst, die in Rot mit λ2 in einem Bereich sendet, der von 615 nm bis 635 nm geht, und die zweite Lichtquelle (4') eine Licht emittierende Diode, grüne Diode genannt, umfasst, die in Grün mit λ4 in einem Bereich sendet, der von 515 nm bis 535 nm geht, wobei der Fluss F4, der von der grünen Diode abgegeben wird, kleiner ist als 0,8 Mal der Fluss F2, der von der roten Diode abgegeben wird.

8. Leuchtendes Glasensemble (100, 100', 100", 200", 200a bis 200e, 300, 300", 400, 500a, 500b) nach einem beliebigen der vorhergehenden Ansprüche, **dadurch gekennzeichnet, dass** die erste Lichtquelle (4) eine erste Gruppe Licht emittierender Dioden auf einer Leiterplatte, erster PCB-Träger (41) genannt, ist, und dass die Dioden mit der ersten Kante gekoppelt sind, und dass die zweite Lichtquelle(4') bevorzugt eine zweite Gruppe Licht emittierender Dioden auf einer Leiterplatte, zweiter PCB-Träger (41') genannt, ist, und dass die Dioden mit der zweiten Kante gekoppelt sind, wobei der erste und zweite PCB-Träger beabstandet, aneinander liegend oder aus einem gemeinsamen PCB-Träger sind.

9. Leuchtendes Glasensemble (100", 200", 200a bis 200e, 300, 300", 400, 500a) nach dem vorhergehenden Anspruch, **dadurch gekennzeichnet, dass** die erste Gruppe Licht emittierender Dioden und die zweite Gruppe Licht emittierender Dioden auf derselben Seite der Mehrfachverglasung angeordnet sind und nach oben abstrahlen, und dass der erste und/oder zweite PCB-Träger oder auch ein PCB-Träger, der gemeinsamer PCB-Träger genannt wird, der den ersten und den zweiten PCB-Träger bildet, eine Hauptseite gegenüber der ersten und zweiten Kante hat, und der gemeinsame PCB-Träger eine gemeinsame Abschottung trägt, bevorzugt ein Teil mit zwei lichtundurchlässigen Beschichtungen (75a, 75b) auf der Seite der ersten Einheit und der Seite der zweiten Einheit im Wesentlichen parallel zu der Mehrfachverglasung zwischen der ersten Gruppe Licht emittierender Dioden und der zweiten Gruppe Licht emittierender Dioden trägt, wobei die gemeinsame Abschottung die ganze oder einen Teil der Brechung des Lichts, das von der ersten Einheit von Dioden abgegeben wird, an der Kante zwischen der inneren Fläche und zweiten Fläche verhindert, und die ganze oder einen Teil der Brechung des Lichts, das von der zweiten Einheit von Dioden an der Kante zwischen der Klebefläche und der ersten Fläche abgegeben wird, verhindert, bevorzugt in Bezug auf die erste und zweite Gruppe Licht emittierender Dioden in Richtung der ersten und zweiten Kante vorragend.

10. Leuchtendes Glasensemble (100", 200", 300") nach einem beliebigen der vorhergehenden Ansprüche, **dadurch gekennzeichnet, dass** die Mehrfachverglasung, die eine isolierende Verglasung bildet, eine dritte Verglasung umfasst, die eine dritte Hauptfläche (11") und eine vierte Hauptfläche (12") und eine dritte Kante (13") hat, wobei die zweite Fläche und die dritte Fläche durch eine erste Gasschicht beabstandet sind, und am Umfang der zweiten und dritten Fläche eine erste Polymerdichtung (6) als Rahmen,
dass die erste und die zweite Lichtquelle (4, 4') auf derselben Seite der Mehrfachverglasung angeordnet sind, und dass das Glasensemble ein Profil (7') hat, das auf der ersten äußeren Fläche vorragt, die die erste Fläche oder Seite der ersten Fläche ist, und gegenüber der ersten und zweiten Kante, die ein Volumen bilden, das die erste und die zweite Lichtquelle enthält, wobei das Profil bevorzugt innerhalb eines zusätzlichen Profils (7) liegt, insbesondere zur Montage des Glasensembles, wobei das Profil, Positionierungsprofil (7') genannt, Folgendes umfasst:
- einen Grund genannten Teil (72') gegenüber der Kante der Mehrfachverglasung, der die erste und zweite Kante und eine zentral genannte Kante zwischen der ersten und zweiten Kante aufweist,
- einen ersten seitlichen Teil (71'), der geklebt oder gegen die erste äußere Fläche (12) ist, indem eine Überdicke von höchstens 1,5 mm gebildet wird, insbesondere ein lichtundurchlässiges Klebeband, das an den Bodenteil angefügt ist,
- oder einen Teil (75), der eine Abschottung des Lichts der ersten und zweiten Lichtquelle bildet, der befestigt oder aus einem Stück mit dem Grundteil ist und gegen die zentrale Kante oder um höchstens 1 mm beabstandet ist, oder eine Abschottung des Lichts der ersten und zweiten Lichtquelle (75), die von dem Positionierungsprofil getrennt ist, gegen die erste zentrale Kante oder um höchstens 1 mm beabstandet, wobei die bevorzugt lichtundurchlässige Abschottung die ganze oder einen Teil der Brechung des Lichts, das von der ersten Lichtquelle an der Kante zwischen der inneren Fläche und der zweiten Fläche abgegeben wird, verhindert, und die ganze oder einen Teil der Brechung des Lichts, das von der zweiten Lichtquelle an der Kante zwischen der Klebefläche und der ersten Seite abgegeben wird, verhindert,
und dass ein Teil, Befestigungsteil (73') genannt, neben und entlang der zweiten Kante (13') verlaufend an der ersten Polymerdichtung (6) befestigt und mit dem Grundteil fest verbunden oder aus einem Stück ist,
und dass das eventuelle zusätzliche Profil (7) Folgendes umfasst:
- eine Basis (72) gegenüber der ersten und zweiten geklebten Kante, gegen oder beabstandet von dem Grundteil,
- einen ersten Flügel (71), der an der ersten äußeren Fläche oberhalb des ersten seitlichen Teils befestigt ist, und mit einem Abschnitt, der von dem ersten seitlichen Teil zu der Mitte der Mehrfachverglasung vorragt, der bevorzugt durch einen Kleber, lichtundurchlässiger Montagekleber genannt, befestigt ist, wobei der insbesondere lichtundurchlässige eventuelle Montagekleber von dem Bereich zwischen der ersten Kante und der ersten Lichtquelle und zwischen der zweiten Kante und der zweiten Lichtquelle und bevorzugt sogar zwischen dem vorragenden Abschnitt und der ersten äußeren Fläche abwesend ist,
- und eventuell mit einem zweiten Flügel (73), der an die zweite äußere Fläche geklebt ist.

11. Leuchtendes Glasensemble (100", 200", 300") nach dem vorhergehenden Anspruch, **dadurch gekennzeichnet, dass** das Befestigungsteil (73') metallisch ist und nicht gleichzeitig mit der zweiten Verglasung (1') und der dritten Verglasung (1") in Berührung ist.

12. Leuchtendes Glasensemble (300") nach Anspruch 10 oder 11, **dadurch gekennzeichnet, dass** der erste Flügel (71) aus einem ersten bevorzugt metallischen Material ist, dass die Basis (72) aus dem ersten Material in einer ersten Zone gegenüber der ersten und zweiten Verglasung ist, und die Basis in einer zweiten Zone gegenüber der dritten Verglasung aus einem zweiten Material ist, wobei das erste Material fest durch Klebemittel mit dem zweiten Material verbunden ist, wobei eines des ersten und zweiten Materials metallisch ist, wobei das andere wärmeisolierend ist, und dass ein eventueller zweiter Flügel (73) aus dem zweiten Material auf der zweiten äußeren Fläche vorragt.

13. Leuchtendes Glasensemble (100, 100', 100", 200", 300", 200a bis 200e, 500a, 500b) nach einem beliebigen der vorhergehenden Ansprüche, **dadurch gekennzeichnet, dass** der erste optische Isolator (2) eine erste Folie, mit niedrigem Index genannt, aus Material auf Fluorpolymerbasis umfasst.

14. Leuchtendes Glasensemble (100, 100', 100", 200", 300", 200a bis 200e, 500a, 500b) nach dem vorhergehenden Anspruch, **dadurch gekennzeichnet, dass** jede Hauptoberfläche der ersten Folie mit niedrigem Index (2) mit einer haftungsfördernden Behandlung behandelt ist, die bevorzugt eine Koronabehandlung ist.

15. Leuchtendes Glasensemble (100, 100', 100", 200", 300", 200a bis 200e, 500a, 500b) nach einem beliebigen der Ansprüche 13 bis 14, **dadurch gekennzeichnet, dass** das Fluorpolymer (2) ETFE oder FEP ist.

16. Leuchtendes Glasensemble (300, 400) nach einem beliebigen der Ansprüche 1 bis 15, **dadurch gekennzeichnet, dass** der erste optische Isolator (2) eine erste Schicht aus porösem Silizium mit einer Stärke e2 von mindestens 400 nm umfasst.

17. Leuchtendes Glasensemble (300, 400) nach dem vorhergehenden Anspruch, **dadurch gekennzeichnet, dass** die erste Schicht aus porösem Silizium mit einer ersten mineralischen und durchsichtigen Schutzbeschichtung (2a) beschichtet ist, die bevorzugt eine Siliziumschicht mit einer Stärke e4 größer als 50 nm und bevorzugt größer als 100 nm und mit einem Brechungsindex n4 von mindestens 1,4 bis 550 nm ist.

18. Leuchtendes Glasensemble (300, 400) nach einem der vorhergehenden Ansprüche, **dadurch gekennzeichnet, dass** der erste optische Isolator (2) eine erste poröse Siliziumschicht mit Stärke e2 von mindestens 400 nm auf einer Hauptfläche einer anderen durchsichtigen Verglasung (1") aus mineralischem Glas umfasst, die zu der Seite der inneren Fläche ausgerichtet ist, und dass ein zweiter optischer Isolator eine zweite poröse Siliziumschicht mit Stärke e'2 von mindestens 400 nm auf einer anderen Hauptfläche der anderen Verglasung umfasst, die zu der Seite der Klebefläche ausgerichtet ist, mit Brechungsindex n'2 derart, dass bei den Wellenlängen der zweiten Lichtquelle (4') n'1-n'2 mindestens 0,08 beträgt.

19. Wand, Platte, Fenster, Tür, Dekortafel, verglaste Tür eines kommerziellen Kühlmöbels, die/das das leuchtende Glasensemble (100, 100', 100", 200", 300", 200a bis 200e, 300, 400, 500a, 500b) nach einem der Ansprüche 1 bis 18 enthält.

## Claims

1. A luminous glazing assembly (100, 100', 100", 200", 200a to 200e, 300, 300", 400, 500a, 500b) comprising:
- a multiple glazing unit, having exterior main faces referred to as the first exterior face and second exterior face, including:
- a first glazing pane (1) of refractive index n1, having main faces (11, 12), referred to as the internal face (11) and first face (12), and a first edge face (13);
- making optical contact with the first glazing pane, a second glazing pane (1'), of refractive index n'1, having main faces referred to as the bonding face (11') and second face (12'), the bonding face facing the internal face, and an edge face (13') called the second edge face;
- a first light source (4) optically coupled to the first glazing pane via the first edge face, the first glazing pane thus guiding the light emitted by the first source, which first light source is controlled, statically or dynamically, in order to emit at the instant t0 a first main emission at a first wavelength called λ1 and preferably switchable in order to emit at the instant t'≠t0 a second main emission at a second wavelength called λ2 especially distinct from λ1;
- first light-extracting means (5, 5a) associated with the first glazing pane, comprising one or more first extracting features defining a first extracting area (50), the light extracted being visible on the first-exterior-face side, the first exterior face preferably being the first face, the first extracting means being such that the light extracted at said t0 is of a first color called C1 and preferably at said t' is of a second color called C2 especially distinct from C1;
- a second light source (4') optically coupled to the second glazing pane via the second edge face, the second glazing pane thus guiding the light emitted by the second light source, which second light source is controlled, statically or dynamically, in order to emit at said t0 a third main emission at a wavelength called λ3 distinct from λ1, and preferably in order to emit at said instant t' a fourth main emission at a wavelength called λ4;
- second light-extracting means (5') associated with the second glazing pane, comprising one or more second extracting features defining a second extracting area (50'), said second feature(s) being offset from the one or more first extracting features, the light thus extracted by the second extracting means being visible from the first exterior face, the second light-extracting means being such that the light thus extracted at t0 is of a color called C3 distinct from C1, and preferably at said t' is of a color called C4 especially distinct from C2;
- between the internal face and the bonding face, a transparent optical isolator (2), called the first optical isolator, of refractive index n2 such that, at the wavelengths of the first light source, n1-n2 is at least 0.08, and which faces the internal face: between the first edge face and the first extracting area (50) and/or between the one or more first extracting features (5a), preferably covering the first extracting area (50),
the first optical isolator is laminated to the first glazing pane by means of a first lamination interlayer (3) made of a first transparent polymer that has a refractive index n3 such that, in absolute value, n3-n1 is lower than 0.05 at the wavelengths of the first light source; when the first extracting means are on the internal-face side the first optical isolator is further away from the internal face than the first extracting means; and
- between the bonding face and the first optical isolator, a second lamination interlayer (3') made of a second transparent polymer that has a refractive index n'3 such that, in absolute value, n'3-n'1 is lower than 0.05 at the wavelengths of the second light source, said second lamination interlayer (3') making adhesive contact with the second glazing pane.

2. The luminous glazing assembly (100", 200", 200a to 200e, 300, 300", 400, 500a) as claimed in the preceding claim, **characterized in that** a first so-called anti-mixing band (8, 81, 82, 83), which makes optical contact with the internal face (11) on the periphery of the internal face, extends from the first edge face (13) along the first edge face, said band being of width D0 at least equal to 0.8Dmin where Dmin = d1 / tan ((π/2)-arcsin(n2/n1)) and preferably smaller than 2 cm, where d1 is the distance between the first light source (4) and the internal face, this first band being opaque (8, 81, 82) or a scattering first band (83) with a transmission factor in the visible of at most 2% on the internal-face side, and preferably another first so-called anti-mixing band (8a), which preferably makes optical contact with the first face on the periphery of the first face, extends from the first edge face, along the first edge face, said band being of width D01 at least equal to 0.8Dmin, this other first band preferably being opaque, **in that** a second so-called anti-mixing band (8', 81', 82', 83'), which makes optical contact with the bonding face (11') on the periphery of the bonding face, extends from the second edge face, along the second edge face, said band being of width D'0 at least equal to 0,8D'min where D'min= d'1 / tan ((π/2)-arcsin(n'2/n'1)) and preferably smaller than 2 cm, where d'1 is the distance between the second light source (4') and the bonding face, this second band being opaque (8', 81', 82') or a scattering second band (83') having a transmission factor in the visible of at most 2% on the bonding-face side, and preferably another second so-called anti-mixing band (8'a, 6), which makes optical contact with the second face on the periphery of the second face, extends from the second edge face, along the second edge face, said band being of width D02 at least equal to 0.8D'min, this other second band preferably being opaque.

3. The luminous glazing assembly (100", 200", 300") as claimed in one of the preceding claims, in that the multiple glazing unit forms an insulating glazing unit and comprises a third glazing pane having a third main face (11") and a fourth main face (12"), the second and third faces being spaced apart by a first gas-filled cavity, a framing first polymer seal (6) that forms all or part of the other second preferably opaque anti-mixing band being placed on the periphery of the second and third faces.

4. The luminous glazing assembly (500a) as claimed in either one of claims 2 and 3, in that the first and second light sources are on opposite sides of the multiple glazing unit, the first glazing pane projects beyond the second edge face forming a first projecting region (11a), the first preferably opaque (8) masking band, especially an opaque adhesive, is in the first projecting region on the internal face and even another first masking band (8a), especially an opaque adhesive, is in the first projecting region on the first face, and in that the second glazing pane projects beyond the first edge face forming a second projecting region (11'a) and the second preferably opaque masking band, especially an opaque adhesive, is in the second projecting region (8') and even another second preferably opaque masking band (8'a), especially an opaque adhesive, is in the second projecting region on the second face.

5. The luminous glazing assembly (100, 100', 500b) as claimed in any one of the preceding claims, **characterized in that** the first light source (4) comprises a first light-emitting diode (4) with said first main emission at λ1 and especially a second light-emitting diode with said second main emission at λ2, each of the first and optional second diodes is spaced apart from the first edge face (13) and at least 80% of the light flux emitted by each of the first and optional second diodes is in an emission cone between -α1 and α1 where α1 = arcsin(n1 * sin(α2)) and where α2=(π/2)-arcsin(n2/n1) corresponds to the angle of refraction in the first glazing pane, and **in that** the second light source (4') comprises a third light-emitting diode with said third main emission at λ3 and optionally a fourth light-emitting diode with said fourth main emission at λ4, the third diode, or even the optional fourth diode, is spaced apart from the second edge face (13', 14') and at least 80% of the light flux emitted by each of the third and optional fourth diodes is in an emission cone between -α'1 and α'1 where α'1 = arcsin(n'1 * sin(α'2)) and where α'2=(π/2)-arcsin(n'2/n'1) corresponds to the angle of refraction in the second glazing pane.

6. The luminous glazing assembly (100", 200", 200a to 200e, 300, 300", 400, 500a) as claimed in any one of the preceding claims, in that the glazing assembly comprises:
- a preferably opaque first means (75, 75a, 75'a), called a partition, partially or completely preventing refraction of the light emitted by the first light source at the edge face of the multiple glazing unit between the internal face and the second face on the first-edge-face side and preferably a preferably opaque second means (75, 75b, 75'b), called a partition, partially or completely preventing refraction of the light emitted by the second light source at the edge face of the multiple glazing unit between the bonding face and the first face on the second-edge-face side;
- or preferably when the first and second light sources are on the same side of the multiple glazing unit, a preferably opaque means (75, 75a, 75b, 75'a, 75'b), called a common partition, partially or completely preventing refraction of the light emitted by the first light source at the multiple-glazing-unit edge face between the internal face and the second face on the first-edge-face side and partially or completely preventing refraction of the light emitted by the second light source at the edge face between the bonding face and the internal face on the second-edge-face side.

7. The luminous glazing assembly (100, 100', 100", 200", 200a to 200e, 300, 300', 400, 500a, 500b) as claimed in any one of the preceding claims, **characterized in that**:
at t0 the first light source (4) comprises a so-called green light-emitting diode that emits in the green with λ1 in a range extending from 515 nm to 535 nm, and the second light source (4') comprises a so-called red light-emitting diode that emits in the red with λ3 in a range extending from 615 nm to 635 nm, the flux F1 emitted by the green diode is lower than 0.8 times the flux F3 emitted by the red diode; and/or
at t' the first light source (4) comprises a so-called red light-emitting diode that emits in the red with λ2 in a range extending from 615 nm to 635 nm, and the second light source (4') comprises a so-called green light-emitting diode that emits in the green with λ4 in a range extending from 515 nm to 535 nm, and the flux F4 emitted by the green diode is lower than 0.8 times the flux F2 emitted by the red diode.

8. The luminous glazing assembly (100, 100', 100", 200", 200a to 200e, 300, 300", 400, 500a, 500b) as claimed in any one of the preceding claims, in that the first light source (4) is a first assembly of light-emitting diodes on a printed circuit board called the first PCB carrier (41) and the diodes are coupled to the first edge face, and preferably the second light source (4') is a second assembly of light-emitting diodes on a printed circuit board called the second PCB carrier (41'), and the diodes are coupled to the second edge face, the first and second PCB carriers being spaced apart, contiguous or a common PCB carrier.

9. The luminous glazing assembly (100", 200", 200a to 200e, 300, 300", 400, 500a) as claimed in the preceding claim, in that the first assembly of light-emitting diodes and the second assembly of light-emitting diodes are arranged on the same side of the multiple glazing unit and are top-emitting diodes, and the first and/or second PCB carrier or even a so-called common PCB carrier forming the first and second PCB carriers has a main face facing the first and second edge faces and the common PCB carrier bears what is called a common partition, preferably a part comprising two opaque coatings (75a, 75b), on the side of the first assembly and on the side of the second assembly, that lie substantially parallel to the multiple glazing unit, between the first assembly of light-emitting diodes and the second assembly of light-emitting diodes, the common partition completely or partially preventing refraction of the light emitted by the first assembly of diodes at the edge face between the internal face and second face and completely or partially preventing refraction of the light emitted by the second assembly of diodes at the edge face between the bonding face and the first face, the common partition preferably protruding, relative to the first and second assemblies of light-emitting diodes, in the direction of the first and second edge faces.

10. The luminous glazing assembly (100", 200", 300") as claimed in any one of the preceding claims, in that the multiple glazing unit forms an insulating glazing unit comprising a third glazing pane having a third main face (11") and a fourth main face (12") and a third edge face (13"), the second and third faces being spaced apart by a first gas-filled cavity, a framing first polymer seal (6) being placed on the periphery of the second and third faces,
in that the first and second light sources (4, 4') are arranged on the same side of the multiple glazing unit, and in that the glazing assembly comprises a profile (7') extending over the first exterior face, which is the first face, or on the first-face side and facing the first and second edge faces, defining a volume containing the first and second light sources, the profile preferably being internal to an additional profile (7) especially for mounting the glazing assembly, and the profile (7'), which is referred to as a positioning profile, comprises:
- a portion called a bottom portion (72') facing the edge face of the multiple glazing unit which includes the first and second edge faces and an edge face called a central edge face between the first and second edge faces;
- a first lateral portion (71') against or adhesively bonded to the first exterior face (12) and increasing thickness by at most 1.5 mm, especially an opaque adhesive added to the bottom portion; and
- either a portion (75) forming a partition partitioning the light of the first and second light sources, which portion is fastened to or integral with the bottom portion and against the central edge face or spaced apart by at most 1 mm therefrom, or a partition (75) partitioning the light of the first and second light sources, which partition is separate from the positioning profile against the central edge face or spaced apart by at most 1 mm therefrom, the preferably opaque partition completely or partially preventing refraction of the light emitted by the first light source at the edge face between the internal face and second face and completely or partially preventing refraction of the light emitted by the second light source at the edge face between the bonding face and first face;
and in that a part, called a fastening part (73'), adjacent to and extending along the second edge face (13'), is fastened to the first polymer seal (6) and securely fastened to or integral with the bottom portion;
and in that the optional additional profile (7) comprises:
- a web (72) facing the first and second edge faces, which web is against, adhesively bonded to or spaced apart from the bottom portion;
- a first flange (71) fastened to the first exterior face, above the first lateral portion and with a portion projecting beyond the first lateral portion toward the center of the multiple glazing unit, said flange preferably being fastened with an opaque adhesive called a mounting adhesive, the especially opaque optional mounting adhesive being absent from the region between the first edge face and the first light source, and between the second edge face and the second light source, and preferably even between the projecting portion and the first exterior face;
- and optionally has a second flange (73) adhesively bonded to the second exterior face.

11. The luminous glazing assembly (100", 200", 300") as claimed in the preceding claim, **characterized in that** the fastening part (73') is made of metal and does not make contact both with the second glazing pane (1') and the third glazing pane (1").

12. The luminous glazing assembly (300") as claimed in claim 10 or 11, **characterized in that** the first flange (71) being made of a first material, preferably a metal, the web (72) is made of said first material in a first zone facing the first and second glazing panes, and the web is, in a second zone facing the third glazing pane, made of a second material, the first material being securely fastened by adhesive bonding means to the second material, one of the first and second materials being a metal the other being thermally insulating, and **in that** an optional second flange (73), made of the second material, extends over the second exterior face.

13. The luminous glazing assembly (100, 100', 100", 200", 300", 200a to 200e, 500a, 500b) as claimed in any one of the preceding claims, **characterized in that** the first optical isolator (2) comprises a first so-called low-index film made of a fluoropolymer-based material.

14. The luminous glazing assembly (100, 100', 100", 200", 300", 200a to 200e, 500a, 500b) as claimed in the preceding claim, **characterized in that** each main surface of the first low-index film (2) is treated with an adhesion-promoting treatment that is preferably a corona treatment.

15. The luminous glazing assembly (100, 100', 100", 200", 300", 200a to 200e, 500a, 500b) as claimed in either one 13 and 14, **characterized in that** the fluoropolymer (2) is ETFE or FEP.

16. The luminous glazing assembly (300, 400) as claimed in any one of claims 1 to 15, **characterized in that** the first optical isolator (2) comprises a first porous silica layer of thickness e2 of at least 400 nm.

17. The luminous glazing assembly (300, 400) as claimed in the preceding claim, **characterized in that** the first porous silica layer is coated with a first transparent and mineral protective coating (2a) that is preferably a silica layer of thickness e4 larger than 50 nm and preferably larger than 100 nm having a refractive index n4 of at least 1.4 at 550 nm.

18. The luminous glazing assembly (300, 400) as claimed in one of the preceding claims, **characterized in that** the first optical isolator (2) comprises a first porous silica layer of thickness e2 of at least 400 nm on one main face of another transparent glazing pane (1") that is made of mineral glass, said face being oriented to the internal-face side, and preferably a second optical isolator comprises a second porous silica layer of thickness e'2 of at least 400 nm on another main face of said other glazing pane, said face being oriented to the bonding-face side, of refractive index n'2 such that, at the wavelengths of the second light source (4') n'1-n'2 is at least 0.08.

19. A divider, tile, window, door, decorative panel and/or glazed door of a piece of commercial refrigerating equipment incorporating the luminous glazing assembly (100, 100', 100", 200", 300", 200a to 200e, 300, 400, 500a, 500b) as claimed in one of claims 1 to 18.
